(19) Europäisches Patentamt
European Patent Office
Office européen des brevets

(11) EP 2 471 876 B1

(12) **EUROPEAN PATENT SPECIFICATION**

(45) Date of publication and mention of the grant of the patent:
**10.12.2014 Bulletin 2014/50**

(21) Application number: **10811945.4**

(22) Date of filing: **26.08.2010**

(51) Int Cl.:
***C09B 67/46*** (2006.01) ***C09B 57/00*** (2006.01)
***C09B 67/02*** (2006.01) ***C09B 67/20*** (2006.01)
***G02B 5/20*** (2006.01) ***C09B 67/48*** (2006.01)
***C09B 67/00*** (2006.01)

(86) International application number:
**PCT/JP2010/064484**

(87) International publication number:
**WO 2011/024896 (03.03.2011 Gazette 2011/09)**

(54) **DICHLORODIKETOPYRROLOPYRROLE PIGMENT, COLORING MATERIAL DISPERSION CONTAINING THE PIGMENT, AND PROCESS FOR PRODUCTION OF THE COLORING MATERIAL DISPERSION**

DICHLOR-DIKETO-PYRROLOPYRROLPIGMENT, FÄRBEMATERIALDISPERSION MIT DEM PIGMENT SOWIE VERFAHREN ZUR HERSTELLUNG DER FÄRBEMATERIALDISPERSION

PIGMENT DICHLORODICÉTOPYRROLOPYRROLE, DISPERSION DE MATIÈRE COLORANTE CONTENANT LE PIGMENT ET PROCÉDÉ DE FABRICATION DE LA DISPERSION DE MATIÈRE COLORANTE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **27.08.2009 JP 2009197324**
**27.08.2009 JP 2009197325**
**11.03.2010 JP 2010054742**

(43) Date of publication of application:
**04.07.2012 Bulletin 2012/27**

(73) Proprietor: **FUJIFILM Corporation**
**Tokyo 106-8620 (JP)**

(72) Inventors:
- **NAKAHIRA, Shinichi**
  **Ashigarakami-gun**
  **Kanagawa 258-8577 (JP)**
- **MOROZUMI, Kazumasa**
  **Fujinomiya-shi**
  **Shizuoka 418-8666 (JP)**
- **SASAKI, Daisuke**
  **Fujinomiya-shi**
  **Shizuoka 418-8666 (JP)**
- **KIKUCHI, Wataru**
  **Fujinomiya-shi**
  **Shizuoka 418-8666 (JP)**
- **KANDA, Hiromi**
  **Fujinomiya-shi**
  **Shizuoka 418-8666 (JP)**
- **ISHIZAKA, Soji**
  **Haibara-gun**
  **Shizuoka 421-0396 (JP)**
- **HYODO, Tomoyoshi**
  **Haibara-gun**
  **Shizuoka 421-0396 (JP)**
- **KANEKO, Yushi**
  **Haibara-gun**
  **Shizuoka 421-0396 (JP)**
- **ISHIJI, Yohei**
  **Fujinomiya-shi**
  **Shizuoka 418-8666 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 884 543** **EP-A2- 0 962 499**
**WO-A1-2007/013599** **WO-A1-2008/044519**
**WO-A1-2008/044519** **WO-A1-2009/054514**
**JP-A- 2001 264 528** **JP-A- 2007 314 681**
**JP-A- 2008 024 873**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

TECHNICAL FIELD

The present invention relates to a dichlorodiketopyrrolopyrrole pigment, a coloring material dispersion containing the same, and a producing method thereof.

BACKGROUND ART

For producing particulates of dichlorodiketopyrrolopyrrole pigment, several methods concerning the crystal form thereof have been proposed.

In Patent Literature 1, a method is disclosed, in which diketopyrrolopyrrole pigment with small primary particle diameter is obtained by salt milling diketopyrrolopyrrole pigment, obtained by an acid paste method, in an organic solvent under the coexistence of a pigment derivative, so as to inhibit crystal growth. However, the acid paste method is not preferable in terms of safety, since concentrated sulfuric acid is used. Further, since the salt milling requires the use of particularly micronized special inorganic salts, it has a limitation from the perspective of cost.

In Patent Literature 2, a method is disclosed, in which crude dichlorodiketopyrrole pigment in which $\alpha$ type crystal transformation form and $\beta$ type crystal transformation form are present as a mixture is dried and then subjected to wet-grinding under the presence of a grinding agent (an aqueous inorganic salt like sodium chloride) and a wetting agent. Patent Literature 2 describes that fine and granulated dichlorodiketopyrrole pigment having $\alpha$ type crystal transformation form can be obtained, and according to further micronizing or granulating process, the crystal transformation forms can be converted into an $\alpha$ type. Specifically, by using diketopyrrolopyrrole pigment which has been obtained by the synthesis without using the acid paste method, diketopyrrolopyrrole pigment having fine and granulated $\alpha$ type crystal transformation form can be obtained.

However, the crude dichlorodiketopyrrole pigment used in the method, in which $\alpha$ type crystal transformation form and $\beta$ type crystal transformation form are present as a mixture, tends to have larger particle diameter, compared with dichlorodiketopyrrole pigment consisting of the $\beta$ type crystal transformation form. Further, the production process disclosed in Patent Literature 2 has a limitation on production that basically requires a step of wet-grinding for micronization. Still further, the inorganic salts used as a grinding agent in the wet-grinding step lead to cost increase. Thus, more efficient and economically more feasible method is waited for.

Patent Literature 3 describes that the viewing angle dependency or contrast ratio of a liquid crystal display (LCD) or the like can be improved by using $\alpha$ type diketopyrrolopyrrole pigment for a color filter, in which the pigment has strength ratio of x ray diffraction peaks between pre-determined plane indices within a pre-determined range. In order to obtain the diketopyrrolopyrrole pigment with such X ray diffraction peak pattern, Patent Literature 3 specifically describes a method, in which an alkali metal salt of a diketopyrrolopyrrole pigment is produced by reacting a raw material (substrate) at high temperature (preferably 70°C to 80°C) under the presence of a strong base, and then the alkali metal salt is slowly added to a proton medium under stirring condition while being careful to avoid temperature increase to obtain crude crystals of diketopyrrolopyrrole; and then the crude crystals is subjected to crystal transformation.

However, according to this method, the micronization of pigment particles is limited, due to the following reasons that: since the pigment solution has high temperature, pigment solubility in the vicinity of precipitated particles is increased and particle growth tends to be promoted; and since the pigment solution is slowly added, the particles generated at the early addition stage may easily grow due to maturing or accumulation of pigment solutes that are added later. For the purpose of suppressing the growth of pigment particles, it may be considered to add a particle growth inhibitor like a pigment derivative at the time of carrying out particle precipitation. However, under the condition of high temperature and strong base required for the synthesis, the particle growth inhibitor may decompose or a side reaction may occur, and thus, it is not practical. Further, as the addition of the pigment solution should be carried out slowly, it is problematic in that the productivity is low. Still further, the pigment particulates obtained by the method are presumably present in complete $\alpha$ type transformation form, i.e., $\alpha$ type crystallinity degree is approximately I, and thus there is no description regarding improvement of a performance like contrast ratio by the diketopyrrolopyrrole pigment in which $\alpha$ type crystal and $\beta$ type crystal are co-present.

Meanwhile, for producing particulates of p-dichlorodiketopyrrolopyrrole pigment, several production methods considering crystallinity degree of the pigment have been proposed.

Patent Literature 4 discloses red color resist ink containing a red pigment having a half value width of intensity peak at $2\theta$ of 28 to 29 degrees being within 0.600 degree to 0.800 in an X-ray diffraction pattern, and a predetermined photosensitive resin component. Patent Literature 4 discloses that when a color filter is manufactured by using the ink, thermal crystal precipitation resistance is improved when a coating film is exposed to high temperature.

Patent Literature 5 discloses a color filter using p-dichlorodiketopyrrolopyrrole pigment which exhibits at least one diffraction peak of which the half value width is 0.6° or more at a Bragg angle of 28 $\pm$ 1° in an X ray diffraction

spectrum. It is shown that the color filter has high contrast and good hue and is capable of suppressing an occurrence of display defects caused by burn-in in image display.

CITATION LIST

Patent Literatures

Patent Literature 1: JP-A-2001-264528 ("JP-A" means unexamined published Japanese patent application)
Patent Literature 2: JP-A-2008-24873
Patent Literature 3: Japanese Patent No.4144655
Patent Literature 4: JP-A-2002-265840
Patent Literature 5: JP-A-2008-139865

DISCLOSURE OF INVENTION

TECHNICAL PROBLEM

[First problem to be solved]

The present invention adresses to the provision of a dispersion of coloring material particulates of a dichlorodiketopyrrolopyrrole pigment, which enables the production of a color filter having high contrast, and can be reduced in viscosity when used as dispersion liquid of a raw material. Further, the present invention adresses to the provision of a method of producing the coloring material dispersion containing coloring material particulates of a dichlorodiketopyrrolopyrrole pigment favorably usable in a color filter, which method can be carried out at mild condition with high efficiency and lowered cost burden, does not include any unnecessary reaction steps, and can be favorably applied for a large scale production.

[Second problem to be solved]

Further, when the p-dichlorodiketopyrrolopyrrole pigment having crystallinity degree adjusted by the techniques disclosed in the above Patent Literatures is used, there can be a certain effect on thermal influences like "heat resistant crystal precipitation property" or "burn-in prevention property" at the time of manufacturing or use of a color filter. However, according to studies by the present inventors, increasing the crystallite size alone to improve the performance by enhancing the crystallinity degree will lead to a reduction in contrast. That is, in controlling crystallite size, heat resistance and high contrast are the contradicting characters, and it is difficult to satisfy both at high level.

The present invention adresses to the solution of the above-described problems of a specific pigment which is particularly suitable for a coloring material of a color filter and to the improvement of other various properties. That is, the present invention adresses to the improvement of the heat resistance of a p-dichlorodiketopyrrolopyrrole pigment and to the provision of a p-dichlorodiketopyrrolopyrrole pigment which enables a color filter using the pigment to have high contrast, show strong red hue, and have higher stability over time (i.e., it does not undergo any deterioration such as discoloration and contrast deterioration even when it is used as a color filter for a certain period of time).

SOLUTION TO PROBLEM

[First Means For Solving Problems]

In order to solve the problems described above, the present inventors conducted intensive studies. As a result, the present inventors found that, when the crystal transformation form of dichlorodiketopyrrole pigment is prepared to have a specific range of $\alpha$ type crystallinity degree instead of having it completely transformed into an $\alpha$ type crystal transformation form, and the crystallite size of the dichlorodiketopyrrole pigment, which is determined by X ray diffraction measurement, is set to be within a specific range, coloring material particulates of the dichlorodiketopyrrolopyrrole pigment can be obtained, which can be favorably used for a color filter. Further, regarding a method of producing a coloring material composed of a dichlorodiketopyrrole pigment having $\alpha$ type crystallinity degree and crystallite size that are within a specific range, the present inventors found that, by bringing the particulates of a dichlorodiketopyrrolopyrrole pigment that are produced by re-precipitation method into contact with an organic solvent under the presence of a particle growth inhibitor thereby to transform the crystal transformation type into a, type, the coloring material can be produced

efficiently with reduced cost. The present invention is completed according to the above findings and the problems described above were solved by the following meanings.

(1) A coloring material dispersion, having:

a particle growth inhibitor; and
coloring material particulates of a dichlorodiketopyrrolopyrrole pigment, said coloring material particulates having an α type crystallinity degree from 0.65 to 0.90, a crystallite size from 6.0 to 13.0 nm in a direction of a (-151) crystal face, and a crystallite size of 5.0 to 23.0 nm in a direction of a (111) crystal face.

(2) The coloring material dispersion described in the item (1), produced through the following steps [i] and [ii]:

[[i] bringing a dispersion solution containing a dichlorodiketopyrrolopyrrole pigment dissolved in a good solvent into contact with a poor solvent, which hardly dissolves the pigment but is compatible with the good solvent, to produce particulates of the dichlorodiketopyrrolopyrrole pigment]; and
[[ii] bringing the particulates of the dichlorodiketopyrrolopyrrole pigment obtained by the step [i] into contact with an organic solvent for controlling crystal form under the presence of the particle growth inhibitor to increase α, type crystallinity degree of the dichlorodiketopyrrolopyrrole pigment].

(3) The coloring material dispersion described the item (1) or (2), wherein the crystal growth inhibitor is represented by formula (1):

P-[X-(Y)k]n Formula (1)

wherein P is a residue of an organic dye compound which may have a substituent; X represents a single bond or a divalent linking group; Y represents $-NR_2R_3$, a sulfo group, or a carboxyl group, and $R_2$ and $R_3$ each independently represents a hydrogen atom, an alkyl group, an alkenyl group, or a phenyl group which may have a substituent, or a heterocycle which is formed by $R_2$ and $R_3$; k represents an integer of 1 or 2; and n represents an integer of I. to 4.
(4) The coloring material dispersion described in any one of the items (1) to (3), wherein P in formula (1) is a diketopyrrolopyrrole pigment compound residue or a quinacridone pigment compound residue.
(5) The coloring material dispersion described in the item (4), wherein the crystal growth inhibitor is represented by formula (2):

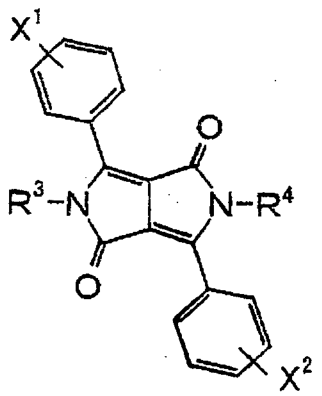

Formula (2)

wherein $X^1$ and $X^2$ each independently represents a hydrogen atom, a halogen atom, a substituted or unsubstituted alkyl group, or a substituted or unsubstituted aromatic group; $R^3$ and $R^4$ each independently represents a hydrogen atom, or a substituted or unsubstituted alkyl group, and at least one of $R^3$ and $R^4$ represents a substituted or unsubstituted alkyl group.
(6) A method of producing the coloring material dispersion containing coloring material particulates of a dichlorodiketopyrrolopyrrole pigment described in any one of the items (1) to (5), produced through the following steps [i] and [ii]:

[[i] bringing a pigment solution containing a dichlorodiketopyrrolopyrrole pigment dissolved in a good solvent into contact with a poor solvent, which hardly dissolves the pigment but is compatible with the good solvent, to

produce particulates of the dichlorodiketopyrrolopyrrole pigment]; and
[[ii] bringing the particulates of the dichlorodiketopyrrolopyrrole pigment obtained by the step [i] into contact with an organic solvent for controlling crystal form under the presence of the particle growth inhibitor to increase $\alpha$ type crystallinity degree of the dichlorodiketopyrrolopyrrole pigment].

(7) The method of producing the coloring material dispersion described in the item (6), wherein the pigment solution containing a dichlorodiketopyrrolopyrrole pigment is obtained by dissolving the dichlorodiketopyrrolopyrrole pigment in an organic solvent under the presence of a base.
(8) The method of producing the coloring material dispersion described in the item (6) or (7), wherein the step [i] is conducted under the presence of the particle growth inhibitor.
(9) The method of producing the coloring material dispersion described in any one of the items (6) to (8), wherein the crystal growth inhibitor is represented by the following formula (1):

P-[X-(Y)k]n Formula (1)

wherein P is a residue of an organic dye compound which may have a substituent; X represents a single bond or a divalent linking group; Y represents $-NR_2R_3$, a sulfo group, or a carboxyl group; $R_2$ and $R_3$ each independently represents a hydrogen atom, an alkyl group, an alkenyl group, or a phenyl group which may have a substituent, or a heterocycle which is formed by $R_2$ and $R_3$; k represents an integer of 1 or 2; and n represents an integer of 1 to 4.
(10) The method of producing the coloring material dispersion described in the item (9), wherein, in the crystal growth inhibitor represented by formula (1), P is a quinacridone pigment compound residue or a diketopyrrolopyrrole pigment compound residue.
(11) The method of producing the coloring material dispersion described in the item (10), wherein the crystal growth inhibitor is represented by formula (2):

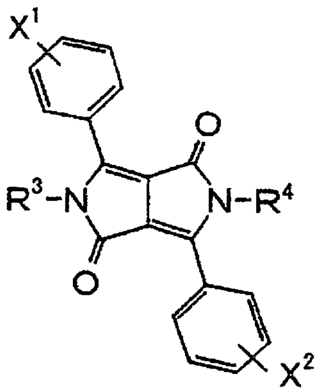

Formula (2)

wherein $X^1$ and $X^2$ each independently represents a hydrogen atom, a halogen atom, a substituted or unsubstituted alkyl group, or a substituted or unsubstituted aromatic group; $R^3$ and $R^4$ each independently represents a hydrogen atom, or a substituted or unsubstituted alkyl group; and at least one of $R^1$ and $R^2$ represents a substituted or unsubstituted alkyl group.
(12) The method of producing the coloring material dispersion described in any one of the items (6) to (11), wherein the particulates of the dichlorodiketopyrrole pigment produced by the step [i] are substantially in $\beta$ type crystal transformation form.
(13) The method of producing the coloring material dispersion described in any one of the items (6) to (12), wherein the step [ii] is conducted under the absence of a grinding agent.
(14) The method of producing the coloring material dispersion described in any one of the items (6) to (13), wherein the step [ii] is conducted without drying the particles of the dichlorodiketopyrrolopyrrole pigment produced by the step [i].

[Second Means For Solving Problems]

In order to solve the problems described above, the present inventors conducted intensive studies. As a result, the present inventors found that, when the p-dichlorodiketopyrrolopyrrole pigment is prepared to be substantially in $\alpha$ type crystal transformation form and the crystallite size in the direction of a pre-determined crystal face is adjusted to a specific value or less without excessively increasing the crystallinity, every characteristics that are required when it is

used for a color filter can be obtained at high level with good balance. The present invention is completed based on the above findings and the problems described above are solved by the following means.

(15) A dichlorodiketopyrrolopyrrole pigment, having a crystallite size of 9 nm or less in a perpendicular direction of a (-151) crystal face caluclated by X ray diffraction pattern of a dichlorodiketopyrrolopyrrole pigment and an α type crystallinity degree of 60% or more.
(16) The dichlorodiketopyrrolopyrrole pigment described in the item (15), which is a nanometer size particulate, the particulate having a structure in which at least one of a dispersing agent and a pigment derivative is buried therein.
(17) The dichlorodiketopyrrolopyrrole pigment described in the item (15) or (16),
wherein the pigment is a particulate obtained by: mixing a solution containing the dichlorodiketopyrrolopyrrole pigment dissolved in a good solvent with a poor solvent for the pigment having compatibility with the good solvent; and being produced in a mixture solution.
(18) The dichlorodiketopyrrolopyrrole pigment described in the item (17), in which the pigment is formed into a particulate including a dispersing agent buried therein, the particulate is formed by: mixing the good solvent and poor solvent after the dispersing agent is contained in the good solvent and/or poor solvent; or separately preparing a solution in which the dispersing agent is contained and mixing the resultant solution with the above two liquids, and at least 10% by mass of the dispersing agent contained in the solvents is buried into the particulates.
(19) A coloring composition, having the dichlorodiketopyrrolopyrrole pigment described in any one of the items (15) to (18).
(20) A color filter produced by using the coloring composition described in the item (19).
(21) A method of producing pigment particulates, wherein crystallite size and crystallinity degree are adjusted by at least having the steps of:

<1> mixing a solution in which the pigment is dissolved in a good solvent is mixed with a poor solvent for the pigment which is compatible with the good solvent to produce pigment particulates having a structure in which at least one of a dispersing agent and a pigment derivative is buried therein under the presence of at least one of the dispersing agent and the pigment derivative; and
<2> wet-grinding the thus-prepared pigment particulates.

(22) The method of producing pigment particulates described in the item (21), wherein the crystallinity degree is adjusted by bringing the pigment particulates into contact with an organic solvent.
(23) The method of producing pigment particulates described in the item (22), wherein the pigment is a dichlorodiketopyrrolopyrrole pigment.

ADVANTAGEOUS EFFECTS OF INVENTION

[First effect]

By using the coloring material dispersion of the present invention, a color filter having high contrast can be achieved and viscosity of a dispersion liquid can be lowered when used as a raw material for the color filter.
The producing method of the present invention exhibits an excellent working effect that: a dispersion of dichlorodiketopyrrolopyrrole pigment having desired α type crystallinity degree and crystallite size can be produced under mild condition with high efficiency and low cost without requiring a strong acid and heating at high temperature, without requiring unnecessary steps; and the method is favorably applicable for a large scale production.
Further, the coloring material dispersion of the present invention exhibits an excellent working effect that, as a raw material for a color filter, the coloring material dispersion has high production suitability, and the coloring material dispersion realize high contrast and good quality particularly when a color filter is produced by using it.
Other and further features and advantages of the invention will appear more fully from the following description, appropriately referring to the accompanying drawings.

[Second effect]

The dichlorodiketopyrrolopyrrole pigment of the present invention exhibits an excellent working effect that: the pigment is particularly suitable as a coloring material of a color filter; the pigment shows high heat resistance, high contrast, and strong red hue; and the pigment realizes high stability over time.

BRIEF DESCRIPTION OF THE DRAWINGS

[First embodiment]

{FIG. 1}
FIG. 1 is an X ray diffraction pattern showing the results (representative example) of powder X ray diffraction measurement for a dichlorodiketopyrrole pigment, that is carried out by using CuKα ray.
{FIG. 2}
FIG. 2 is a drawing of the X ray diffraction pattern of FIG. 1 after removing the background.
{FIG. 3}
FIG. 3 is an X ray diffraction pattern (representative example) of a dichlorodiketopyrrole pigment which is substantially in state of β type crystal transformation form.
{FIG. 4}
FIG. 4 is a graph illustrating the relationship between α, type crystallinity degree and the crystallite size of particulates that are contained in the dispersion liquid produced in the Examples/Comparative examples.

[Second embodiment]

{FIG. 5}
FIG. 5 is a cross-sectional view, schematically illustrating pigment particulates of a preferable embodiment of the present invention.
{FIG. 6}
FIG. 6 is an X ray spectrum of the sample obtained in the Examples (i.e., pigment powder).
{FIG. 7}
FIG. 7 is a drawing of the X ray spectrum of FIG. 6 after removing the background.

MODE FOR CARRYING OUT THE INVENTION

Hereinafter, the first embodiment and the second embodiment are described as a preferable embodiment of the present invention. However, the present invention should not be construed as limited to the embodiments. The first embodiment and the second embodiment have the same or corresponding technical feature and constitute single and common concept of the invention.

[First embodiment]

The coloring material dispersion of this embodiment is **characterized in that** it contains a particle growth inhibitor and particulates of a dichlorodiketopyrrolopyrrole pigment having an α type crystallinity degree of 0.65 to 0.90, a crystallite size of 6.0 to 13.0 nm as determined in the direction of a (-151) crystal face, and a crystallite size of 5.0 to 23.0 nm as determined in the direction of a (111) crystal face.

[α Type crystallinity degree]

It has been conventionally suggested to use a dichlorodiketopyrrolopyrrole pigment in α type crystal transformation form for a color filter (see, Patent Literature 3). When α type crystallinity degree is suppressed like the embodiment of the present invention, a color filter with high contrast can be obtained. On the other hand, there is a concern that the viscosity of a dispersion liquid as a raw material is increased to impair the stability of the dispersion liquid. The present inventors found that, by setting the crystallite size of a dichlorodiketopyrrole pigment to be within a specific range, and more preferably by setting the crystallite diameter in the direction of a pre-determined face to be within a specific range by being a particle growth inhibitor co-present, the viscosity of the dispersion liquid can be maintained at low level even when the α type crystallinity degree is suppressed, and thus achieved this embodiment of the present invention. Further, when a color filter is prepared by setting the α type crystallinity degree to be within the above range, extremely high contrast can be achieved, that cannot be obtained with α type crystallinity degree over the above range, e.g., a complete α type transformation form. The reason remains unclear. However, it is presumably thought that the interaction between pigment particles, which can cause viscosity increase of the dispersion liquid when α type crystallinity degree is suppressed, may be reduced by the presence of a particle growth inhibitor or by setting the crystallite size to be within a specific range, and thus a dispersion with low viscosity is yielded.

The coloring material dispersion of the embodiment is preferably produced through step [i] in which a pigment solution containing the dichlorodiketopyrrolopyrrole pigment dissolved in a solvent is brought into contact with a poor solvent to produce particulates of the dichlorodiketopyrrolopyrrole pigment, and step [ii] in which the particulates of the dichlorodiketopyrrolopyrrole pigment obtained by the step [i] are brought into contact with an organic solvent for controlling crystal type under the presence of the particle growth inhibitor to increase the α type crystallinity degree of the dichlorodiketopyrrolopyrrole pigment.

In the present embodiment, the α type crystallinity degree of the dichlorodiketopyrrolopyrrole pigment is not specifically limited, if it is within the range described above. However, it is preferably from 0.68 to 0.80, and more preferably from 0.70 to 0.78. By setting the α type crystallinity degree to be the same or less than the above upper limit, the particle growth is suppressed so that a color filter having high contrast can be obtained. On the other hand, by setting the α type crystallinity degree to be the same or more than the lower limit, the viscosity of the dispersion liquid can be suppressed to low level. Regarding the crystal transformation form of the dichlorodiketopyrrolopyrrole pigment, reference can be made from JP-A-58-210084 for the α type crystal transformation form, for example. For β type crystal transformation form, reference can be made from JP-A-8-48908. The crystal transformation form of the obtained dichlorodiketopyrrolopyrrole pigment particles can be identified by powder X ray diffraction measurement using CuKα ray. For the present embodiment, the α type crystallinity degree and crystallite size are defined as a value determined by the following method.

o Method of determination of α type crystallinity degree

(1) Powder X ray diffraction measurement using CuKα ray is conducted for the dichlorodiketopyrrole pigment. The measurement is conducted at Bragg angle (2θ) from 23° to 30° according to Japanese Industrial Standards (JIS) K03131 (general rules for X ray diffraction analysis). FIG. 1 is an example of X ray diffraction pattern.

(2) A diffraction pattern is obtained by removing the background from the X ray diffraction pattern obtained in the above (1). Herein, the method of removing the background includes: drawing a straight line between a corner near Bragg angle (2θ) = 23.3° at low angle side and a corner near Bragg angle (2θ) = 29.7° at high angle side of the measured pattern; and obtaining a pattern by subtracting the X ray diffraction strength value represented by the straight line from the X ray diffraction strength value obtained in the above (1). Explained in view of the figure (representative example), a pattern is obtained by removing the diffraction strength represented by straight line L connecting point A and point B from the X ray diffraction strength value of FIG. 1, and the resultant is taken as a X ray diffraction pattern after removing the background. An example of an X ray diffraction pattern after removing the background is illustrated in FIG. 2.

(3) From the X ray diffraction pattern after removing the background obtained in the above (2), α type crystallinity degree is calculated by using the following equation.

$$\alpha \text{ type crystallinity degree} = I\alpha/(I\alpha + I\beta)$$

Herein, Iα is defined as diffraction strength of a diffraction peak at Bragg angle (2θ) = 28.1 ± 0.3°, i.e., a characteristic diffraction peak of α type crystal transformation form, after removing the background; and Iβ is defined as diffraction strength of a diffraction peak at Bragg angle (2θ) = 27.0 ± 0.3°, i.e., a characteristic diffraction peak of β type crystal transformation form, after removing the background. In the example illustrated by FIG. 2, the length of line L1 and the length of line L2 correspond to Iβ and la, respectively.

In the definition given above, there is a case in which no clear diffraction peak is shown at Bragg angle (2θ) = 27 ± 0.3°, i.e., a characteristic diffraction peak of β type crystal, when a, type crystallinity degree of the dichlorodiketopyrrole pigment is high. For such a case, Iβ is defined as diffraction strength at Bragg angle (2θ) = 27.0° after removing the background. Further, for a case in which no clear diffraction peak is shown at approximately 28.1°, i.e., a characteristic of α type crystal, when α type crystallinity degree of the dichlorodiketopyrrole pigment is low. For such a case, Iα is defined as diffraction strength at Bragg angle (2θ) =28.1° after removing the background.

In the above definitions, even when the dichlorodiketopyrrole pigment has high α type crystallinity degree and has no clear peak near Bragg angle (2θ) = 27° as a characteristic of β type crystal, Iβ never has a value of zero. Therefore, a care should be taken that the α type crystallinity degree never has a value of one. The reason is due to the fact that, even when the diffraction peak derived from β type crystal is not present at 27°, broadened shoulder of a diffraction peak

derived from α type which is present at both sides of the β type crystal peak reaches 27°, yielding a finite value of diffraction peak at 27°. Further, similar to the above, even when the dichlorodiketopyrrole pigment has high β type crystallinity degree and has no clear peak near Bragg angle (2θ) = 28.1° as a characteristic of α type crystal, Ia never has a value of zero, and therefore the a, type crystallinity degree never has a value of zero. The reason is due to the fact that broadened shoulder of a diffraction peak derived from β type present near Bragg angle (2θ) = 27° reaches 28.1°, yielding a finite value of diffraction peak at 28.1°.

In the present embodiment, the expression "dichlorodiketopyrrole pigment is substantially in state of β type crystal transformation form" is defined as follows: when powder X ray diffraction measurement is carried out for dichlorodiketopyrrole pigment powder by using CuKα ray, no diffraction peak is observed at Bragg angle (2θ) = 28.1 ± 0.3°, which is a characteristic diffraction peak of α type crystal transformation form, white a clear diffraction peak is observed at Bragg angle (2θ) = 27.0 ± 0.3°, which is a characteristic diffraction peak of β type crystal transformation form. In FIG. 3, an exemplary X ray diffraction pattern of the pigment which is substantially in state of β type crystal transformation form is shown.

When the dichlorodiketopyrrole pigment is substantially in state of β type crystal transformation form, the α type crystallinity degree based on the above definition is not definitely determined because the diffraction peak strength near Bragg angle (2θ) = 27° derived from the β type crystal transformation form and the diffraction peak strength near Bragg angle (2θ) = 28.1° provided by broadening shoulder vary under re-precipitation condition. However, it is usually in the range from 0.15 to 0.40.

Meanwhile, the second embodiment described below may refer to the method and condition for measuring crystallinity degree applied to the first embodiment.

o Step [ii]: Step for enhancing α type crystallinity degree

In the present embodiment, by bringing the particulates of the dichlorodiketopyrrolopyrrole pigment obtained by re-precipitation method of the step [i] into contact with an organic solvent for controlling crystal type as described below, the α type crystallinity degree can be enhanced. The re-precipitation method is explained below in detail. Particulates of the dichlorodiketopyrrolopyrrole pigment obtained by re-precipitation method usually composed of a mixture of α type crystal transformation form and β type crystal transformation form or only β type crystal transformation form. The α type crystallinity degree of the pigment particulates obtained by the re-precipitation method may vary depending on condition for re-precipitation or other coexisting material described below. However, it is usually from 0.15 to 0.55. In the present embodiment, it is preferable that the particulates of the dichlorodiketopyrrolopyrrole pigment obtained by the re-precipitation method substantially has β type crystal transformation form, and the particulates having 0.15 to 0.40 of α type crystallinity degree are preferably used as a raw material for the step [ii]. From this point of view, it is preferable that the difference in α type crystallinity degree before and after the treatment of the step [ii] is preferably set between 0.23 and 0.65.

The organic solvent for controlling crystal type is not particularly limited. Preferred examples thereof include ether-series solvents (e.g., tetrahydrofuran, propylene glycol monomethyl ether, and propylene glycol monomethyl ether acetate), sulfoxide-series solvents (e.g., dimethyl sulfoxide, hexamethylene sulfoxide, and sulfolane), ester-series solvents (e.g., ethyl acetate, n-butyl acetate, and ethyl lactate), amide-series solvents (e.g., N,N-dimethylformamide, and 1 -methyl-2-pyrrolidone), aromatic hydrocarbon-series solvents (e.g., toluene and xylene), aliphatic hydrocarbon-series solvents (e.g., octane), nitrile-series solvents (e.g., acetonitrile), halogen-series solvents (e.g., carbon tetrachloride, and dichloromethane), alcohol-series solvents (e.g., methanol, ethanol, and n-propanol), ketone-series solvents (e.g., methyl ethyl ketone, methyl isobutyl ketone, and cyclohexanone), ionic liquids (e.g., 1-ethyl-3-methylimidazolium tetrafluoroborate), carbon disulfide solvents, and mixed solvents thereof.

Among them, ether-series solvents, ester-series solvents, alcohol-series solvents, ketone-series solvents, a mixture thereof, and a mixture thereof with water are more preferable. Particularly preferred is a solvent which contains propylene glycol monomethyl ether acetate as a main component. The poor solvent used in the present embodiment is also used as a dispersion medium for producing a dispersion liquid of the next step. However, propylene glycol monomethyl ether acetate is a general-purpose solvent for a final dispersion, and by using it in both steps, the cost performance is improved.

Further, since the particulates of the dichlorodiketopyrrolopyrrole pigment used in the step for controlling crystal type are preferably used without drying after being precipitated by the re-precipitation method, the part of the good solvent and poor solvent at the time of re-precipitation, water used for washing, or other solvent used instead of them may coexist in the organic solvent as the solvent for the step for controlling crystal type. Among them, it is preferable that water coexists. However, the good solvent used for re-precipitation may cause excessive particle growth, and thus, the good solvent is preferably not included in the step for controlling crystal type.

Condition for contacting the particulates of the dichlorodiketopyrrolopyrrole pigment with the organic solvent for controlling crystal type is not particularly limited. However, it is preferable that both are brought into contact with each

other under stirring to prevent the ratio of the organic solvent for controlling crystal type and the pigment particulates from being irregular. Further, the temperature for contacting is not particularly limited. Any temperature, which allows the organic solvent for controlling crystal type to be maintained in a liquid state, can be preferably used. It is preferable cace that the temperature is high at the time of controlling crystal type, in the point that the time required for enhancing the $\alpha$ type crystallinity degree is shortened. However, since energy is required to obtain high temperature and excessively high temperature is not preferable from the viewpoint of preventing explosion of an organic solvent, the temperature is preferably determined by considering the type of an organic solvent used and the time required to enhance $\alpha$ type crystallinity degree. Specifically, it is preferably -10°C to 100°C, and more preferably 0°C to 80°C. The amount of the organic solvent for controlling crystal type is not particularly limited. However, when the amount of the organic solvent is extremely small, irregular crystal form may be obtained or undesirable aggregation between the pigment particles may occur at the time of controlling crystal type. As such, the organic solvent for controlling crystal type is used preferably in an amount such that the pigment concentration is within a range from 0.1% to 50% at the time of controlling crystal type. Further, a material other than the organic solvent for controlling crystal type, which is co-present at the time of controlling crystal type, is not particularly limited. However, it is preferable that the particle growth inhibitor explained below is also present. Examples of the additional material include an acid, a base, an inorganic salt, a viscosity modifier, a surfactant, a defoaming agent, and a polymer dispersing agent. When a base is co-present, rate of enhancing $\alpha$ type crystallinity degree become fast and also the particle growth is promoted, and therefore time for controlling crystal type is preferably adjusted. Further, as the good solvent for the pigment used for the step [i] of the present embodiment may cause excessive particle growth, it is preferably not present in the step [ii].

Enhancing $\alpha$ type crystallinity degree in step [ii] of the present embodiment is preferably conducted under the presence of a particle growth inhibitor. By conducting the step of enhancing $\alpha$ type crystallinity degree under the presence of the particle growth inhibitor, excessive particle growth during enhancing the $\alpha$ type crystallinity degree can be suppressed and also it becomes possible to limit the crystallite size of the dichlorodiketopyrrole pigment within the preferred range of this embodiment. Although time point for adding the particle growth inhibitor is not particularly limited, it can be added simultaneously with the step [i], or after completing the step [i] but before starting the step [ii]. However, it is preferably added simultaneously with the step [i]. Further, it is also preferable that the particle growth inhibitor is added simultaneously with the step [i], and then the same or different material is further added before starting the step [ii].

Preferred type and use amount of the particle growth inhibitor used in the step [ii] of this embodiment may be the same as the type and use amount of the particle growth inhibitor used in the step [i] as described below.

[Crystallite size]

In the present embodiment, the dichlorodiketopyrrolopyrrole pigment obtained via the step [ii] has a crystallite size of 6.0 nm to 13.0 nm, preferably 6.0 nm to 11.0 nm, and particularly preferably 6.0 nm to 9.0 nm as determined in the direction of the (-151) crystal face. Further, the dichlorodiketopyrrolopyrrole pigment has a crystallite size of 5.0 nm to 23.0 nm, preferably 5.0 nm to 20 nm, and particularly preferably 10 nm to 18 nm as determined in the direction of the (111) crystal face. By controlling the dichlorodiketopyrrolopyrrole pigment to have a specific crystallite size in the direction of a pre-determined crystal face, viscosity of the dispersion liquid can be suppressed to low level when $\alpha$ type crystallinity degree is limited.

Although a mechanism for lowering the viscosity of the dispersion liquid by limiting the crystallite size range remains unclear, it is presumably thought as follows. A state in which the direction of the (-151) crystal face and the direction of the (111) crystal face are all within the above preferred range is thought as a state in which main direction of particle growth of the dichlorodiketopyrrolopyrrole pigment is limited to grow by the particle growth inhibitor. In other words, it is thought that the interaction for accumulation of additional pigment molecules on crystal surface is limited in such state. It is also thought that the interaction between the particles in the above directions is also suppressed to low level, and as a result, viscosity of the dispersion liquid is lowered. It is presumed that, when a crystallite size of only one direction is extremely suppressed, not only the interaction between particles in the direction of weakly suppressed face is increased but also the particle shape becomes anisotropic so that particles are easily overlapped with each other, yielding an increased interaction between particles to cause eventually the viscosity increase. Form the above points of view, the present embodiment is **characterized in that** both the crystallite size in the direction of the (-151) crystal face and the crystallite size in the direction of the (111) crystal face of the crystal particles are set within the specific range.

o Method for determination of crystallite size

(1) In the same manner as the method for determining $\alpha$ type crystallinity degree, powder X ray diffraction measurement of the dichlorodiketopyrrole pigment is carried out by using CuK$\alpha$ ray at Bragg angle ($2\theta$) range of 23° to

30°. Further, an X ray diffraction pattern after removing the background is calculated in the same manner as the method for determining $\alpha$ type crystallinity degree.

(2) From the X ray diffraction pattern after removing the background obtained from (1) above, half width value and Bragg angle ($2\theta$) of a diffraction peak are obtained for each diffraction peak near Bragg angle ($2\theta$) = 24.6 $\pm$ 0.3° and diffraction peak near Bragg angle ($2\theta$) = 28.1 $\pm$ 0.3° derived from the $\alpha$ type crystal transformation form. The half width value can be calculated by peak isolation of four diffraction peaks that are present within the above measurement range (three peaks near Bragg angle of 24.6°, 25.6°, and 28.1° derived from $\alpha$ type crystal transformation form and a peak near Bragg angle of 27° derived from $\beta$ type crystal transformation form) by using a commercially available data analysis software. In the present embodiment, data analysis software Igor Pro manufactured by Wave Metorics is used and half width value obtained by fitting the peak shape as Voigt function is used.

(3) By using the diffraction peak half width value calculated in (2) above and Scherrer formula described below, a crystallite size is calculated.

$$D = K\lambda/(10 \times B \times \cos A)$$

$$B = Bobs - b$$

Herein,

D: Crystallite size (nm)

Bobs: Half width (rad) calculated in (2) above

b: Angular resolution calibration coefficient for X ray diffractometer, and half width value (rad) measured by using standard silicone crystal. In the present embodiment, the standard silicone crystal is measured with following apparatus constitution and measurement condition, and b = 0.2.

A: Diffraction peak Bragg angle $2\theta$ (rad)

K: Scherrer constant (in the present embodiment, K = 0.94)

$\lambda$: X ray wavelength (Å) ($\lambda$ = 1.54 since CuK$\alpha$ ray is used in the present embodiment)

The measurement condition in the present embodiment is as follows.

X ray diffractometer: RINT2500 manufactured by Rigaku Corporation
Goniometer: RINT2000 vertical type goniometer, manufactured by Rigaku Corporation
Sampling width: 0.01 °
Step time: 1 second
Divergence slit: 2°
Scattering slit: 2°
Light-receiving slit: 0.6 mm
Tube: Cu
Tube voltage: 55 KV
Tube current: 280 mA

As described above, to increase the crystallite size, (i) temperature for crystallization step is increased, (ii) amount of crystal growth inhibitor is limited, (iii) the timing of addition is delayed, or (iv) reaction time is extended. To relatively increase the crystallite size in any one direction of the direction of the (-151) face and the direction of the (111) face, it is effective, for example, to appropriately select the type, addition amount, and addition timing of a crystal growth inhibitor and a solvent for crystal growth in a crystallization step. For example, to relatively increase the crystallite size in the direction of the (-151) face compared to the other, it is effective to increase the ratio of a growth inhibitor which has a higher growth suppressing effect in the direction of the (111) face. Specific examples of the agent include a compound represented by formula (2).

Further, to relatively increase the crystallite size in the direction of the (111) face compared to the other, it is effective to increase the ratio of a growth inhibitor in the direction of the (-151) face. Specific examples of the agent include a pigment derivative having quinacridone skeleton.

Meanwhile, the second embodiment described below may refer to the condition for measuring a crystallite size or the like applied to the first embodiment.

[Other conditions]

In the present embodiment, the dichlorodiketopyrrolopyrrole pigment particulates used for the step [ii] are preferably used without drying after being precipitated by the re-precipitation method. The dichlorodiketopyrrolopyrrole pigment particulates are also preferable that they are maintained in a state dispersed in a dispersion medium. Herein, the term "drying" means that concentration of the pigment particulates becomes higher than 60%.

In the present embodiment, the step [ii] is preferably carried out under the absence of a grinding agent. Examples of the grinding agent include a medium such as zirconia beads, glass beads, and agate balls and water-soluble inorganic salts such as sodium chloride, potassium chloride, calcium chloride, barium chloride, and sodium sulfate.

In the present embodiment, after increasing the $\alpha$ type crystallinity degree of the particulates of dichlorodiketopyrrolopyrrole pigment in the step [ii], it is preferable that a treatment such as washing with water, addition of an adsorbent, and cooling is performed to prevent excessive increase of the $\alpha$ type crystallinity degree. Although specific order of water washing is not particularly limited, for example, it is an embodiment that water (ion exchange water or distilled water) of a mass amount of 100 to 10,000 times to the pigment particulates is used, and the organic solvent for promoting crystallization, which co-exists with the pigment particulates, is poured. Temperature of the water used for washing is preferably 0 to 30°C, and the atmospheric temperature at the time of washing is preferably 5 to 25°C. Further, as the adsorbent, a particle growth inhibitor, a dispersing agent, and the like described below can be used. The temperature of the cooling treatment is preferably set at least 10°C lower temperature, compared with the temperature of the step [ii], if carried out. Specifically, it is set in the range of -15°C to 20°C.

According to the necessary, the pigment obtained after the treatments may be subjected to concentration, drying step, and the like, thereby to increase the pigment concentration. Although the concentration or drying method is not particularly limited, when drying is carried out, it is preferable to carry out freeze drying or carrying out the drying after replacing the solvent with an organic solvent like alcohol and acetone to avoid excessive aggregation of pigment particulates by drying. Mixing with a dispersing agent before drying is also preferable.

In the present embodiment, although the concentration of the pigment particulates in a dispersion to be used for the step [ii] is not particularly limited, it is preferably 0.1 to 50% by mass, and more preferably 1 to 25% by mass.

[Pigment Fine Particles]

As to an average particle diameter of fine particles, an average scale of a group can be represented by digitalizing by several measurement methods. There are frequently-used parameters, such as mode diameter indicating the maximum value of distribution, median diameter corresponding to the median value in the integral frequency distribution curve, and various average diameters (e.g., number-averaged diameter, length-averaged diameter, area-averaged diameter, mass-averaged diameter, volume-averaged diameter, or the like), and the like. In the present invention, the average particle diameter means a number-averaged diameter, unless otherwise specified. In the present invention, the particle diameter of the pigment fine particles (primary particles) is preferably 100 nm or less, more preferably 75 nm or less, and particularly preferably 50 nm or less. Although the lower limit is not particularly limited, it is practical that the lower limit is 2 nm or 3 nm.

In the present invention, a ratio (Mv/Mn) of volume-averaged diameter (Mv) to number-averaged diameter (Mn) is used as the indicator of the uniformity (monodispersity) of particles, unless otherwise particularly specified. In the present invention, the monodispersity of the pigment particulates (primary particles) (in the present invention, the term "monodispersity" indicates the degree of the uniformity in particle size), i.e., Mv/Mn, is preferably 1.0 to 2.0, more preferably 1.0 to 1.8, and particularly preferably 1.0 to 1.5.

Examples of a method of measuring the particle diameter of the organic particle include a microscopic method, a gravimetric method, a light scattering method, a light shielding method, an electric resistance method, an acoustic method, and a dynamic light scattering method. Of these, the microscopic method and the dynamic light scattering method are particularly preferable. Examples of a microscope to be used in the microscopic method include a scanning electron microscope and a transmission electron microscope. Examples of a particle measuring device in the dynamic light scattering method include Nanotrac UPA-EX 150 manufactured by NIKKISO Co., Ltd., and a dynamic light scattering photometer DLS-7000 series manufactured by OTSUKA ELECTRONICS CO., LTD (all trade names).

[Step [i] - Re-precipitation method]

In the present embodiment, a dichlorodiketopyrrolopyrrole pigment dissolved in a solvent is brought into contact with a poor solvent to produce particulates of the dichlorodiketopyrrolopyrrole pigment. The term "dichlorodiketopyrrolopyrrole pigment dissolved in a solvent" means both the dichlorodiketopyrrolopyrrole pigment which is synthesized in advance and then dissolved in a good solvent and the dichlorodiketopyrrolopyrrole pigment dissolved in a synthesis solvent in a state such as an alkali metal salt when the dichlorodiketopyrrolopyrrole pigment is produced by synthesizing

from a raw material in the synthesis solvent. With respect to the compatibility of a solvent for dissolving the dichlorodiketopyrrolopyrrole pigment (a good solvent) to a poor solvent, the amount of the good solvent dissolved in the poor solvent is preferably 30% by mass or more, and more preferably 50% by or more. The upper limit of the amount of the good solvent dissolved in the poor solvent is not particularly limited. It is practically useful to mix them at any ratio.

The good solvent is not particularly limited. Preferred examples thereof include organic acids (e.g., formic acid, dichloroacetic acid, and methansulfonic acid), organic bases (e.g., diazabicycloundecene (DBU), tetrabutylammonium hydroxide, and sodium methoxide), aqueous solvents (e.g., water, hydrochloric acid, and aqueous sodium hydroxide solution), alcohol-series solvents (e.g., methanol, ethanol, and n-propanol), ketone-series solvents (e.g., methyl ethyl ketone, methyl isobutyl ketone, and cyclohexanone), ether-series solvents (e.g., tetrahydrofuran, propylene glycol monomethyl ether, and propylene glycol monomethyl ether acetate), sulfoxide-series solvents (e.g., dimethyl sulfoxide, hexamethylene sulfoxide, and sulfolane), ester-series solvents (e.g., ethyl acetate, n-butyl acetate, and ethyl lactate), amide-series solvents (e.g., N,N-dimethylformamide, and 1-methyl-2-pyrrolidone), aromatic hydrocarbon-series solvents (e.g., toluene and xylene), aliphatic hydrocarbon-series solvents (e.g., octane), nitrile-series solvents (e.g., acetonitrile), halogen-series solvents (e.g., carbon tetrachloride, and dichloromethane), ionic liquids (e.g., 1-ethyl-3-methylimidazolium tetrafluoroborate), carbon disulfide solvents, and mixed solvents thereof.

Among these, organic acids, organic bases, aqueous solvents, alcohol-series solvents, ketone-series solvents, ether-series solvents, sulfoxide-series solvents, ester-series solvents, amide-series solvents, or mixed solvents thereof are preferable; and organic acids, organic bases, sulfoxide-series solvents, amide-series solvents, or mixed solvents thereof are particularly preferable.

Examples of the organic acid include a sulfonic acid compound, a carboxylic acid compound, an acid anhydride compound, and the like, but are not intended to be limited to these.

Examples of the sulfonic acid compound include an alkylsulfonic acid, a halogenated alkylsulfonic acid, an aromatic sulfonic acid, and the like, and the alkyl chain or aromatic ring may be unsubstituted or may be substituted.

Specific examples of the sulfonic acid compound used in the present embodiment include methanesulfonic acid, ethanesulfonic acid, propanesulfonic acid, butanesulfonic acid, trifluoromethanesulfonic acid, pentafluoroethanesulfonic acid, heptafluoropropanesulfonic acid, nonafluorobutanesulfonic acid, benzenesulfonic acid, toluenesulfonic acid, xylenesulfonic acid, dodecylbenzensulfonic acid, naphthalenesulfonic acid, chlorobenzenesulfonic acid, aminiobenzenesulfonic acid, 1,5-naphthalenedisulfonic acid tetrahydrate, and the like.

Examples of the carboxylic acid compound include an alkylcarboxylic acid, a halogenated alkylcarboxylic acid, an aromatic carboxylic acid, and the like, and the alkyl chain or the aromatic ring may be unsubstituted or may be substituted with the substituent T. Specific examples of the carboxylic acid compound include formic acid, acetic acid, propionic acid, butyric acid, trifluoroacetic acid, trichloroacetic acid, tribromoacetic acid, difluoroacetic acid, dichloroacetic acid, dibromoacetic acid, fluoroacetic acid, chloroacetic acid, bromoacetic acid, chlorodifluoroacetic acid, cyanoacetic acid, phenoxyacetic acid, diphenylacetic acid, thioacetic acid, mercaptoacetic acid, mercaptopropionic acid, 2-chloropropionic acid, 2,2-dichloropropionic acid, 3-chloropropionic acid, 2-bromopropionic acid, 3-bromopropionic acid. 2,3-dibromopropionic acid, 2-chlorobutyric acid, 3-chlorobutyric acid, 4-chlorobutyric acid, isobutyric acid, 2-bromoisobutyric acid, cyclohexanecarboxylic acid, nitroacetic acid, phosphonoacetic acid, pyruvic acid, oxalic acid, propargylic acid, trimethylammonium acetate, benzoic acid, tetrafluorobenzoic acid, pentafluorobenzoic acid, 2-chlorobenzoic acid, 2-fluorobenzoic acid, benzoyl formate, benzoyl benzoate, 2-dimethylaminobenzoic acid, 2,6-dihydroxybenzoic acid, picolinic acid, citric acid, cystein, sulfanilic acid, squaric acid and the like.

In the present embodiment, in addition to the carboxylic acid and sulfonic acid, an acid anhydride can be used as a constituent of the acid, and specific examples include acid anhydrides such as acetic anhydride, propionic anhydride, trifluoromethanesulfonic anhydride and trichloroacetic anhydride. Furthermore, examples of organic acids other than these include phosphoric acid isopropyl ester, phosphoric acid methyl ester, phenylphosphonic acid, ethylenediaminetetraphosphonic acid, 1-hydroxyethane-1,1-diphosphonic acid, and methylenediphosphonic acid.

Among them, preferred as the organic acid are an alkylsulfonic acid, an alkylcarboxylic acid, a halogenated alkylcarboxylic acid and an aromatic sulfonic acid, and methanesulfonic acid, trifluoromethanesulfonic acid, ethanesulfonic acid, trifluoroacetic acid, dichloroacetic acid, chloroacetic acid, formic acid, toluenesulfonic acid and dodecylbenzenesulfonic acid are more preferred.

Examples of the organic base include primary amines, secondary amines, tertiary amines, quaternary amines, anilines, piperidines, piperazines, amidines, formamidines, pyridines, guanidines, morpholines, nitrogen-containing heterocyclic rings, metal alkoxides and the like, but are not limited to these. Among these, tertiary amines, quaternary amines, morpholines, nitrogen-containing heterocyclic rings, metal alkoxides and the like are preferred.

Specific examples include aniline, 2-chloroaniline, 3-fluoroaniline, 2.4-difluoroaniline, 2-nitroaniline, N,N-diethylaniline, 2,6-diethylaniline, 2,4-dimethoxyaniline, p-phenylenediamine, pyridine, 2-aminopyridine, pyrimidine, pyridazine, pyrazine, 2,2-dipyridyl, pyrrolidine, piperidine, imidazole, pyrazole, thiazole, benzothiazole, oxazole, diazabicycloundecene, diazabicyclononene, diazabicyclooctane, 1-cyanoguanidine, N,N'-diphenylguanidine, cyclohexylamine, butylamine, cyclopropylamine, t-butylamine, benzylamine, diisopropylamine, trimethylamine, triethylamine, tributylamine, tetrahydroquinoline, phenyltrimethylammonium hydroxide, benzyltrimethylammonium hydroxide, tetramethylammonium hydroxide, tetrabutylammonium hydroxide, morpholine, thiomorpholine, N-methylmorpholine, hexamethylphosphoramide, 1-methyl-4-piperidone, N-(2-aminoethyl)piperazine, ethylenediamine, diethylenetriamine, bis-(3-aminopropyl) ether, sodium methoxide, sodium ethoxide, sodium t-butoxide, potassium methoxide, potassium ethoxide, potassium t-butoxide, and the like.

Among these, aniline, 2,4-difluoroaniline, pyridine, diazabicycloundecene, diazabicyc1ononene, diazabicyclooctane, triethylamine, tetrahydroquinoline, phenyltrimethylammonium hydroxide, benzyltrimethylammonium hydroxide, tetramethylammonium hydroxide, tetrabutylammonium hydroxide, N-methylmorpholine, N-(2-aminoethyl)piperazine, sodium methoxide, sodium ethoxide, sodium t-butoxide, potassium methoxide, potassium ethoxide and potassium t-butoxide are preferred, and 2,4-difluoroaniline, diazabicycloundecene, diazabicyclononene, tetrahydroquinoline, phenyltrimethylammonium hydroxide, tetramethylammonium hydroxide, tetrabutylammonium hydroxide, N-methylmorpholine, sodium methoxide and potassium t-butoxide are more preferred.

More specific examples of the sulfoxide-series solvent include dimethyl sulfoxide, diethyl sulfoxide, hexamethylene sulfoxide, sulfolane and the like.

Examples of the amide-series solvents include N,N-dimethylformamide, 1-methyl-2-pyrrolidone, 2-pyrrolidinone, 1,3-dimethyl-2-imidazolidinone, 2-pyrroridinone, s-caprolactam, formamide, N-methylformarnide, acetamide, N-methylacetamide, N,N-dimethylacetamide, N-methylpropaneamide, and hexamethylphosphoric triamide.

The condition under which the pigment fine particles are prepared for precipitation, is not particularly restricted, and can be selected from a range from a normal pressure condition to a subcritical or supercritical condition. The temperature in the case where the solution is prepared under normal pressure is preferably -10°C to 150°C, more preferably -5°C to 130°C, and particularly preferably 0°C to 100°C.

When the pigment is uniformly dissolved in the good solvent, usually, in the case of a pigment having in the molecule thereof a group dissociative under alkaline conditions, an alkaline solvent is used, and in the case of a pigment having no group dissociative under alkaline conditions but having in the molecule thereof many nitrogen atoms, to which protons easily adhere, an acidic solvent is preferably used. For example, quinacridone-, diketopyrrolopyrrole-, and condensed disazo-compound pigments can be dissolved in alkaline conditions, while phthalocyanine-compound pigments can be dissolved in acidic conditions.

As a base used when the pigment is dissolved in an alkaline condition, an inorganic base such as lithium hydroxide, sodium hydroxide, potassium hydroxide, calcium hydroxide or barium hydroxide can also be used in addition to the organic bases mentioned above. The amount of the base to be used is not particularly limited. However, in the case of the inorganic base, the amount thereof is preferably from 1.0 to 30 mole equivalents, more preferably from 1.0 to 25 mole equivalents, and particularly preferably from 1.0 to 20 mole equivalents, to the pigment. In the case of the organic base, the amount thereof is preferably from 1.0 to 100 mole equivalents, more preferably from 5.0 to 100 mole equivalents, and particularly preferably from 20 to 100 mole equivalents, to the pigment.

As an acid used when the pigment is dissolved in an acidic condition, an inorganic acid such as sulfuric acid, hydrochloric acid or phosphoric acid can also be used in addition to the organic acids mentioned above. The amount of the acid to be used is not particularly limited, but in many cases, the acid is used in a larger or more excessive amount than the base. The amount of the acid to be used is preferably from 3 to 500 mole equivalents, more preferably from 10 to 500 mole equivalents, and particularly preferably from 30 to 200 mole equivalents, to the pigment.

In the case where an inorganic base or an inorganic acid is mixed with the organic solvent and the mixture is used as a good solvent for the pigment, a solvent having high solubility for the alkali or the acid such as water or a lower alcohol can be added in a slight amount to the organic solvent in order that the alkali or the acid may be completely dissolved. The amount of water or the lower alcohol is preferably 50 mass% or less, or more preferably 30 mass% or less with respect to the total amount of the pigment solution. Specific examples thereof that can be used include water, methanol, ethanol, n-propanol, isopropanol, and butyl alcohol.

The viscosity of the pigment solution is preferably in the range from 0.5 to 100.0 mPa·s, and more preferably from 1.0 to 50.0 mPa·s.

If necessary, the pigment solution may also contain other components in a good solvent in addition to the pigment.

Preferred examples of the other components include, although not specifically limited, an acid (an organic compound with an acidic group or the like) and a base (an organic compound with a basic group). In the present embodiment, however, it is preferable that the dichlorodiketopyrrolopyrrole pigment is dissolved under the presence of a base. It is more preferable that the base is an organic base.

In the present embodiment, examples of the organic base (the organic compound having a basic group) include an alkylamine, an arylamine, an aralkylamine, a pyrazole derivative, an imidazole derivative, a triazole derivative, a tetrazole derivative, an oxazole derivative, a thiazole derivative, a pyridine derivative, a pyridazine derivative, a pyrimidine derivative, a pyrazine derivative, a triazine derivative and the like. Preferred examples include an alkylamine, an arylamine, and an imidazole derivative.

The number of carbon atoms of the organic compound having a basic group is preferably 6 or more, more

preferably 8 or more, and even more preferably 10 or more. In regard to the organic compound having a basic group, examples of the alkylamine include butylamine, amylamine, hexylamine, heptylamine, octylamine, 2-heptylhexylamine, nonylamine, decylamine, undecylamine, dodecylamine, tridecylamine, tetradecylamine, pentadecylamine, hexadecylamine, octadecylamine, isobutylamine, t-butylamine, 1-methylbutylamine, 1-ethylbutylamine, t-amylamine, 3-aminoheptane, t-octylamine, 1,4-diaminobutane, 1,6-hexadiamine, 1,8-diaminooctane, 1,10-diaminodecane, 1,12-diaminododecane, dibutylamine, dihexylamine, dioctylamine, bis(2-ethylhexyl)amine, didecylamine, N-methyloctadecylamine, triethylamine, tripropylamine, N,N-dimethylbutylamine, N-methyldibutylamine, tributylamine, tripentylamine, N,N-dimethylhexylamine, N,N-dimethyloctylamine, N-methyldioctylamine, trioctylamine, triisooctylamine, N,N-dimethyldodecylamine, tridodecylamine, N-methyl-N-octadecyl-1-octadecylamine, N,N-dibutylethylenediamine, N,N,N',N'-tetramethylethylenediamine, N,N,N',N'-tetramethyl-1,6-hexanediamine, N-methylcyclohexylamine, N,N,N',N',N"-pentamethyldiethylenetriamine, cyclohexylamine, cycloheptylamine, cyclohexylamine, cyclododecylamine, 1-adamantaneamine and the like. Preferred examples include octylamine, 2-heptylhexylamine, nonylamine, decylamine, undecylamine, dodecylamine, tridecylamine, tetradecylamine, octadecylamine, t-octylamine, 1,8-diaminooctane, 1,10-diaminodecane, 1,12-diaminododecane, dioctylamine, bis(2-ethylhexyl)amine, didecylamine, N-methyloctadecylamine, N,N-dimethyloctylamine, N-methyldioctylamine, trioctylamine, triisooctylamine, N.N-dimethyldodecylamine, tridodecylamine, N-methyl-N-octadecyl-1-octadecylamine, N,N-dibutylethylenediamine, N,N,N',N'-tetramethylethylenediamine, N,N,N',N'-tetramethyl-1,6-hexanediamine, N-methylcyclohexylamine, N,N,N',N',N"-pentamethyldiethylenetriamine, cyclododecylamine, 1-adamantaneamine, and the like. More preferred examples include decylamine, undecylamine, dodecylamine, tridecylamine, tetradecylamine, didecylamine, N-methyloctadecylamine. N,N-dimethyldodecylamine, tridodecylamine and the like. Furthermore, an organic polymer compound having a basic group, such as polyallylamine or polyvinylamine, is also suitable.

Examples of the arylamine include N,N-dibutylaniline, 4-butylaniline, 4-pentylamine, 4-hexylamine, 4-heptylaniline, 4-octylaniline, 4-decylaniline, 4-dodecylaniline, 4-tetradecylaniline, 4-hexadecylaniline, 4-butoxyaniline, 4-pentyloxyaniline, 4-hexyloxyaniline and the like, but preferred examples include 4-octylaniline, 4-decylaniline, 4-dodecylaniline, 4-tetradecylaniline, 4-hexadecylaniline, 4-pentyloxyaniline, 4-hexyloxyaniline and the like. More preferred examples include 4-decylaniline, 4-dodecylaniline, 4-tetradecylaniline, 4-hexadecylaniline, 4-pentyloxyaniline, 4-hexyloxyaniline and the like.

Examples of the imidazole derivative include 1-(10-hydroxydecyl)imidazole, 1-butylimidazole, 2-undecylimidazole, 2-heptadecylimidazole and the like.

Further, as the organic compound having a basic group, an organic compound composed of a basic group and a heterocyclic group is preferable.

Examples of such an organic compound include 2-aminopyridine, 3-aminopyridine, 1-(2-aminophenyl)pyrrole, 5-aminopyrazole, 3-amino-5-methylpyrazole, 5-amino-1-ethylpyrazole, 3-aminotriazole, 2-aminothiazole, 5-aminoindole, 2-aminobenzothiazole, 5-aminobenzimidazole, N,N-dimethyl-5-aminobenzimidazole, phthalimide, 5-aminobenzimidazolone, N,N-dimethyl-5-aminobenzimidazolone, 5-aminouracil, 6-aminouracil, uracil, thymine, adenine, guanine, melamine, aminopyrazine, 8-aminoquinoline, 3-aminoquinoline, 9-aminoacridine, ASTRA Blue 6GLL (basic phthalocyanine derivative), 2-aminoanthraquinone, 3-aminoanthraquinone, acridone, N-acridone, quinacridone, NILE Red, Methylene Violet Naphthalimide, and the like. Preferred examples include 2-aminobenzthiazole, 5-aminobenzimidazole, N,N-dimethyl-5-aminobenzimidazole, 5-aminobenzimidazolone, N,N-dimethyl-5-aminobenzimidazalone, 5-aminouracil, 6-aminouracil, uracil, thymine, adenine, guanine, melamine, 8-aminoquinoline, 3-aminoquinoline, 9-aminoacridine, ASTRA Blue 6GLL (basic phthalocyanine derivative), 2-aminoanthraquinone, 3-aminoanthraquinone, acridone, N-acridone, quinacridone, NILE Red, and Methylene Violet Naphthalimide. More preferred examples include 9-aminoacridine, ASTRA Blue 6GLL (basic phthalocyanine derivative), 2-aminoanthraquinone, 3-aminoanthraquinone, acridone, N-acridone, 5-aminobenzimidazole, N,N-dimethyl-5-aminobenzimidazole, 5-aminobenzimidazolone, N,N-dimethyl-5-aminobenzimidazolone, 5-aminouracil, 6-aminouracil, NILE Red, and Methylene Violet Naphthalimide.

As the organic compound having a basic group, an organic compound composed of a basic group and a heterocyclic group is preferable.

The organic compound having a basic group is preferably at a proportion in the range of 0.01 to 30% by mass, more preferably in the range of 0.05 to 20% by mass, and particularly preferably in the range of 0.05 to 15% by mass, to the pigment.

In addition to the compounds mentioned above, pigment derivatives described in JP-A-2007-9096, JP-A-7-331182 and the like may be exemplified. The term "pigment derivative" as used herein refers to a pigment derivative type compound that is derived from an organic pigment as a parent substance and is produced by chemically modifying the parent structure, or a pigment derivative type compound obtained by a pigmentization reaction of a chemically modified pigment precursor. Commercially available products include, for example, "EFKA6745 (phthalocyanine derivative)" manufactured by EFKA Chemicals GmbH, "Solsperse 5000 (phthalocyanine derivative)" manufactured by Lubrizol Corp., and the like (all trade names). When a pigment derivative is used, the amount of use is preferably in the range of 0.5 to 30% by mass, more preferably in the range of 3 to 20% by mass, and particularly preferably in the range of 5

to 15% by mass, to the pigment.

For the poor solvent, there is no particular limitation. The solubility of the dichlorodiketopyrrolopyrrole in the poor solvent is preferably 0.02 mass% or less, more preferably 0.01 mass% or less. The solubility of the pigment in the poor solvent has no particular lower limit, but it is practical that the solubility is 0.0001 mass% or more, in consideration of an organic pigment to be ordinarily used.

The poor solvent is not particularly limited. Preferred examples thereof include aqueous solvents (e.g., water, hydrochloric acid, and aqueous sodium hydroxide solution), alcohol-series solvents (e.g., methanol, ethanol, and n-propanol), ketone-series solvents (e.g., methyl ethyl ketone, methyl isobutyl ketone, and cyclohexanone), ether-series solvents (e.g., tetrahydrofuran, propylene glycol monomethyl ether, and propylene glycol monomethyl ether acetate), sulfoxide-series solvents (e.g., dimethyl sulfoxide, hexamethylene sulfoxide, and sulfolane), ester-series solvents (e.g., ethyl acetate, n-butyl acetate, and ethyl lactate), amide-series solvents (e.g., N,N-dimethylformamide, and 1-methyl-2-pyrrolidone), aromatic hydrocarbon-series solvents (e.g., toluene and xylene), aliphatic hydrocarbon-series solvents (e.g., octane), nitrile-series solvents (e.g., acetonitrile), halogen-series solvents (e.g., carbon tetrachloride, and dichloromethane), ionic liquids (e.g., 1-ethyl-3-methylimidazolium tetrafluoroborate), carbon disulfide solvents, and mixed solvents thereof.

Among these, aqueous solvents, alcohol-series solvents, ketone-series solvents, sulfoxide-series solvents, ester-series solvents, amide-series solvents, nitrile-series solvents, and mixed solvents thereof are more preferable; and aqueous solvents, alcohol-series solvents, and mixed solvents thereof are particularly preferable.

The term "aqueous medium" means water or a solution containing water and an organic solvent or an inorganic salt soluble in water. Examples of the aqueous solvents include water, hydrochloric acid, aqueous sodium hydroxide solution and aqueous potassium hydroxide solution.

Examples of the alcohol-series solvents include methanol, ethanol, isopropyl alcohol, n-propyl alcohol, and 1-methoxy-2-propanol.

The above-described examples of the good solvent and those of the poor solvents overlap, but the identical solvent is not selected for both the good solvent and the poor solvent. Any solvents may be used in combination of them as long as the organic pigment to be used shows solubility in the good solvent sufficiently higher than that in the poor solvent. In regard to the pigment, for example, the difference in solubility between the good solvent and the poor solvent is preferably 0.2 mass% or more, and more preferably 0.5 mass% or more. There is no particular upper limit to the difference in solubility between the good solvent and the poor solvent. However, if ordinarily used organic pigments are taken into consideration, it is practical that the upper limit is 50 mass% or less.

The condition for the poor solvent is not particularly restricted, and can be selected from a range from a normal pressure condition to a subcritical or supercritical condition. The temperature under normal pressure is preferably -30°C to 100°C, more preferably -10°C to 60°C, and particularly preferably 0°C to 30°C, The viscosity of the pigment solutions is preferably in the range from 0.5 to 100.0 mPa·s, and more preferably from 1.0 to 50.0 mPa·s.

When the pigment solution and the poor solvent are mixed, mixing may be carried out by adding any of the two liquids. However, it is preferable to perform mixing by jet flowing the pigment solution into the poor solvent, and at that time, it is preferable that the poor solvent is in a stirred state. The stirring rate is preferably 100 to 10.000 rpm, more preferably 150 to 8,000 rpm, and particularly preferably 200 to 6,000 rpm. A pump or the like may be or may not be used for adding. As the adding method, a method of adding a liquid inside the other liquid or a method of adding a liquid outside the other liquid may be used; a method of adding a liquid inside the other liquid is preferable. Further, it is preferred that one of the liquids be successively fed from inside of the other liquid through a feed pipe using a pump. The inner diameter of the feed pipe is preferably in the range from 0.1 mm to 200 mm, and more preferably from 0.2 mm to 100 mm. The speed fed from the feed pipe into the other liquid is preferably in the range from 1 to 10,000 mL/min, and more preferably from 5 to 5,000 mL/min.

Upon mixing the pigment solution and the poor solvent, the particle size of the pigment nanoparticles that are produced by precipitation can be controlled by regulating the Reynolds number. Herein, the Reynolds number is a dimensionless number representing the flow state of a fluid and is represented by the following expression.

$$Re = \rho UL/\mu \quad \cdots \text{ expression (1)}$$

In expression (1), Re represents the Reynolds number; $\rho$ represents a density of the pigment solution [kg/m$^3$]; U represents a relative velocity [m/s] at which the pigment solution comes in contact with the poor solvent; L represents an equivalent diameter [m] of a flow path or a supply inlet at a part where the pigment solution comes in contact with the poor solvent; and $\mu$ represents a viscosity coefficient [Pa·s] of the pigment solution.

The equivalent diameter L refers to the diameter of an equivalent cylindrical tube when a cylindrical tube which is equivalent to the opening diameter or the flow channel of a pipe having an arbitrary cross-section shape is envisaged.

The equivalent diameter L is represented by the following expression (2), in which the cross-section of the pipe is designated as A and the wetted perimeter (circumference) of the pipe or the outer perimeter of the flow channel is designated as p.

$$L = 4A/p \quad \cdots \text{expression (2)}$$

It is preferable to form particles by injecting the pigment solution into the poor solvent through a pipe, and when a circular tube is used as the pipe, the equivalent diameter coincides with the diameter of the circular tube. For example, the equivalent diameter can be adjusted by varying the opening diameter of the liquid supply inlet. The value of the equivalent diameter L is not particularly limited, but for example, the equivalent diameter is identical in meaning with a preferred inner diameter of the supply inlet.

The relative velocity U, at which the pigment solution comes in contact with the poor solvent, is defined as the relative velocity in a direction perpendicular to the plane of the part where the two liquids come in contact. That is, for example, in the case of mixing by injecting the pigment solution into the poor solvent which is stationary, the velocity of injecting from the supply inlet is identical to the relative velocity U. The value of the relative velocity U is not particularly limited, but for example, the value is preferably set at 0.5 to 100 m/s., and more preferably at 1.0 to 50 m/s.

The density $\rho$ of the pigment solution is a value that is determined by the type of the selected material, but it is practical that $\rho$ is, for example, 0.8 to 2.0 kg/$m^3$. Furthermore, the coefficient of viscosity $\mu$ of the pigment solution is also a value that is determined by the material used, the environment temperature or the like, but its preferred range is identical with a preferred velocity of the pigment solution.

A smaller value of Reynolds number (Re) is likely to form a laminar flow, and a larger value is likely to form a turbulent flow. For example, the particle size of the pigment nanoparticles may be obtained under control by adjusting the Reynolds number to be 60 or more, and it is preferable to adjusting the Reynolds number to 100 or more, and more preferably to 150 or more. The Reynolds number has no particular upper limit, but well pigment nanoparticles can be obtained under control by adjusting the Reynolds number, for example, to the range of 100,000 or less, which is preferable. Alternatively, the conditions may be adjusted such that the Reynolds number is increased so that the average particle size of the obtainable nanoparticles would be 60 nm or less. In this case, within the range mentioned above, pigment nanoparticles having a smaller particle size can be obtained under control usually by increasing the Reynolds number.

The mixing ratio of the pigment solution and the poor solvent is preferably in a range from 1/50 to 2/3, more preferably from 1/40 to 1/2, and particularly preferably from 1/20 to 3/8, in terms of volume ratio. The particle concentration in the liquid when organic fine particles are precipitated is not particularly limited, but the organic particle concentration is preferably in the range of 10 to 40,000 mg, more preferably in the range of 20 to 30,000 mg, and particularly preferably in the range of 50 to 25,000 mg, to 1,000 mL of the solvent. There is no particular limitation to the scale of preparation at the time when the fine particles are prepared. However, it is preferred that the preparation scale is such that the amount of the poor solvent to be mixed is preferably from 10 to 2,000 L, and more preferably from 50 to 1,000 L.

In the present embodiment, for producing a dispersion liquid by precipitating pigment particulates in the step [i], a "particle growth inhibitor" may be included in any one of a pigment solution and a poor solvent, preferably in a pigment solution. By using the particle growth inhibitor, more favorable performances as a coloring material for a color filter can be obtained without increasing accidentally the crystallite size, and therefore preferable.

[Crystal growth inhibitor]

Preferred examples of the particle growth inhibitor include a pigment derivative in which a substituent is introduced to a skeleton of a pigment molecule (also referred to as a dye derivative), the organic compound composed of the basic group and a heterocyclic group, and a polymer dispersing agent. Of these, a pigment derivative is particularly preferable.

In the present embodiment, the pigment derivative which is preferably used as the particle growth inhibitor can be represented by the following formula (1).

P-[X-(Y)k]n · · · Formula (1)

(In the formula, P is a residue of an organic dye compound which may have a substituent (the residue of an organic dye includes a residue of an organic dye or a derivative thereof). X represents a single bond or a divalent linking group. The linking group includes a group composed of 1 to 100 carbon atoms, 0 to 10 nitrogen atoms, 0 to 50 oxygen atoms, 1 to 200 hydrogen atoms, and 0 to 20 sulfur atoms, and it may be either unsubstituted or may have a substituent. X is preferably an organic linking group, and specific examples of X include a direct bond, -O-, -S-, -CO-, -$SO_2$-, -$NR_1$-,

- $CONR_1$-, -$SO_2NR_1$-, -$NR_1CO$-, -$NR_1SO_2$- (herein, $R_1$ represents a hydrogen atom, an alkyl group, or a hydroxyalkyl group), an alkylene group and an alkyl group having 18 or less carbon atoms which may have a substituent, a phenyl group which may have a substituent, a triazine residue, or a combination thereof. Y represents -$NR_2R_3$, a sulfo group, or a carboxyl group, and $R_2$ and $R_3$ each independently represents a hydrogen atom, an alkyl group, an alkenyl group, or a phenyl group, which may have a substituent, or a heterocycle which is formed by $R_2$ and $R_3$. k represents an integer of 1 or 2, and n represents an integer of 1 to 4. In the present invention, the expressions "compound" represented by a certain formula and "agent" include not only the compound of the structural formula itself but also a salt thereof when the compound can form a salt.

Preferred examples of the pigment derivative include a diketopyrrolopyrrole derivative, a quinacridone derivative, an anthraquinone derivative, a dianthraquinone derivative, a benzoindole derivative, and a thiazin-indigo derivative. Of these, the diketopyrrolopyrrole derivative and quinacridone derivative are more preferable. Since the present inventors has been found that the diketopyrrolopyrrole derivative is effective for inhibiting particle growth in the direction of the (111) crystal face and the quinacridone derivative is effective for inhibiting particle growth in the direction of the (-151) crystal face, it is preferable to use the diketopyrrolopyrrole and quinacridone derivative in combination for the present embodiment. As for the derivatives, any of an acidic derivative having an acidic substituent such as a sulfonic acid group and a carboxylic acid group, a basic derivative having a basic substituent such as a dialkylamino group and a pyrazolyl methyl group, and a neutral derivative having a neutral substituent such as a phthalimide methyl group and an imidazolyl methyl group can be preferably used.

Examples of the pigment derivative that can be preferably used in the present embodiment include those described in JP-A-56-118462, JP-A-63-264674, JP-A-1-217077, JP-A-3-9961, JP-A-3-26767, JP-A-3-153780, JP-A-3-45662, JP-A-4-285669, JP-A-6-145546, JP-A-6-212088, JP-A-6-240158, JP-A-10-30063, and JP-A-10-195326.

The growth inhibitor that can be used in the present embodiment is further preferably a compound represented by the following formula (2).

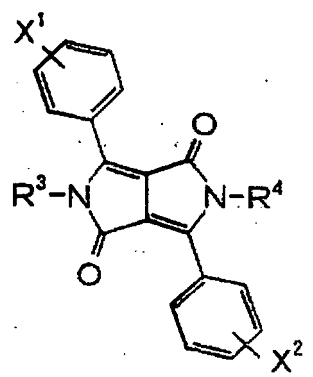

Formula (2)

In formula (2), $X^1$ and $X^2$ each independently represents a hydrogen atom, a halogen atom, a substituted or unsubstituted alkyl group, or a substituted or unsubstituted aromatic group. Of these, preferred is any one of a hydrogen atom, a chlorine atom, a methyl group, a t-butyl group, and a phenyl group. More preferably, it is any one of a hydrogen atom and a chlorine atom.

$R^3$ and $R^4$ each independently represent a hydrogen atom, or a substituted or unsubstituted alkyl group, and at least one of $R^3$ and $R^4$ represents a substituted or unsubstituted alkyl group.

The alkyl group for $R^3$ and $R^4$ is an alkyl group preferably having 1 to 10 carbon atoms, and more preferably 1 to 5 carbon atoms, and it may be any one of a linear chain, a branched, or a cyclic group. Specific examples thereof include a methyl group, an ethyl group, a propyl group, a butyl group, a pentyl group, a hexyl group, an isopropylene group, and an isobutyl group. Preferred examples thereof include a methyl group, an ethyl group, a propyl group, and a pentyl group. It is preferable that none of $R^1$ and $R^2$ is a methyl group.

When the alkyl group has a substituent, preferred examples of the substituent include a halogen atom, an aryl group, a heterocyclic group, a cyano group, a carboxyl group, an alkoxy group, an aryloxy group, an acyloxy group, a carbamoyloxy group, an alkoxycarbonyloxy group, an aryloxycarbonyloxy, an amino group (including an aniline group), an acylamino group, an aminocarbonylamino group, an alkoxycarbonylamino group, an aryloxycarbonylamino group, a sulfamoylamino group, an alkyl group and an arylsulfonylamino group, an alkylthio group, an arylthio group, a heterocyclic thio group, a sulfamoyl group, an alkyl group and an arylsulfinyl group, an alkyl group and arylsulfonyl group, an acyl group, an aryloxycarbonyl group, an alkoxycarbonyl group, a carbamoyl group, an aryl group and a heterocyclic azo group, an imide group, and a combination thereof.

$R^3$ and $R^4$ are preferably a substituent represented by any one of the following formulae (R-l) to (R-4).

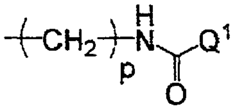 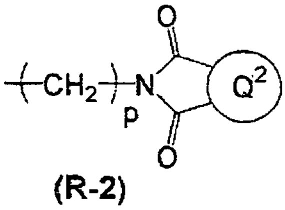 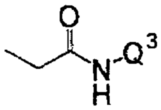 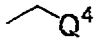

(R-1) (R-2) (R-3) (R-4)

(In the formulas, $Q^1$ represents an alkyl group or an aromatic group; $Q^2$ represents a cyclic aliphatic group or an aromatic group; $Q^3$ represents an alkyl group or an aromatic group; $Q^4$ represents an aromatic group; and P represents an integer.)

In the formula, $Q^1$ is an alkyl group or an aromatic group (including an aryl group). $Q^2$ is a cyclic aliphatic group or an aromatic group (including an aryl group). $Q^3$ is an alkyl group or an aromatic group (including an aryl group). $Q^4$ is an aromatic group (including an aryl group). The alkyl group and the aromatic group are the same as those described above. P is an integer, and preferably 1 to 3.

Hereinafter, specific examples of $R^3$ and $R^4$ are described.

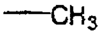 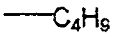 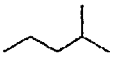 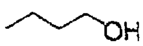 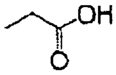 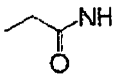

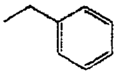 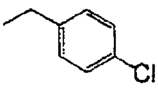 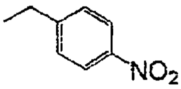 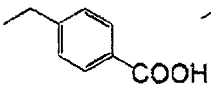 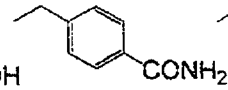 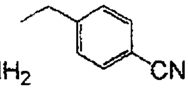

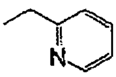 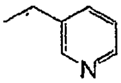 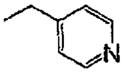 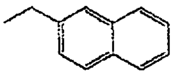

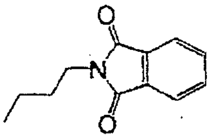 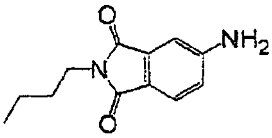 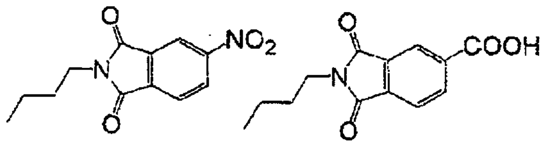

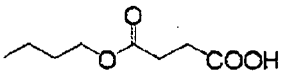 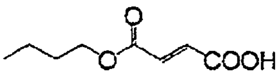 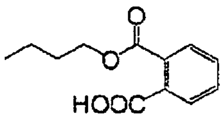 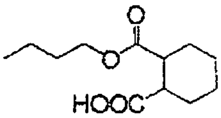

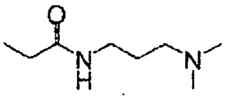 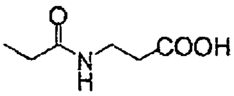 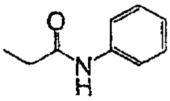 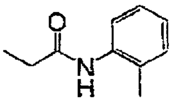 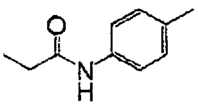

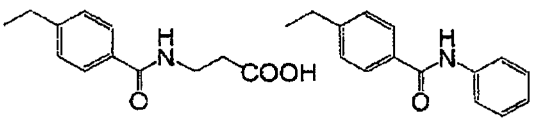 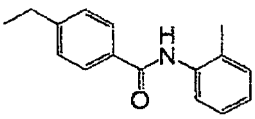 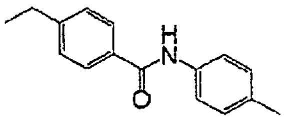

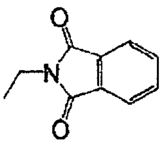 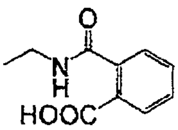 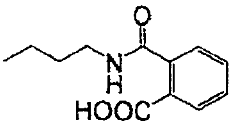 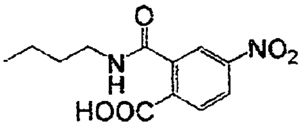

Examples of the pigment derivative compound favorably used as the crystal growth inhibitor are described below, but the present invention is not limited thereto.

S－1

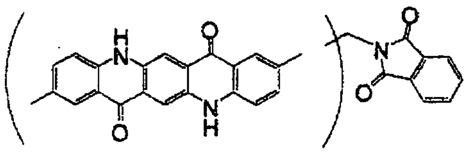

S－2

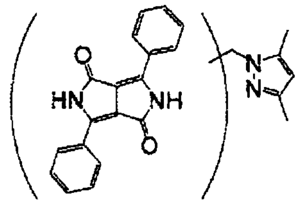

S－3

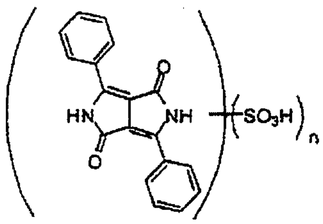

n = 1 or 2

S－4

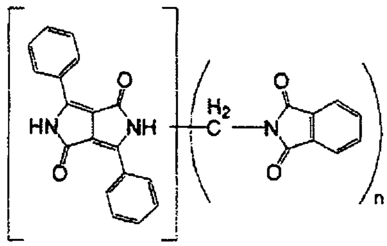

n = 1 or 2

S－5

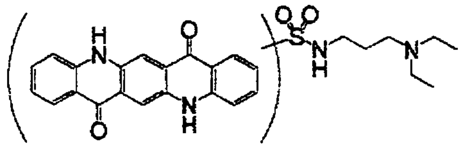

S－6

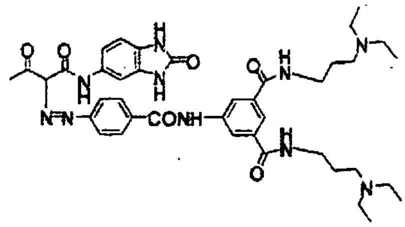

S－7

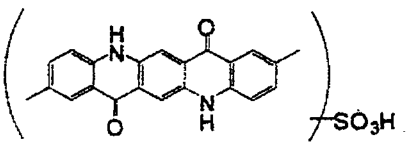

S－8

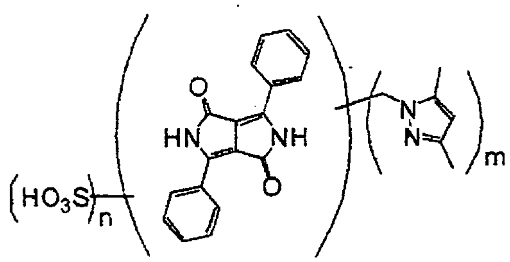

n=0 o r 1
m= 1 or 2

S－9

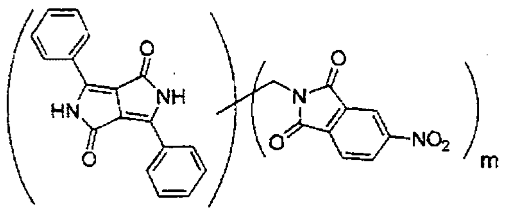

m = 1 or 2

S－1 0

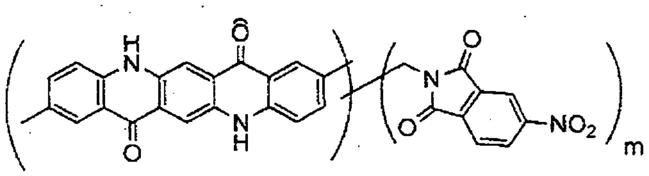

m = 1 or 2

N－1

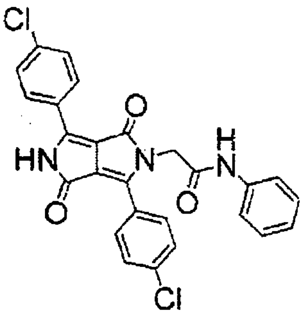

N－2

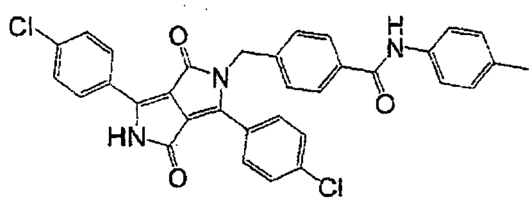

N－3

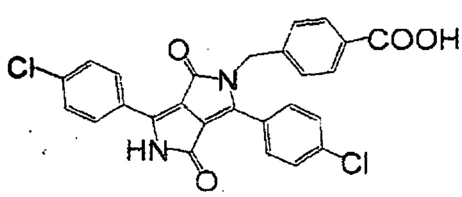

N－4

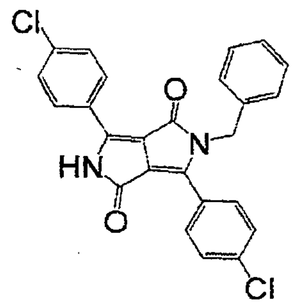

N－5

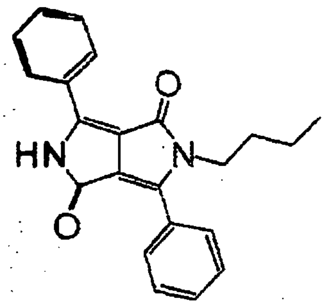

N－6

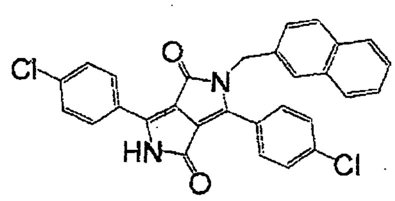

In order to confirm whether or not the crystal growth inhibitor is enclosed within the particles, solid $^{13}C$ CP/MAS NMR measurement (AVANCE DSX-300 spectrometer manufactured by Bruker Bio Spin Company and 4 mmΦ HFX CP/MAS probe) is conducted. Specifically, the solid $^{13}C$ CP/MAS NMR measurement can be performed as described below.

Dispersion of pigment particulates is filtered under suction by using a membrane filter (manufactured by MILLIPORE, cut size: 0.05 μm) to give a concentrated paste, which is then placed on a sample board of a solid $^{13}C$ CP/MAS NMR machine. Based on Goldman-Shen pulse sequence, the measurement is carried out with 4.5 μs of $^{1}H$ 90° pulse width, 200 μs of waiting time for selecting a solvent at initial stage, and 1 ms of CP contact time while varying the spin diffusion time from 0.5 to 200 ms. Accumulation number is 4,096, repeating time is from 3 to 10 seconds so that it can be five times as long as the $^{1}H$ spin-lattice relaxation time of a sample. The revolution number of magic angle spinning is 8,000 to 10,000 Hz for the sample.

According to peak isolation from the spectrum for each spin diffusion time, peak area is calculated for the pigment and dispersing agent. Considering that the diffusion length L has a relationship of $L = 1.1(tm)^{1/2}$ with the diffusion time tm under the presumption of having a first dimension diffusion model, particle structure is determined by plotting the peak area against the distance from a solvent molecule.

[Polymer Compound]

Specific examples of the polymer compound include "Disperbyk-2000 and 2001" (trade names, manufactured by BYK Chemie), and "EFKA 4330 and 4340" (trade names, manufactured by EFKA). Examples of a graft polymer include "trade name: SOL-SPERSE 24000, 28000, 32000, 38500, 39000 and 55000", manufactured by Lubrizol Corp. and "trade name: Disperbyk-161, 171 and 174", manufactured by BYK Chemie. Examples of a terminal-modified polymer include "trade name: SOL-SPERSE 3000, 17000 and 27000", manufactured by Lubrizol Corp.

When a polymer compound is used, the molecular weight is preferably 500 to 200,000, and more preferably 1,000 to 70,000. In the present invention, the molecular weight means a weight average molecular weight, unless specifically described otherwise. In the present specification, the molecular weight and the degree of dispersion are values measured by the following measuring methods.

o Measuring methods for molecular weight and degree of dispersion of polymer compound

The molecular weight and the degree of dispersion are measured using GPC (gel filtration chromatography) method, unless otherwise specified. It is preferred that the gel packed in the column used for the GPC method is a gel having an aromatic compound in the repeating unit, and an example thereof is a gel comprising a styrene/divinylbenzene copolymer. It is preferred to use two to six columns connected together. Examples of the solvent include ether-series solvents such as tetrahydrofuran; and amide-series solvents such as N-methylpyrrolidinone, and preferred is ether-series solvents such as tetrahydrofuran. The measurement is preferably performed at a solvent flow rate of 0.1 to 2 mL/min, and most preferably 0.5 to 1.5 mL/min. When the measurement is conducted within the range, the measurement can be performed more efficiently without imposing too much load to the measuring apparatus. The measurement is preferably performed at a temperature of 10°C to 50°C and, more preferably 20°C to 40°C.

In the following, the specific conditions for the measurement of molecular weight are described.

Apparatus: HLC-8220GPC (trade name, manufactured by Tosoh Corporation)
Detector: Differential refractometer (RI detector)
Precolumn: TSKGUARDCOLUMN MP(XL),
6 mm x 40 mm (manufactured by Tosoh Corporation)
Sample-side column: The following column was used, and two columns were directly connected (all manufactured by Tosoh Corp.).
TSK-GEL Multipore-HXL-M 7.8 mm x 300 mm
Reference-side column: Same as the sample-side column.
Thermostatic bath temperature: 40 °C
Moving bed: Tetrahydrofuran
Flow rate of sample-side moving bed: 1.0 mL/min
Flow rate of reference-side moving bed: 0.3 mL/min
Sample concentration: 0.1 wt%
Amount of sample injected: 100 μL
Data sampling time: 16 to 46 minutes after sample injection
Sampling pitch: 300 msec

Use amount of the particle growth inhibitor in the step [i] is preferably within the range of 1 to 60% by mass, more preferably within the range of 3 to 30% by mass, and still more preferably within the range of 5 to 20% by mass, to the pigment, in order to further improve the desired activity of the dichlorodiketopyrrolopyrrole pigment particulates. The particle size modifier may be used either singly or in combination of two or more.

[Concentration · Solvent removing steps]

In the present embodiment, to remove a solvent, a base, a salt, and others that are unnecessary for the final product, it is preferable to get rid of them from a mixture liquid obtained after precipitating pigment particulates by the step [i]. Although a step for removing the unnecessary components is not particularly limited, examples thereof include a filtering method using a filter or the like, a method of precipitating and concentrating pigment particulates by centrifuge, and a phase separation method to separate a phase containing unnecessary components by adding an extraction solvent so that the pigment can be extracted (so called, flushing method).

For the apparatus for filtering, for example, an apparatus such as filtration under reduced pressure or filtration under pressure can be used. Preferable examples of the filter to be used include filter paper, nano-sized filter, ultrafilter, and the like.

A centrifugal separator may be any device as long as the device can sediment pigment fine particles. Examples of the centrifugal separator include a widely used device, a system having a skimming function (function with which a supernatant layer is sucked during the rotation of the system, to discharge to the outside of the system), and a continuous centrifugal separator for continuously discharging solid matter. As the conditions for centrifugal separation, the centrifugal force (a value representing a ratio of an applied centrifugal acceleration to the gravitational acceleration) is preferably 50 to 10,000, more preferably 100 to 8,000, and particularly preferably 150 to 6,000. The temperature at the time of centrifugal separation is preferably -10°C to 80°C, more preferably -5°C to 70°C, and particularly preferably 0°C to 60°C, though a preferable temperature varies depending on the kind of the solvent of the dispersion liquid.

Furthermore, as the removal step for a solvent fraction, a method of concentrating by subliming the solvent through vacuum freeze-drying, a method of concentrating by drying the solvent under heating or under reduced pressure, a method of combining those methods, and the like can also be used.

In the phase separation method to separate a phase containing unnecessary components by extracting the pigment, the extraction solvent is not specifically limited and any solvent can be used if it can extract the pigment from a mixture liquid obtained after precipitating pigment particulates. As an extraction solvent, since propylene glycol monomethyl acetate can function not only as a solvent for enhancing $\alpha$ type crystallinity degree in the step [ii] of the present embodiment and but also as a dispersion solvent, it is particularly preferable.

In order to remove the unnecessary components from a mixture solution obtained after precipitating pigment particulates, it is preferable that, after carrying out the above treatments, a washing solvent such water and methanol is added and the above treatments are repeated again. Further, the treatment for removing the unnecessary components can be preferably carried out between the step [i] and the step [ii] or after the step [ii] in this embodiment. However, to avoid introduction of a good solvent of the step [i] to the step [ii], it is preferable that the treatment is carried out between the step [i] and the step [ii].

[Production of composition for color filter and production of color filter]

◦ Solvent

When the crystallization treatment is performed in a state in which a good solvent and a poor solvent are included, the good solvent and poor solvent can be removed by using a third solvent. The type of the third solvent is not particularly limited, but is preferably an organic solvent. The solvent is preferably, for example, an ester compound solvent, an alcohol compound solvent, an aromatic compound solvent, or an aliphatic compound solvent. An ester compound solvent, an aromatic compound solvent or an aliphatic compound solvent is more preferred, and an ester compound solvent is particularly preferred. The third solvent may be a pure solvent obtained from a solvent described above, or may be a mixed solvent obtained from a plurality of solvents.

In the present embodiment, the medium of the dispersion composition is not limited to the third solvent described above, but is considered to include a fourth solvent that is described later. Solvents different from any of the good solvent and the poor solvent are collectively referred to as the "third solvent."

Examples of the ester compound solvents include 2-(1-methoxy)propyl acetate, ethyl acetate, and ethyl lactate. Examples of the alcohol compound solvents include methanol, ethanol, n-butanol and isobutanol. Examples of the aromatic compound solvents include benzene, toluene and xylene. Examples of the aliphatic compound solvents include n-hexane and cyclohexane.

Among these solvents, ethyl lactate, ethyl acetate, ethanol, and 2-(1-methoxy)propyl acetate are preferable.

Especially, ethyl lactate and 2-(1-methoxy)propyl acetate are preferable. These may be used singly, or may be used in combination of two or more thereof. The third solvent is not identical with the good solvent or the poor solvent.

The time for adding the third solvent is not particularly limited as long as the addition occurs subsequently to the precipitation of pigment fine particles, but the third solvent may be added to the mixed liquid from which the pigment fine particles have been precipitated; may be added after removing a portion of the solvent fraction of the mixed liquid; or may be added after all of the solvent is eliminated (concentrated).

That is, the third solvent is used as a solvent for substitution, and the solvent fraction formed by the good solvent and the poor solvent in the dispersion liquid from which the pigment fine particles have been precipitated, can be substituted with the third solvent.

Alternatively, the third solvent may be added after the good solvent and the poor solvent are completely removed (concentrated) to take out the organic particles as a pigment particle powder.

Furthermore, in the case of obtaining a pigment-dispersion composition that is described later, a first solvent fraction removal step (first removal) may be conducted, and then the third solvent is added to substitute the solvent. The solvent fraction may be removed by a removal step for a second solvent fraction (second removal), and the residue may be made into a powder. Subsequently, a pigment dispersant and/or a solvent may be added to produce a desired pigment dispersion composition.

Alternatively, the good solvent and the poor solvent can be completely removed (concentrated), the residue is taken out as a pigment particle powder, and then the third solvent and/or a pigment dispersant can be added to produce a desired pigment-dispersion composition.

The addition amount of the third solvent is not particularly limited, but preferably in the range of 100 parts by mass to 300,000 parts by mass, and more preferably from 500 parts by mass to 10,000 parts by mass with respect to 100 parts by mass of the fine particles of water-insoluble colorant.

The pigment fine particles can be used, for example, as dispersed in a vehicle. The vehicle, if paint is taken as an example, means a portion of a medium in which a pigment is dispersed when the paint is in a liquid state. The vehicle is in a liquid state and contains a portion (binder) that bonds to the pigments to solidify a coated film and a component (organic solvent) that dissolves and dilutes the portion.

The concentration of the fine particles in a dispersion composition of the the fine particles after re-dispersion can be properly determined in accordance with a purpose of their use. However, the concentration of the fine particles is preferably in the range from 2 to 30 mass%, more preferably in the range from 4 to 20 mass%, and particularly preferably in the range from 5 to 15 mass%, to the total amount of the dispersion composition. In the case where the fine particles are dispersed in such vehicles as described above, amounts of the binder and the dissolution and dilution component can be properly determined depending on, for example, the kind of the pigment. However, the amount of the binder is preferably in the range from 1 to 30 mass%, more preferably in the range from 3 to 20 mass%, and particularly preferably in the range from 5 to 15 mass%, to the total amount of the dispersion composition. The amount of the dissolution and dilution component is preferably in the range from 5 to 80 mass%, and more preferably in the range of from 10 to 70 mass%, to the total amount of the dispersion composition.

◦ Dispersant

When the pigment fine particles in the present embodiment are redispersed in a third solvent, it is preferable that the pigment fine particles have a property that the aggregated state of the pigment fine particles is spontaneously loosened in the third solvent, and the pigment fine particles are dispersed in the medium even though other dispersants or the like are not added. The pigment fine particles having this property are regarded as "capable of self-dispersing" or "having self-dispersibility." However, in order to further enhance redispersibility in the present embodiment, a pigment dispersant and the like may be added at the time of redispersion of the pigment fine particles. However, in order to further enhance redispersibility in the present embodiment, a pigment dispersant and the like may be added at the time of redispersion of the pigment fine particles. From this point of view, aggregates that are difficult to get re-dispersed and agglomerates that can be re-dispersed may be described with distinct meanings.

Examples of a method that can be employed for redispersing such aggregated fine particles, include a dispersing method with using a supersonic wave and a method involving applying physical energy. Apparatus for ultrasonic wave irradiation is preferably an apparatus that is capable of applying an ultrasonic wave at 10 kHz or more, and examples thereof include an ultrasonic wave homogenizer, an ultrasonic wave cleaning machine, and the like. The liquid temperature during ultrasonic wave irradiation is preferably kept at 1 to 100°C, more preferably 5 to 60°C, since increase in the liquid temperature leads to thermal aggregation of nanoparticles. The temperature can be controlled, for example, by adjusting the temperature of dispersion liquid, by adjusting the temperature of a temperature-controlling layer for controlling of dispersion liquid temperature, or the like.

A dispersion machine to be used at the time of dispersing the pigment nanoparticles by the application of physical energy is not particularly limited, and examples of the dispersion machine include a kneader, a roll mill, an

attritor, a super mill, a dissolver, a homomixer, and a sand mill. Further, a high pressure dispersion method and a dispersion method of using fine particle beads are also exemplified as a preferable method.

The pigment-dispersion composition can have a conventionally known dispersant such as a pigment dispersant or a surfactant added, for the purpose of further enhancing the dispersibility of the pigment, to the extent of not impairing the desired effect.

Examples of the pigment dispersant include a polymer dispersant (for example, a linear polymer, a block polymer, a graft polymer, a terminal-modified polymer, or the like), a surfactant (polyoxyethylene alkyl phosphoric acid ester, polyoxyethylene alkylamine, alkanolamine, or the like), a pigment derivative, and the like. The dispersant acts to be adsorbed by the pigment surface, thereby preventing re-aggregation. Therefore, the preferred structure is that of end-modified polymers, graft polymers, and block polymers having an anchor site for the pigment surface. On the other hand, the pigment derivatives have an effect of promoting the adsorption of the polymer dispersant by modifying the pigment surface.

Specific examples of the block polymer as the polymer compound include "Disperbyk-2000 and 2001" (trade names, manufactured by BYK Chemie), and "EFKA 4330 and 4340" (trade names, manufactured by EFKA). Examples of the graft polymer include "trade name: SOL-SPERSE 24000,28000, 32000, 38500, 39000 and 55000", manufactured by Lubrizol Corp. and "trade name: Disperbyk-161, 171 and 174", manufactured by BYK Chemie. Examples of the terminal-modified polymer include "trade name: SOL-SPERSE 3000, 17000 and 27000", manufactured by Lubrizol Corp.

In the present embodiment, the pigment derivative (hereinafter, also referred to as "pigment derivative type dispersant") is defined as a pigment derivative type dispersant which is derived from an organic pigment as a parent substance and is produced by chemically modifying the parent structure, or as a pigment derivative type dispersant obtained by a pigmentization reaction of a chemically modified pigment precursor. In general, the pigment derivative is also referred to as synergistic dispersant.

Although not particularly limited, for example, those pigment derivatives having an acidic group, pigment derivatives having a basic group, pigment derivatives having a functional group such as a phthalimidemethyl group introduced therein, and the like as described in JP-A-2007-9096, JP-A-7-331182 or the like are suitably used.

Commercially available products of the pigment derivative include "EFKA6745 (phthalocyanine derivative), 6750 (azo pigment derivative)" manufactured by EFKA Chemicals, "Solsperse 5000 (phthalocyanine derivative), 22000 (azo pigment derivative)" manufactured by Lubrizol Corp., and the like (all trade names).

Examples of the linear polymer include alkali-soluble resins which are described below, and it is also preferable to use the linear polymer in combination with the pigment derivative.

The pigment dispersant may be used singly, or may be used in combination of two or more kinds thereof.

A photocurable composition includes a dispersion composition of the pigment fine particles, a photopolymerizable compound, and a photopolymerization initiator (hereinafter, may also be referred to as photopolymerization initiator-series), and preferably, further includes an alkali-soluble resin. Hereinafter, the respective components of the photocurable composition will be explained.

The methods of preparing pigment fine particles and dispersion composition thereof are already described in detail. The content of the fine particles in a photocurable composition is preferably from 3 to 90 mass%, more preferably from 20 to 80 mass%, and still more preferably from 25 to 60 mass%, to the total solids in the photocurable composition (the term "total solids'' used in the present invention refers to summation of all ingredients but the organic solvent in the photocurable composition). When the content is too high, there sometimes occurs an increase in viscosity of the resultant dispersion liquid and leading to a problem in production suitability. When the content is too low, on the other hand, sufficient coloring power cannot be obtained. For the purpose of toning, the pigment fine particles may be used in combination with pigments in common use. As the pigments, those recited hereinbefore as pigments can be used.

◦ Polymerizable Compound

The photopolymerizable compound (herein, also referred to as polymerizable monomer or polymerizable oligomer) is preferably a multifunctional monomer which has two or more ethylenically unsaturated double bonds and which undergoes addition-polymerization by irradiation with light. The photopolymerizable compound may be a compound having at least one addition-polymerizable ethylenically unsaturated group therein and having a boiling point of 100°C or higher at normal pressure. Examples thereof include: a monofunctional acrylate and a monofunctional methacrylate such as polyethylene glycol mono(meth)acrylate, polypropylene glycol mono(meth)acrylate, and phenoxyethyl(meth)acrylate; polyethylene glycol di(meth)acrylate, polypropylene glycol di(meth)acrylate, trimethylolethane triacrylate, trimethylolpropane tri(meth)acrylate, trimethylolpropane diacrylate, neopentyl glycol di(meth)acrylate, pentaerythritol tetra(meth)acrylate, pentaerythritol tri(meth)acrylate, dipentaerythritol hexa(meth)acrylate, dipentaerythritol penta(meth)acrylate, hexanediol di(meth)acrylate, trimethylolpropane tri(acryloyloxypropyl) ether, tri(acryloyloxyethyl)isocyanurate, tri(acryloyloxyethyl)cyanurate, glycerin tri(meth)acrylate; a polyfunctional acrylate or polyfunctional methacrylate which may be obtained by adding ethylene oxide or propylene oxide to a polyfunctional alcohol such as trimethylolpropane or glycerin and converting the adduct into a (meth)acrylate. Further, other preferred examples include those compounds that are obtained by addition reaction of ethylene oxide or propylene oxide to polyfunctional alcohol, followed by (meth)acrylation, as described in formulae (1) and (2) of JP-A-10-62986.

Examples of the monomer and oligomer further include urethane acrylates as described in JP-B-48-41708 ("JP-B" means examined Japanese patent publication), JP-B-50-6034, and JP-A-51-37193; and polyester acrylates as described in JP-A 48-64183, JP-B-49-43191, and JP-B-52-30490; polyfunctional acrylates or polyfunctional methacrylates such as epoxy acrylates which is a reaction product of an epoxy resin and (meth)acrylic acid.

Among these, trimethylolpropane tri(meth)acrylate, pentaerythritol tetra(meth)acrylate, dipentaerythritol hexa(meth)acrylate, and dipentaerythritol penta(meth)acrylate are preferable.

Further, other than the above, "polymerizable compound B" described in JP-A-11-133600 can be mentioned as a preferable example.

These photopolymerizable compounds may be used singly or as a mixture of two or more kinds thereof. The content of the polymerizable composition is usually in a range from 5 mass% to 50 mass%, preferably from 10 mass% to 40 mass%, based on the total solid content in the photocurable composition. If this content is too large, control of development properties becomes difficult, raising problems of production suitability. If the content is too small, a curing force at the time of exposure becomes insufficient.

o Photopolymerization initiator

Examples of the photopolymerization initiator or the photopolymerization initiator series (in the present specification, the term "photo-polymerization initiator series" means a mixture that exhibits a function of photo-polymerization initiation with a plurality of compounds combined with each other) include vicinal polyketaldonyl compounds disclosed in U.S. Patent No. 2,367,660, acyloin ether compounds described in U.S. Patent No. 2,448,828. aromatic acyloin compounds substituted by an $\alpha$-hydrocarbon described in U.S. Patent No. 2,722,512, polynuclear quinone compounds described in U.S. Patent No. 3,046,127 and U.S. Patent No. 2,951,758, combinations of triarylimidazole dimer and p-aminoketone described in U.S. Patent No. 3,549,367, benzothiazole compounds and trihalomethyl-s-triazine compounds described in JP-B-51-48516, trihalomethyl-triazine compounds described in U.S. Patent No. 4.239,850, and trihalomethyloxadiazole compounds described in U.S. Patent No. 4,212,976. In particular, trihalomethyl-s-triazine, trihalomethyloxadiazole, and triarylimidazole dimer are preferable.

In addition, "polymerization initiator C" described in JP-A-11-133600, and oximes such as 1-phenyl-1,2-propanedion-2-(o-ethoxycarbonyl)oxime, O-benzoyl-4'-(benzmercapto)benzoyl-hexyl-ketoxime, 2,4,6-trimethylphenylcarbonyl-diphenylphosphonyloxide, and hexafluorophosphoro-trialkylphenyl phosphonium salts can also be mentioned as preferable examples.

These photopolymerization initiators and photopolymerization initiator series each may be used singly. Alternatively, a mixture of two or more selected from these photopolymerizable initiators and photopolymerization initiator series may be used. In particular, it is preferable to use two or more kinds of photopolymerizable initiators and photopolymerization initiator series. When two or more kinds of photopolymerizable initiators are used, the display property, particularly evenness of display, can be improved. As to the content of the photo-polymerization initiator or the photopolymerization initiator series, the content thereof is usually in the range from 0.5 to 20 mass%, preferably from 1 to 15 mass%, based on the total solid content in the photocurable composition. If the amount of the initiator or the initiator series is too large, exposure sensitivity becomes too high, which causes difficulty in control. If the amount of the initiator or the initiator series is too small, exposure sensitivity may become too low.

o Alkali-Soluble Resin

It is preferable that the alkali-soluble resin may be added during preparation of a photocurable composition or the inkjet ink for color filter, but preferably added during preparation of the pigment fine particle dispersion composition or during formation of the pigment fine particles. The alkali-soluble resin may be preferably added to both or one of the pigment solution and the poor solvent for forming the pigment fine particles by adding the pigment solution thereto. It is also preferable to add an alkali-soluble resin solution, which is independently prepared, at the time of the formation of the pigment fine particles.

As the alkali-soluble resin, a binder having an acidic group is preferable, and an alkali-soluble polymer having a polar group such as a carboxylic acid group or a carboxylic acid salt group on its side chain is preferable. Examples thereof include a methacrylic acid copolymer, an acrylic acid copolymer, an itaconic acid copolymer, a crotonic acid copolymer, a maleic acid copolymer, and a partially esterified maleic acid copolymer described in, for example, JP-A-59-44615, JP-B-54-34327, JP-B-58-12577, JP-B-54-25957, JP-A-59-53836, and JP-A-59-71048. The examples further include a cellulose derivative having a carboxylic acid group, a carboxylate group or the like on its side chain. In addition to the foregoing, a product obtained by adding a cyclic acid anhydride to a polymer having a hydroxyl group can also

be preferably used. In addition, particularly preferable examples of the binder include a copolymer of benzyl (meth)acrylate and (meth)acrylic acid and a multi-component copolymer of benzyl (meth)acrylate, (meth)acrylic acid, and any other monomer described in U.S. Patent No. 4,139,391.

Each of these alkali-soluble resins may be used singly, or may be used in combination with an ordinary film formable polymer so that they are used in a state of a composition. The alkali-soluble resin is added in an amount of usually 10 to 200 parts by mass, and preferably 25 to 100 parts by mass with respect to 100 parts by mass of the pigment fine particles.

Further, for the purpose of improving crosslinking efficiency, a polymerizable group may be included in the side chain of the alkali-soluble resin, and ultraviolet curing resins and thermosetting resins are also useful. Further as the alkali-soluble resin, resins having a water-soluble atomic group at a part of their side chains can be used.

o Photocurable Resin

In the photocurable composition, an organic solvent for photocurable composition preparation (fourth solvent) may be further used in addition to the components described above. Examples of the fourth solvent preferably include, but not particularly limited to, alcohol-series solvents, ketone-series solvents, ether-series solvents, sulfoxide-series solvents, ester-series solvents, amide-series solvents, aromatic hydrocarbon-series solvents, aliphatic hydrocarbon-series solvents, nitrile-series solvents, and mixed solvents thereof. Among these, ketone-series solvents, ether-series solvents, ester-series solvents, aromatic hydrocarbon-series solvents, aliphatic hydrocarbon-series solvents, and mixed solvents thereof are more preferable.

Examples of the ketone-series solvents include methyl ethyl ketone, methyl isobutyl ketone, cyclohexanone and 2-heptanone. Examples of the ether-series solvents include propylene glycol monomethyl ether, and propylene glycol monomethyl ether acetate. Examples of the ester-series solvents include 1,3-butylene glycol diacetate, methyl 3-methoxypropionate, methyl 3-ethoxypropionate, ethyl 3-ethoxypropionate, ethyl cellosolve acetate, ethyl lactate, butyl acetate, ethyl carbitol acetate and butyl carbitol acetate. Examples of the aromatic hydrocarbon-series solvents include toluene and xylene. Examples of the aliphatic hydrocarbon-series solvents include cyclohexane and n-octane.

These solvents may be used singly or in combination of two or more thereof. Further, if necessary, a solvent having a boiling point from 180°C to 250°C may be used. The content of the organic solvent is preferably 10 to 95 mass %, to the total content of the photocurable composition.

It is preferred that the photocurable composition includes a proper surfactant therein. Preferable examples of the surfactant include surfactants disclosed in JP-A-2003-337424 and JP-A-11-133600. The content of the surfactant is preferably 5 mass% or less based on the total amount of the photocurable composition.

It is preferred that the photocurable composition includes a thermal polymerization inhibitor. Examples of the thermal polymerization inhibitor include hydroquinone, hydroquinone monomethyl ether, p-methoxyphenol, di-t-butyl-p-cresol, pyrogallol, t-butylcatechol, benzoquinone, 4,4'-thiobis(3-methyl-6-t-butylphenol), 2,2'-methylenebis(4-methyl-6-t-butylphenol), 2-mercaptobenzimidazole, and phenothiazine. The content of the thermal polymerization inhibitor is preferably 1 mass% or less based on the total amount of the photocurable composition.

If necessary, in addition to the aforementioned coloring agent (pigment), other coloring agents (dyes or pigments) may be added to the photocurable composition. When the coloring agent is a pigment, the pigment is preferably dispersed in the photocurable composition uniformly. Examples of the dye and pigment include the colorants described in paragraph Nos. [0038] to [0040] of JP-A-2005-17716, pigments described in paragraph Nos. [0068] to [0072] of JP-A-2005-361447, and coloring agents described in paragraph Nos. [0080] to [0088] of JP-A-2005-17521. The content of dyes or pigments to be used supplementary is preferably 5 mass% or less based on the total amount of the photocurable composition.

If necessary, the photocurable composition may include an ultraviolet absorber. Examples of the ultraviolet absorber include compounds described in JP-A-5-72724, a salicylate-based ultraviolet absorber, a benzophenone-based ultraviolet absorber, a benzotriazole-based ultraviolet absorber, a cyanoacrylate-based ultraviolet absorber, a nickel-chelate-based ultraviolet absorber, and a hindered-amine-based ultraviolet absorber. The content of the ultraviolet absorber is preferably 5 mass% or less, based on the total amount of the photocurable composition.

In addition to the aforementioned additives, the photocurable composition may further include an "adhesion auxiliary" described in JP-A-11-133600 and other additives.

◦ Inkjet Ink

The photocurable composition can be prepared into an inkjet ink by appropriately adjusting the composition. The inkjet ink may be a conventional inkjet ink for color filter as well as printing or the like, but among them, it is preferable to prepare an inkjet ink for color filter.

It is not particularly limited as long as the inkjet ink includes the pigment fine particles previously mentioned. The inkjet ink contains the previously mentioned pigment fine particles in a medium containing a polymerizable monomer

and/or a polymerizable oligomer. Herein, as the polymerizable monomer and/or polymerizable oligomer, those described previously for the photocurable composition can be used.

In the photocurable composition, it is preferred to control the temperature of the ink so that a deviation of viscosity of the ink would be within ±5%. The viscosity at the time of injection is preferably from 5 to 25 mPa·s, more preferably from 8 to 22 mPa·s, and especially preferably from 10 to 20 mPa·s (the viscosity used in the present specification is a value at 25°C, unless specifically indicated otherwise). In addition to setting of the above-described injection temperature, the viscosity may be adjusted by controlling the kind of components to be contained in the ink and the amount thereof. The viscosity may be measured using ordinary equipments such as a cone-and-plate-system rotational viscometer and an E type viscometer.

It is preferred that the surface tension of the ink at the time of injection be from 15 to 40 mN/m, from the viewpoint of improvement in smoothness (flatness) of the pixel (surface tension used in the present specification is a value at 23°C unless specifically indicated otherwise). The surface tension is more preferably from 20 to 35 mN/m, and most preferably from 25 to 30 mN/m. The surface tension may be adjusted by adding surfactants and selecting the kind of solvent to be used. The surface tension may be measured according to a platinum plate method using measuring equipments such as a surface tension-measuring device (CBVP-Z, manufactured by Kyowa Interface Science Co., Ltd.) and a full automatic balancing type electro surface tensiometer ESB-V (manufactured by Kyowa Science).

As a method of spraying the inkjet ink for the color filter, it is possible to employ any of various methods such as a method of continuously spraying an electrified ink and then controlling the ink by electric field, a method of intermittently spraying an ink using a piezoelectric element, and a method of intermittently spraying an ink with utilizing bubbles generated by heating the ink.

As to the inkjet method used for forming each pixel (image element), any of ordinary methods such as a method of thermally curing an ink, a photo-curing method, and a method of previously forming a transparent image-receiving layer on a substrate, followed by stroke of ink droplets.

As an inkjet head (hereinafter sometimes simply referred to as a head), ordinary heads, such as continuous type heads and dot-on-demand type heads can be used. Of these dot-on-demand-type heads, preferred as thermal heads are those of the type having a movable bulb for discharge as described in JP-A-9-323420. As the piezo head, use can be made of heads described in, for example, EP 277,703A and EP 278,590A. It is preferred that the head has a temperature control function so that the temperature of the ink can be managed. Specifically, it is preferred to set an injection temperature so that the viscosity at the time of injection would be within the range of from 5 to 25 mPa·s and to control the temperature of the ink so that the deviation of the viscosity would be within ±5%. It is preferred that the head operates with a drive frequency in the range from 1 to 500 kHz.

After forming each pixel, it is possible to set a heat step in which a thermal processing (a so-called bake processing) is performed. In the heat step, a substrate having thereon a layer photo-polymerized by light irradiation is heated in a heating machine such as an electric furnace and a drying oven, or alternatively said substrate is irradiated using an infrared lamp. The temperature and time required for heating depend on a composition of the colored photosensitive composition and the thickness of the formed layer. Usually, it is preferred to heat at a temperature from approximately 120°C to approximately 250°C for a time ranging from approximately 10 minutes to approximately 120 minutes, from such the viewpoints of attaining sufficient solvent resistance, alkali resistance, and ultraviolet absorbance.

The pattern shape of the thus-formed color filter is not particularly limited. Accordingly, it may be a stripe shape, which is a usual black matrix shape, or a lattice shape, or a delta configuration shape.

It is preferred to use a preparation method in which a barrier rib is formed prior to the image element-forming step using an inkjet ink for color filter, and then the ink is supplied to a portion surrounded with the barrier rib. The barrier rib is not particularly limited. However, in the case where a color filter is formed, it is preferred to use a barrier rib having a black matrix function and a light shielding effect (hereinafter, such the barrier rib is simply referred to as "barrier rib"). The barrier rib may be prepared by the same materials and according to the same method as ordinary black matrixes for color filter. Examples of the black matrix include those described in paragraph Nos. [0021] to [0074] of JP-A-2005-3861 and paragraph Nos. [0012] to [0021] of JP-A-2004-240039, and black matrixes for inkjet described in paragraph Nos. [0015] to [0020] of JP-A-2006-17980 and paragraph Nos. [0009] to [0044] of JP-A-2006-10875.

o Coating Film

The components contained in a coating film prepared by the photocurable composition are the same as those described above. The thickness of the coating film formed by using the photocurable composition may be properly determined, depending on the use thereof. However, the thickness is preferably in the range from 0.5 μm to 5.0 μm, and more preferably from 1.0 μm to 3.0 μm. In the coating film formed by using the photocurable composition, a polymerized coating of the photocurable composition may be formed by polymerizing the above-described monomer or oligomer incorporated in the composition, thereby to prepare a color filter having the thus-formed polymerized coating. (A preparation of the color filter is described below.) Polymerization of the photopolymerizable compound may be performed by causing the photo-polymerization initiator or photo-polymerization initiator series to act by irradiation of light.

The aforementioned coating film can be formed by coating the photocurable composition by a usual coating method, followed by drying. In the present embodiment, it is preferred that the colored photosensitive resin composition be coated by using a slit nozzle having a slit at a portion through which the coating liquid is discharged. Specifically, slit nozzles and slit coaters described in JP-A-2004-89851, JP-A-2004-17043, JP-A-2003-170098, JP-A-2003-164787, JP-A-2003-10767, JP-A-2002-79163, and JP-A-2001-310147 are preferably used.

As a method of coating the photocurable composition on a substrate, a spin coating is excellent in such the point that a thin film of 1 μm to 3 μm can be uniformly coated with high precision. Therefore, the spin coating can be widely and generally used for preparation of color filters. In recent yeas, however, it is required to further improve production efficiency and production cost in accordance with inclination to large-sized liquid crystal display devices and mass production thereof. Therefore, the slit coating, which is more suited for coating on a wide and large area substrate than the spin coating, has been adopted in production of color filters. Besides, the slit coating is superior to the spin coating from the viewpoint of saving of liquid to be used; and the slit coating can obtain a uniform coating from a lesser coating amount.

The slit coating is a coating method characterized by the steps of using a coating head having a slit (gap) of a width of several ten microns at a tip and having a length corresponding to the coating width of a rectangular substrate, and moving the substrate and/or the coating head at a definite relative speed, while maintaining a clearance (gap) between the substrate and the coating head at a distance of from several ten microns to several hundred microns, and coating on the substrate a coating liquid fed from the slit in a predetermined discharge amount. The slit coating has such advantages as follows: (1) a liquid loss is less than a spin coating; (2) a workload at the time of conducting a wash processing is reduced because no coating liquid would be spattered; (3) no contamination (re-inclusion) owing to the spattered liquid component to a coating film would be caused; (4) a tact time is shortened because no dwell time to start up spinning is necessary; (5) it easily coats a large-sized substrate; and the like. From these advantages, the slit coating is suitable to production of a color filter for a large-sized-screen liquid crystal display device, and the slit coating has been expected as a coating method that is also useful for reduction in a coating amount of the liquid.

The coating operation in the production method above may be carried out, for example, with a common coating apparatus. However, it is preferably performed with a coating apparatus (slit coater) having a slit nozzle, as explained in the previous. Preferable examples of the slit coater are as described above.

o Color Filter

It is preferable that the color filter is excellent in contrast. In the present specification, the term "contrast" means a value measured by the method employed in the following examples, unless specifically described otherwise. The color filter having a high contrast enables enlarging a discrimination of brightness at the time when the color filter is combined with a liquid crystal. Therefore, the high contrast is a very important performance in enhancing replacement of CRTs by liquid crystal display devices.

In the case where the color filter is used as a color filter for a television monitor, the difference (ΔE) between the chromaticity of the red (R) photosensitive resin layer measured under a F10 light source and the target chromaticity for red shown in the following table, the difference (ΔE) between the chromaticity of the green (G) photosensitive resin layer measured under a F10 light source and the target chromaticity for green shown in the following table, the difference (ΔE) between the chromaticity of the blue (B) photosensitive resin layer measured under a F10 light source and the target chromaticity for blue shown in the following table, are each preferably 5 or less, more preferably 3 or less, still more preferably 2 or less.

| | x | y | Y |
|---|---|---|---|
| R | 0.656 | 0.336 | 21.4 |
| G | 0.293 | 0.634 | 52.1 |
| B | 0.146 | 0.088 | 6.90 |

Herein, the chromaticity in the present invention is measured by a microscopic spectrophotometer (OSP100 or 200, manufactured by Olympus Optics) and expressed in terms of xyY values of the xyz color system obtained by calculation as a result under an F10-light source at 2-degree viewing angle. In addition, the difference from the target chromaticity is expressed in terms of a color difference of a La*b* color system.

A liquid crystal display device equipped with the color filter has high contrast and excellent definition such as black depth, and particularly, the liquid crystal display device is preferably of V A mode. The liquid crystal display device can be suitably used also as a large screen liquid crystal display device such as a display for a notebook computer and

a television monitor. The color filter can be used in CCD devices, and exhibits excellent performance.

[Second embodiment]

Hereinafter, another preferred embodiment of the present invention (i.e., second embodiment) is described. However, the present invention should not be construed as limited to the embodiment. The point common to the first embodiment may not be described, but some of them may be explained again.

In this embodiment, the p-dichlorodiketopyrrolopyrrole pigment (see, the following formula (I)) has the crystallite size of 9 nm or less and preferably 6 or more, and more preferably 7 to 8.5 nm as determined in the direction perpendicular to the (-151) crystal face from a X ray diffraction pattern. In this embodiment, the method of obtaining the crystallite size as determined in the direction perpendicular to the (-151) crystal face from a X ray diffraction pattern is carried out according to the condition and order described in the following examples, unless otherwise specified. By having the crystallite size the same or less than the upper limit described above, particles with small primary particle diameter can be obtained. Further, a dispersion liquid with high contrast can be produced by dispersing them. On the other hand, by having the crystallite size the same or greater than the lower limit described above, heat resist can be maintained when a dispersion liquid and a color resist are produced by using the pigment.

Formula ( I )

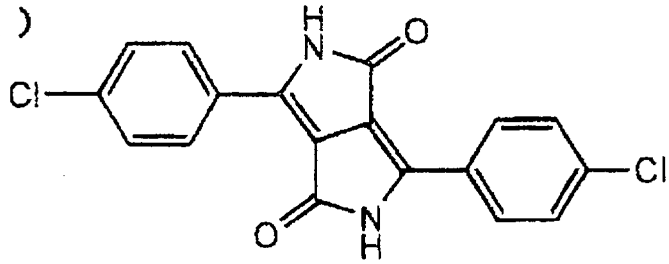

In the present embodiment, the α type crystallinity degree of the p-dichlorodiketopyrrolopyrrole pigment is not specifically limited, if it is 60% or more. Preferably, it is 65 to 82%. More preferably, it is 70 to 80%. By having the α type crystallinity degree the same or less than the upper limit described above, it is possible to inhibit the crystal growth and that a color filter having high contrast can be provided. On the other hand, by having the α type crystallinity degree the same or more than the lower limit described above, α type crystalline property can be exhibited and a desired color can be obtained. As for the crystal transformation form of the p-dichlorodiketopyrrolopyrrole pigment, e.g., α type crystal transformation form, JP-A-58-210084 can be referenced. For the β type crystal transformation form, JP-A-8-48908 can be referenced. Crystal transformation of the obtained dichlorodiketopyrrolopyrrole pigment particulates can be identified by a powder X ray diffraction measurement using CuKα ray. In the present embodiment, the α type crystallinity degree is determined by the method described in the examples.

The p-dichlorodiketopyrrolopyrrole pigment of this embodiment is prepared as particulates having the above-described specific crystallite size and the above-described specific α type crystallinity degree by re-precipitation method, and as a result, by using the pigments, a color filter having both "heat resistance" and "high contrast", that are usually difficult to achieve as being incompatible with each other, can be provided. Further, improvement of "red color" and "stability over time" is also achieved. The reason remains unclear. However, the reason is thought that since the particulates obtained by the re-precipitation method has a sharp particle distribution, only minor Ostwald ripening occurs even after α crystallization and the α crystallization is promoted still in a state of monodispersed particles.

[α Type crystallization process]

(a) Wet grinding using beads mill

In an embodiment of the present embodiment, it is preferable that the pigment particulates obtained by the reprecipitation method described below are crystallized by wet grinding using a grinding agent to obtain a targeted α type crystallinity degree. Specifically, for example, it is a step of pulverizing the particles in a liquid phase composition containing water-soluble inorganic salts, a wetting agent, and an organic solvent. In the present embodiment, examples of a material that can be used as a grinding agent include water-soluble inorganic salts such as sodium chloride, potassium chloride, calcium chloride, barium chloride, and sodium sulfate, ceramic beads such as zirconia beads and titania beads, glass beads, and steel beads. A large amount of the grinding agent leads to a high grinding effect. However, usually it is preferably 0.5 to 50 times as large as the dichlorodiketopyrrolopyrrole pigment in terms of mass. From the viewpoint of productivity and economic efficiency, it is preferably 1 to 20 times as large as the pigment, in terms of mass.

The wetting agent, that can be used in the present embodiment, includes those described below as a crystallization solvent. It is preferable to use a solvent with high boiling point. More preferably, it is 1-butanol, ethylene glycol, diethylene glycol, triethylene glycol, propylene glycol monomethyl ether, ethyl lactate, or propylene glycol monomethyl ether acetate.
As for the wet grinding using a grinding agent described above, JP-A-2008-24873 or the like may be referenced, for example.

(b) Crystallization based on contact with organic solvent

As another embodiment of the present embodiment, there is a method of crystallizing the pigment particulates, obtained by the re-precipitation method described below, by contacting them with an organic solvent thereby to obtain a desired $\alpha$ type crystal. In this regard, as explained below, it is preferable to use pigment particulates in which at least 10% by mass of the dispersing agent included in the solvent are buried within the particulates, by mixing the good solvent and poor solvent after adding the dispersing agent to the good solvent and/or poor solvent used in the re-precipitation method, or by preparing separately a solution in which the dispersing agent is included in the good solvent and mixing the resulting solution with the above solution containing both solvents.
Examples of the crystallization solvent include an alcohol compound solvent such as methanol and 1-butanol, an ester compound solvent such as ethyl acetate, ethyl lactate, and propylene glycol monomethyl ether acetate, a ketone compound solvent such as acetone and methyl ethyl ketone, a nitrile compound solvent, an ether compound solvent, and an organic base solvent. It may be used either singly or a mixture with water or a mixture thereof. Of these, an alcohol compound solvent and an ester compound solvent are preferable. Methanol, 2-butanol, diethylene glycol, and propylene glycol monomethyl ether acetate are more preferable.
The coloring composition of this embodiment contains the p-dichlorodiketopyrrolopyrrole pigment which has the specific crystallite size and the specific $\alpha$ type crystallinity degree as described above. It is preferable that the p-dichlorodiketopyrrolopyrrole pigment is contained as particulates with a nanometer size. Its concentration is not particularly limited. However, it is preferably 2 to 30% by mass, and more preferably 8 to 16% by mass.

[Pigment particulates]

Definition of the particle diameter of particulates and preferred range of the average particle diameter and monodispersity are the same as those described above in the first embodiment.

[Re-precipitation method]

In the present embodiment, order, condition, and the like for the re-precipitation method are the same as those described above in the first embodiment. The crystal growth inhibitor explained above may be also used.

[Enclosing of dispersing agent]

It is preferable that, when the p-dichlorodiketopyrrolopyrrole pigment of the present embodiment is particulates, a dispersing agent is buried in the particulates. Herein, the term "being buried" indicates a state in which part or all of the molecules of a dispersing agent are incorporated within the particulates. For example, when explained based on FIG. 1, a state in which all of the dispersing agent is incorporated means that the entire molecule of the added dispersing agent is enclosed within the particulate 10 (see, internally buried dispersing agent 2b), and a state in which part of the agent is incorporated means that a portion or a functional group of the dispersing agent added is incorporated within the particles while the remainings are extended outside the particles (see, externally buried dispersing agent 2a), and the term "being buried" include both cases.
The particulates of the present embodiment can be schematically explained with the drawing of FIG. 5, in which a specific dispersing agent 2 as a dispersion phase is buried in a pigment 1, which is a continuous phase. However, other components may be also included in or attached to the particulates. As a buried dispersing agent 2, internally buried dispersing agent 2b in which the entire molecule is incorporated and an externally buried dispersing agent 2a in which the part of the agent is present outside the particle are shown.
It is preferable that the externally extended part 2o of the externally buried dispersing agent 2a is contiguous to an internal part 2i so as to have a sterically repulsive part in the externally extended part 2o, while the internal part 2i has a part showing an interaction for attracting a water-insoluble coloring material. Preferred molecular structure and design of a dispersing agent forming such buried state are as described above.
When the crystallization state of the particulates of the present embodiment is shown schematically, a crystallized part ($\alpha$ type crystal part) 1b and a non-crystallized part (non-$\alpha$ type crystal part) 1a co-exist in pigment 1 which

constitutes a continuous phase of a crystal, like the particulate 10 of FIG. 5. The $\alpha$ type crystal part 1b may be present locally at plural positions as illustrated or may be concentrated at single position. The shape of the crystallized part 1b is not specifically limited. Needless to say, its cross-section is not necessary to have a round shape as illustrated. Herein, the non-$\alpha$ type crystal part indicates a part which is not in $\alpha$ type crystal transformation form. Instead, it may be amorphous or in $\beta$ type crystal transformation form.

The particulates of the present embodiment are preferably build-up particulates that are obtained by dissolving a pigment in a good solvent together or separately with addition of a specific dispersing agent in at least one of a good solvent and a poor solvent and mixing the liquid of the good solvent with the liquid of the poor solvent so that the dispersing agent is buried in the particles. The dispersing agent is preferably a polymer dispersing agent having a mass average molecular weight of 1,000 or more. The polymer dispersing agent having a specific structural part as shown below is more preferable.

The pigment particulates of the present embodiment is preferably produced under the presence of the dispersing agent, and regarding the mixing of a solution containing the pigment dissolved in a good solvent with a poor solvent, they are preferably build-up particulates that are obtained by (i) adding the dispersing agent in a good solvent and/or a poor solvent followed by mixing, or (ii) preparing separately a solution in which the dispersing agent is dissolved in the good solvent, and mixing the resulting solution with the above solution containing both solvents.

Solubility of an embedding dispersing agent to a good solvent is preferably 4.0% by mass or more, and more preferably 10.0% by mass or more. Although the upper limit of the solubility is not specifically limited, the solubility is practically 70% by mass or less considering a polymer compound which is commonly used. The solubility of the embedding dispersing agent to a poor solvent is preferably 0.02% by mass or less, and more preferably 0.01% by mass or less.

In the present embodiment, the dispersing agent which is partly or completely incorporated within the particle is, for example, not physically adsorbed on particle surface as it has been before. Instead, the dispersing agent is immobilized and irreversibly incorporated in the particle. Thus, there is a character that the dispersing agent is basically not eluted or released into a dispersion medium and/or a solvent for composition, unless the particulate is disrupted or dissolved. For such reasons, the particulates, in which a dispersing agent is buried, have a highly extended dispersing effect for inhibiting aggregation among the particles and extremely high dispersion stability even when only a small amount of a dispersing agent is used. The property of the particulates, in which a dispersing agent is buried, is for example that the dispersing agent is not realest even after repeated washing with a solvent that can dissolve the agent. It is confirmed by measuring the amount of the agent.

Method of efficiently embedding the dispersing agent in the particles is not specifically limited. It can be carried out by, for example, by using a specifically selected dispersing agent or by controlling a condition for a process such as a flow channel mixing method. Hereinafter, a preferable embodiment of embedding the dispersing agent in the particles is explained in detail.

In order to embedding the dispersing agent in the particles by a usual reprecipitation method, a specific dispersing agent is preferably used. However, when the entire molecule of a dispersing agent is buried in the particles so that all functional groups required for dispersion are also buried in the particles, an effect of imparting dispersibility by the dispersing agent may be not be obtained at sufficient level. Therefore, it is preferable that not all of the functional groups required for dispersion are buried in the particle. In order to provide dispersion stability by suitably embedding a dispersing agent in the particulates, it is preferable to use a dispersing agent which satisfies the following requirements:

(1) a medium capable of dissolving the dispersing agent has compatibility with a medium capable of dissolving a pigment which may be used in combination;
(2) the dispersing agent is a polymer dispersing agent having weight average molecular weight of 1,000 or more;
(3) the dispersing agent is precipitated by mixing with a poor solvent, but the precipitation rate of the dispersing agent is slower than that of pigment precipitation; and
(4) the dispersing agent contains at lest one functional group which has an interacting activity with a pigment.

It is preferable that the dispersing agent satisfies the above requirements and the dispersing agent can be efficiently and appropriately buried in the particles.

The buried dispersing agent that is used in this embodiment is preferably dissolved in a good solvent for dissolving the pigment, or a good solvent or a poor solvent that are separately prepared. Preferred embodiment for dissolving and mixing the dispersing agent includes the following methods.

(1) A dispersing agent is co-dissolved with a pigment in a good solvent and brought into contact with a poor solvent for precipitation
(2) A pigment solution and a dispersing agent solution are separately prepared and brought into contact with a poor solvent for precipitation
(3) A pigment solution and a solution of a dispersing agent dissolved in poor solvent are brought into contact with

each other for precipitation.

The particulates of the present embodiment may be produced according to any method described above. However, it is preferable that the dispersing agent solution has compatibility with the pigment solution. When the dispersing agent solution has no compatibility with the pigment solution, the dispersing agent may not be sufficiently buried within the particle by mixing with a poor solvent. Among the methods above, the method (1) and (2) are preferably used.

In the present embodiment, to incorporate the dispersing agent within the particles, the dispersing agent is a polymer dispersing agent having mass average molecular weight of preferably 1,000 or more, more preferably 3,000 to 300,000, and particularly preferably 5,000 to 100,000. When the molecular weight of the dispersing agent is too low, the incorporation ratio into the particles may be lowered. On the other hand, when the molecular weight of the dispersing agent is too high, aggregation among the dispersing agents may be increased to impair the re-dispersity. It is preferable that the dispersing agent having a narrow range of dispertsing degree, i.e., monodispersity is used. The dispersion degree of the dispersing agent is expressed as a ratio between number average molecular weight and mass average molecular weight. A dispersing agent with dispersity in the range of 1.0 to 5.0 is preferable. A dispersing agent with dispersity in the range of 1.0 to 4.0 is particularly preferable.

The dispersing agent to be buried within the particulate (hereinafter, it may be described as a "buried dispersing agent" to distinguish from a simple dispersing agent) as used in the present embodiment is preferably dissolved in advance in a good solvent, and precipitated by mixing with a poor solvent. In such case, it is preferable that the pigment is also dissolved in a good solvent, and precipitated to yield particulates by making the good solution being contact with a poor solvent. Regarding this precipitation behavior of a molecule for forming particulates, if the precipitation rate of a dispersing agent is significantly higher (faster) than that of a pigment, the dispersing agent may precipitate before sufficiently incorporated within the particles. Thus, it would be difficult for the dispersing agent to be buried within the particles. Thus, to obtain sufficient incorporation of the dispersing agent within the particle, the precipitation rate of a dispersing agent is preferably slower than that of a pigment. Further, by controlling the precipitation rate of a buried dispersing agent like this, if necessary, the incorporation state of the dispersing agent within the particulate can be controlled. From the viewpoint of carrying out precipitation to form a co-crystal, the precipitation rate of the buried dispersing agent is preferably slower than that of a pigment. The preferable rate of the buried dispersing agent may vary depending on type of a pigment, affinity between a pigment and a dispersing agent, precipitation rate of a pigment, structure of a dispersing agent, and solvent affinity between a good solvent and a poor solvent. Preferably, ratio between the precipitation rate of the pigment and the dispersing agent is determined in view of conditions for forming each particle.

Then, a structure and an activity of a dispersing agent that are preferred for incorporating a buried dispersing agent within a particle and also preventing release of the buried dispersing agent to a dispersion medium or a composition medium are described.

In order to suitably incorporate the buried dispersing agent within a particle, the chemical structure of the buried dispersing agent is designed such that the dispersing agent and a pigment have an interaction of attracting each other when they are precipitated after mixing. In the present embodiment, it is preferable that the buried dispersing agent and the pigment are mixed with each other in a state that they are dissolved in a solvent. However, when the interaction between the dispersing agent and pigment is weak, the incorporation ratio of the dispersing agent to the particle may become excessively low, the buried dispersing agent may be easily released into a dispersion medium or a composition medium, or the dispersion stability is deteriorated. For such reasons, it is preferable to use a buried dispersing agent which has a structural moiety having a strong attracting interaction with the pigment. It is also preferable that, by strengthening such interaction, the dispersing agent is strongly immobilized in the particle.

With respect to the particulates of the present embodiment, at least 10% by mass of a buried dispersing agent that is added to a system for producing particulates are buried in the particulates. That is, the percentage ratio of the mass of dispersing agent (B) incorporated and buried in the particle compared to the mass of a buried dispersing agent (A) added to the particles, i.e., ({B)/(A) × 100) (hereinafter, it may be referred to as "incorporation ratio of dispersing agent"), is preferably 10% by mass or more. When the incorporation ratio of dispersing agent is too low, early dispersity or dispersion stability may become insufficient. Further, the incorporation ratio of dispersing agent ((B)/(A)) is more preferably 20% by mass or more, and particularly preferably 30% by mass or more. The upper limit of the incorporation ratio of dispersing agent is not specifically limited. However, from the practical point of view, the calculated upper limit is 100% by mass, and preferably 98% or less.

Considering that the particulates containing a continuous phase including a pigment and a dispersion phase including a buried dispersing agent, the amount of the incorporated buried dispersing agent is, in terms of ratio compared to the mass of the components of the particulates other than the dispersing agent, i.e., percentage ratio of the mass (X) of the buried dispersing agent forming the dispersion phase compared to the mass (Y) of the continuous phase of the particulates ((X)/(Y)× 100, hereinafter, it may be referred to as "dispersing agent buried ratio"), preferably 5 to 200% by mass, and more preferably 8 to 160% by mass.

The preferable interaction of attracting a pigment by a buried dispersing agent or its structural part means an

interaction based on adsorption or attraction between the molecules or structural parts. Specific examples thereof include a hydrogen bonding interaction, a π-π interaction, an ionic interaction, a dipole-dipole interaction, a London dispersion force (i.e., van der Waals force), and an electron transfer interaction. In addition to them, a hydrophobic interaction based on thermodynamic factors is also included. The attracting interaction between a pigment and a buried dispersing agent or its structural part is not limited and any interaction described above can be utilized. However, a hydrogen bonding interaction, a π-π interaction, and an ionic interaction are particularly effective. Therefore, as a structural part of the buried dispersing agent, it is preferable to introduce a part strongly showing such interaction, and as a result, it becomes easier to have the dispersing agent suitably incorporated and buried within the particles.

Embodiment of the hydrogen bonding interaction, π-π interaction, and ionic interaction are exemplified below, and molecular structure and design of a dispersing agent for providing such interactions are also described.

Hydrogen bonding interaction occurs in a molecule in which hydrogens are bonded to an atom having high electronegativity such as fluorine, oxygen, and nitrogen, and a polar molecule is yielded as a result of hydrogen bonding. In this case, the hydrogen atom is positively charged at less than 1 to cause an interaction to adsorb other negatively charged atom such oxygen which is contained in other neighboring molecules. As a result, a stable bond to link two molecules is generated. For example, when a dispersing agent having a functional group which easily shows the interaction via a hydrogen bond with a pigment is used, the incorporation ratio of the dispersing agent into particulates can be increased.

The π-π interaction is a dispersion force existing between aromatic ring of an organic compound molecule, and it is also called a "stacking interaction." For example, an aromatic compound has a stiff planar structure and has abundant delocalized electrons based on a π electron system, in particular London dispersion is strongly exhibited. Thus, the interaction force increases as the number of π electron increases. Thus, for example, by using a dispersing agent having a functional group which easily allows a π- π interaction with a pigment, the incorporation ratio of the dispersing agent into particulates can be increased.

The ionic interaction is an interaction which occurs among charged ions. For example, since opposite charges are attracted to each other, if the molecule of a dispersing agent is designed to have a charge opposite to that of a water-insoluble subject substance in a dispersion medium, attracting interaction between the dispersing agent and a pigment is strengthened so that the incorporation ratio of the dispersing agent into particulates can be increased.

In the present embodiment, it is preferable that the dispersing agent molecule is designed to exhibit multiple interactions described above between a buried dispersing agent and a pigment. Regarding the preferred molecular structure of the dispersing agent, although it may vary depending on a pigment as a target, for example, a polymer compound having a heterocyclic moiety can be preferably used to give a hydrogen bonding interaction if the pigment is an organic pigment. In particular, a polymer compound having a nitrogen-containing heterocyclic moiety is preferable. Further, to have π-π interaction or hydrophobic interaction, a dispersing agent having an aromatic ring as a partial structure is preferable. In addition, an agent having both a heterocycle and an aromatic ring in the same molecular skeleton is particularly preferable.

Specific examples of the structure of the heterocyclic moiety of the preferable dispersing agent used in the present embodiment include an organic dye structure such as moieties (I-1) to (I-29), phthalocyanine-based, insoluble azo dye, azo dye lake-based, anthraquinone-based, quinacridone-based, dioxazine-based, diketopyrrolopyrrole-based, anthrapyridine-based, anthanthrone-based, indanthrone-based, flavanthrone-based, perinon-based, perylene-based, and thioindigo-based pigment described below, but not limited thereto. A unit having such moiety is preferably used in the range of 1.0 to 99.0 mol%, more preferably 3.0 to 95.0 mol%, and particularly preferably 5.0 to 90.0 mol% in the whole units which constitute a polymer compound.

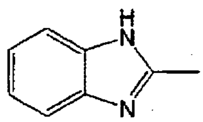
(I-1)

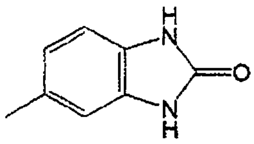
(I-2)

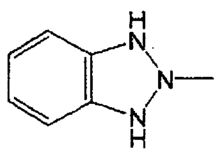
(I-3)

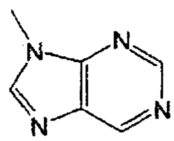
(I-4)

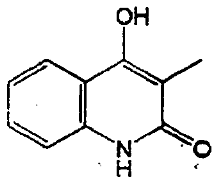

(I -5)

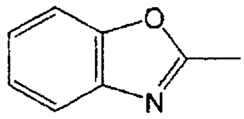

(I -6)

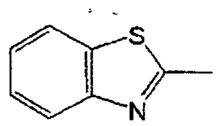

(I -7)

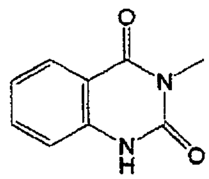

(I -8)

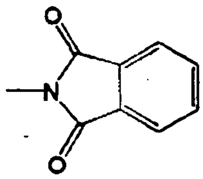

(I -9)

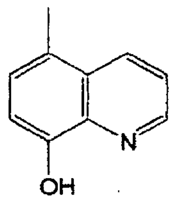

(I -10)

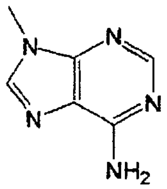

(I -11)

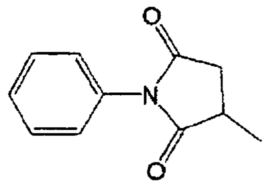

(I -12)

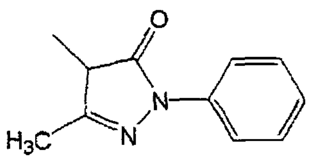

(I -13)

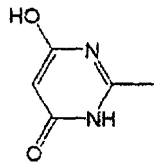

(I -14)

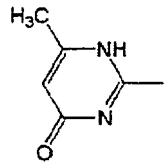

(I -15)

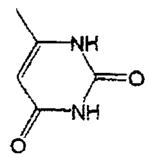

(I -16)

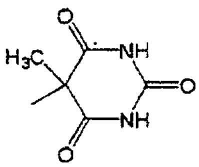

(I -17)

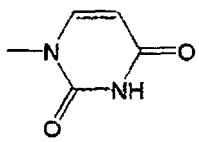

(I -18)

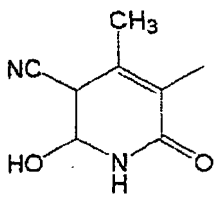

(I -19)

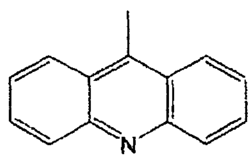

(I -20)

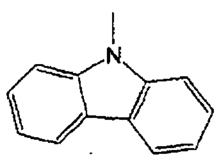

(I -21)

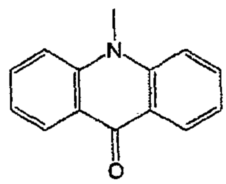

(I -22)

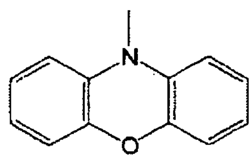

(I -23)

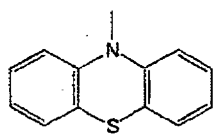

(I -24)

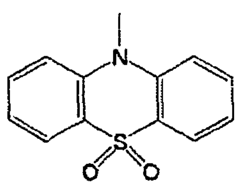

(I -25)

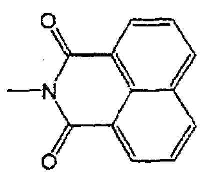

(I -26)

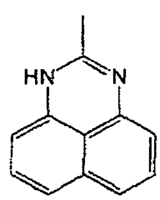

(I -27)

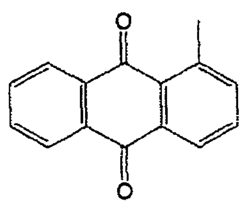

(I -28)

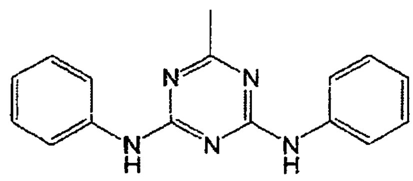

(I −29)

Further, as a dispersing agent which can be used in the present embodiment, a dispersing agent having the following moieties (II-1) to (II-4) may be used to obtain an interaction between ions, but not limited thereto. A unit having such moiety is preferably used in the range of 1.0 to 99.0 mol%, more preferably 3.0 to 95.0 mol%, and particularly preferably 5.0 to 90.0 mol% in the whole units which constitute a polymer compound.

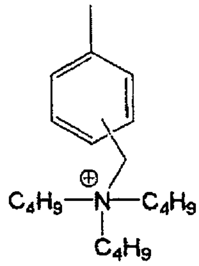

(II −1)

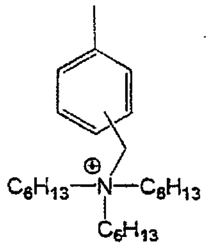

(II −2)

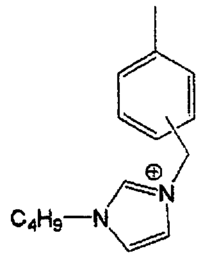

(II −3)

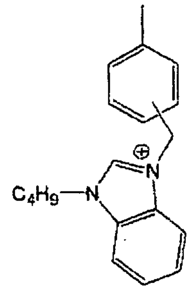

(II −4)

The embedding dispersing agent is preferably a polymer compound having the above-described interacting functional group as a partial structure and more preferably as a partial structure having high affinity for an organic solvent medium (Examples of the organic solvent medium preferably include alcohol-series solvents, ketone-series solvents, ether-series solvents, sulfoxide-series solvents, ester-series solvents, amide-series solvents, aromatic hydrocarbon-series solvents, aliphatic hydrocarbon-series solvents, nitrile-series solvents, and mixed solvents thereof. Among these, ketone-series solvents, ether-series solvents, ester-series solvents, aromatic hydrocarbon-series solvents, aliphatic hydrocarbon-series solvents, and mixed solvents thereof are more preferable.

Examples of the ketone-series solvents include methyl ethyl ketone, methyl isobutyl ketone, cyclohexanone and 2-heptanone. Examples of the ether-series solvents include propylene glycol monomethyl ether, and propylene glycol monomethyl ether acetate. Examples of the ester-series solvents include 1,3-butylene glycol diacetate, methyl 3-methoxypropionate, methyl 3-ethoxypropionate, ethyl 3-ethoxypropionate, ethyl cellosolve acetate, ethyl lactate, butyl acetate, ethyl carbitol acetate and butyl carbitol acetate. Examples of the aromatic hydrocarbon-series solvents include toluene and xylene. Examples of the aliphatic hydrocarbon-series solvents include cyclohexane and n-hexane.

These solvents may be used singly or in combination of two or more thereof. Further, if necessary, a solvent having a boiling point from 180°C to 250°C may be used. The content of the organic solvent is preferably 10 to 95 mass %, to the total content of the photocurable composition.) or a dispersion medium such as a reactive dilution agent (Examples of the reactive dilution agent include a polymeric compound such as 2-hydroxyethyl(meth)acrylate, benzyl(meth)acrylate, ethoxy-modified phenyl(meth)acrylate, isobomyl(meth)acrylate, phenoxyethyl(meth)acrylate, phenoxytetraethylene glycol(meth)acrylate, N-vinyl-2-pyrrolidone, or N-acryloylmorpholine. Since a sterically repulsive moiety has affinity for a dispersion medium, the part of the embedding dispersion medium extruding from the particle (2o in FIG. 1) can impart dispersity in a dispersion medium.).

Examples of the moiety having affinity for the dispersion medium includes, although not specifically limited, (meth)acrylic acid esters, crotonic acid esters, vinyl esters, maleic acid diesters, fumaric acid diesters, itaconic acid diesters, (meth)acrylamides, styrenes, vinyl ethers, vinyl ketones, olefins, maleimides, and (meth)acrylonitrile.

Examples of the (meth)acrylic esters include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, amyl (meth)acrylate, cyclohexyl (meth)acrylate, 2-ethylhexyl (meth)acrylate, phenyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 2-methoxyethyl (meth)acrylate, 2-ethoxyethyl (meth)acrylate, 2-(2-methoxyethoxy)ethyl (meth)acrylate, 3-phenoxy-2-hydroxypropyl (meth)acrylate, 2-chloroethyl (meth)acrylate, glycidyl (meth)acrylate, 3,4-epoxycyclohexylmethyl (meth)acrvlate, vinyl (meth)acrylate, 2-phenylvinyl (meth)acrylate, 1-propenyl (meth)acrylate, allyl (meth)acrylate, 2-allyloxyethyl (meth)acrylate, propargyl (meth)acrylate, benzyl (meth)acrylate, diethylene glycol monomethyl ether (meth)acrylate, diethylene glycol monoethyl ether (meth)acrylate, triethylene glycol monomethyl ether (meth)acrylate, triethylene glycol monoethyl ether (meth)acrylate, polyethylene glycol monomethyl ether (meth)acrylate, polyethylene glycol monoethyl ether (meth)acrylate, β-phenoxyethoxyethyl (meth)acrylate, nonylphenoxypolyethylene glycol (meth)acrylate, dicyclopentenyl (meth)acrylate, dicyclopentenyloxyethyl (meth)acrylate, trifluoroethyl (meth)acrylate, octafluoropentyl (meth)acrylate, perfluorooctylethyl (meth)acrylate, dicyclopentanyl (meth)acrylate, tribromophenyl (meth)acrylate, tribromophenyloxyethyl (meth)acrylate, γ-butylolactone (meth)acrylate, and the like.

Examples of the crotonic esters include butyl crotonate, hexyl crotonate and the like.

Examples of the vinyl esters include vinyl acetate, vinylchloro acetate, vinyl propionate, vinyl butyrate, vinyl methoxyacetate, vinyl benzoate and the like.

Examples of the maleic diesters include dimethyl maleate, diethyl maleate, dibutyl maleate and the like.

Examples of the fumaric diesters include dimethyl fumarate, diethyl fumarate, dibutyl fumarate and the like.

Examples of the itaconic diesters include dimethyl itaconate, diethyl itaconate, dibutyl itaconate and the like.

Examples of the (meth)acrylamides include (meth)acrylamide, N-methyl(meth)acrylamide, N-ethyl(meth)acrylamide, N-propyl(meth)acrylamide, N-isopropyl(meth)acrylamide, N-n-butyl acryl(meth)amide, N-t-butyl(meth)acrylamide, N-cyclohexyl(meth)acrylamide, N-(2-methoxyethyl)(meth)acrylamide, N,N-dimethyl(meth)acrylamide, N,N-diethyl(meth)acrylamide, N-phenyl(meth)acrylamide, N-nitrophenyl acrylic amide, N-ethyl-N-phenyl acrylic amide, N-benzyl(meth)acrylamide, (meth)acryloylmorpholine, diacetone acrylamide, N-methylol acrylamide, N-hydroxyethyl acrylamide, vinyl (meth)acrylamide, N,N-allyl (meth)acrylamide, N-allyl (meth)acrylamide and the like.

Examples of the styrenes include styrene, methylstyrene, dimethylstyrene, trimethylstyrene, ethylstyrene, isopropylstyrene, butylstyrene, hydroxystyrene, methoxystyrene, butoxystyrene, acetoxystyrene, chlorostyrene, dichlorostyrene, bromostyrene, chloromethylstyrene, hydroxystyrenes protected with a group that can be deprotected with an acidic substance (such as t-Boc), methyl vinylbenzoate, α-methylstyrene, and the like.

Examples of the vinyl ethers include methyl vinyl ether, ethyl vinyl ether, 2-chloroethyl vinyl ether, hydroxyethyl vinyl ether, propylvinyl ether, butyl vinyl ether, hexyl vinyl ether, octyl vinyl ether, methoxyethyl vinyl ether, phenyl vinyl ether, and the like.

Examples of the vinyl ketones include methyl vinyl ketone, ethyl vinyl ketone, propyl vinyl ketone, phenyl vinyl ketone, and the like.

Examples of the olefins include ethylene, propylene, isobutylene, butadiene, isoprene, and the like.

Examples of the maleimides include maleimide, butylmaleimide, cyclohexyl maleimide, phenyl maleimide, and the like.

In addition to the compounds mentioned above, (meth)acrylonitrile, N-vinylpyrrolidone, N-vinylformamide, N-vinylacetamide, vinyl caprolactone, and the like can also be used.

The buried dispersing agent used in the present embodiment is preferably a polymer dispersing agent which has a structural moiety showing an attracting interaction for the pigment described above which containing an aromatic ring, a nitrogen-containing cyclic hydrocarbon group, and/or a quaternary ammonium group. The aromatic ring, nitrogen-containing cyclic hydrocarbon group, and/or quaternary ammonium group are preferably in the same structural moiety and they may be bonded to each other to form a ring.

The dispersing agent used in the present embodiment may have various functional groups other than a functional group to attract the pigment. Examples of the functional group include a hydrophobic group, an acidic group, a basic group, a cross linking group, a photopolymerizable group, and a thermopolymerizable group depending on types of a dispersion medium or a medium for composition, or use of the composition. The unit having a functional group is added preferably in the range of 95 mol% or less, more preferably 90.0 mol% or less, and particularly preferably 85 mol% in the total units which constitute the polymer compound. Meanwhile, the buried dispersing agent is preferably a water-insoluble polymer compound. When the polymer compound is water-soluble, the dispersing agent may not be easily incorporated into particulates when it is brought into contact with a poor solvent containing water as a main component.

Examples of the acidic group include (meth)acrylic acid, vinylbenzoic acid, maleic acid, maleic acid monoalkyl ester, fumaric acid, itaconic acid, crotonic acid, cinnamic acid, and acrylic acid dimer. Further, an addition reaction product of a monomer having a hydroxy group such as 2-hydroxyethyl (meth)acrylate, and a cyclic anhydride such as maleic anhydride, phthalic anhydride, and cyclohexanedicarboxylic anhydride, and ω-carboxy-polycaprolactone (meth)acrylate may be utilized. Further, as a precursor of a carboxyl group, an anhydride-containing monomer such as maleic anhydride, itaconic anhydride, and citraconic anhydride may be used. Further, examples of the vinyl monomer having a sulfonic acid group include 2-acrylamido-2-methylpropane sulfonic acid, and examples of the vinyl monomer having a phosphoric acid group include mono(2-acryloyloxyethyl ester)phosphate, and mono(l-methyl-2-acryloyloxyethyl ester)phosphate.

Examples of the basic group include: N,N-dimethylaminoethyl (meth)acrylate, N,N-dimethylaminopropyl (meth)acrylate, 1-(N,N-dimethylamino)-1,1-dimethylmethyl (meth)acrylate, N,N-dimethylaminohexyl (meth)acrylate, N,N-diethylaminoethyl (meth)acrylate, N,N-diisopropyl-aminoethyl (meth)acrylate, N,N-di-n-butylaminoethyl (meth)acrylate, N,N-di-isobutylaminoethyl (meth)acrylate, morpholinoethyl (meth)acrylate, piperidinoethyl (meth)acrylate, 1-pyrrolidinoethyl (meth)acrylate, N,N-methyl-2-pyrrolidylaminoethyl (meth)acrylate, N,N-methyl-phenylaminoethyl (meth)acrylate, and the like; (meth)acrylamides, such as N-(N',N'-dimethylaminoethyl) acrylamide, N-(N',N'-dimethylaminoethyl) methacrylamide, N-(N',N'-diethyl aminoethyl) acrylamide, N-(N',N'-dietliyl aminoethyl) methacrylamide, N-(N',N'-dimethylaminopropyl) acrylamide, N-(N',N'-dimethylaminopropyl) methacrylamide, N-(N',N'-diethylaminopropyl) acrylamide, N-(N',N'-diethylaminopropyl) methacrylamide, 2-(N,N-dimethylamino)ethyl (meth)acrylamide, 2-(N,N-diethylamino)ethyl (meth)acrylamide, 3-(N,N-diethylamino)propyl (meth)acrylamide, 3-(N,N-dimethylamino)propyl (meth)acrylamide, 1-(N,N-dimethylamino)-1,1-dimethylmethyl(meth) acrylamide and 6-(N,N-diethylamino)hexyl (meth)acrylamide, morpholino(meth)acrylamide, piperidino (meth)acrylamide, N-methyl-2-pyrrolidyl(meth)acrylamide; styrenes, such as N.N-dimethylamino styrene and N,N-dimethylamino methylstyrene; and the like.

A monomer having a hydrocarbon group with 4 or more carbon atoms containing an urea group, an urethane group, and an oxygen ligand, or a monomer containing an alkoxy silyl group, an epoxy group, an isocyanate group, or a hydroxyl group, can also be used. Specific examples thereof include n-butyl (meth)acrylate, isobutyl (meth)acrylate, t-butyl (meth)acrylate, amyl (meth)acrylate, n-hexyl (meth)acrylate, cyclohexyl (meth)acrylate, t-butyleyelohexyl (meth)acrylate, 2-ethylhexyl (meth)acrylate, octyl (meth)acrylate, t-octyl (meth)acrylate, iso-bornyl (meth)acrylate, dodecyl (meth)acrylate, octadecyl (meth)acrylate, stearyl (meth)acrylate, oleyl (meth)acrylate, adamantyl (meth)acrylate, and a monomer having the following structure.

Among these, particularly, the other functional group is more preferably a polymer or a copolymer of a vinyl monomer having a hydrocarbon group having 4 or more carbon atoms, and particularly preferably a polymer or a copolymer of a monomer having a hydrocarbon group having 6 or more and 24 or less carbon atoms.

Monomers containing an ionic functional group can be also used. Examples of ionic vinyl monomers (anionic vinyl monomers and cationic vinyl monomers) include anionic vinyl monomers, such as alkali metal salts of the above vinyl monomers having acidic groups and salts of organic amines (for example, tertiary amines, such as triethylamine and dimethylamino ethanol), and cationic vinyl monomers, such as nitrogen-containing vinyl monomers quaternerized with: an alkyl halide (alkyl group: 1 to 18 carbon atoms, halogen atom: chlorine atom, bromine atom or iodine atom); a benzyl halide, such as benzyl chloride or benzyl bromide; an alkylsulfonate (alkyl group: 1 to 18 carbon atoms), such as methanesulfonate; an alkyl arylsulfonate (alkyl group: 1 to 18 carbon atoms), such as benzenesulfonate or toluenesulfonate; a dialkyl sulfate (alkyl group: 1 to 4 carbon atoms); or the like, and dialkyl diallyl ammonium salts and the like.

The particulates of the present embodiment may be also used as a coloring agent of ink for ink jet recording. When the main component of a dispersion medium and/or a composition medium is an aqueous solvent such as water, and mixed liquid of water and aqueous organic solvent, aggregation between particulates can be inhibited by electrostatic repulsion, and therefore dispersion in an aqueous medium can be achieved by introducing the acidic group, basic group, and ionic functional group described above. Examples of the aqueous organic solvent include alkanediols (polyvalent alcohols) such as glycerin, 1,2,6-hexanetriol, trimethylolpropane, ethylene glycol, propylene glycol, diethylene glycol, triethylene glycol, tetraethylene glycol, pentaethylene glycol, dipropylene glycol, 2-butene-1,4-diol, 2-ethyl-l,3-hexanediol, 2-methyl-2,4-pentanediol, 1,2-octanediol, 1,2-hexanediol, 1,2-pentanediol, and 4-methyl-1,2-pentanediol; sugars such as glucose, mannose, fructose, ribose, xylose, arabinose, galactose, aldonic acid, glucitol, maltose, cellobiose, lactose, sucrose, trehalose and maltotriose; sugar alcohols; hyaluronic acids; so-called solid wetting agents such as urea compounds; alkyl alcohols having 1 to 4 carbon atoms such as ethanol, methanol, butanol, propanol, and isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, dipropylene glycol mono-n-propyl ether, and dipropylene glycol mono-iso-propyl ether; 2-pyrrolidone, N-methyl-2-pyrrolidone, 1,3-dimethyl-2-imidazolidinone, formamide, acetamide, dimethylsulfoxide, sorbit, sorbitan, acetin, diacetin, triacetin, sulfolane, and the like, and these solvents may be used alone or in combination of two or more.

A polyvalent alcohol is useful as the anti-drying or wetting agent, and examples thereof include glycerol, ethylene glycol, diethylene glycol, triethylene glycol, propylene glycol, dipropylene glycol, tripropylene glycol, 1,3-butanediol, 2,3-butanediol, 1,4-butanediol, 3-methyl-1,3-butanediol, 1,5-pentanediol, tetraethylene glycol, 1,6-hexanediol, 2-methyl-2,4-pentanediol, polyethylene glycol, 1,2,4-butanetriol, 1,2,6-hexanetriol, and the like. These alcohols may be used alone or in combination of two or more.)

Examples of polymer shape of an embedding dispersing agent having the interacting functional group, sterically repulsive dispersing group, or various functional group include, although not specifically limited, a polymer or copolymer of vinyl monomer with a unit having the interacting functional group, a unit having the sterically repulsive dispersing group, or a unit having various functional group (for example, a homopolymer of alkyl methacrylate, a homopolymer of

styrenes, a copolymer of alkyl methacrylate/styrenes, polyvinyl butyral, or the like), an ester-series polymer (for example, polycaprolactone or the like), an ether-series polymer (for example, polytetramethylene oxide or the like), an urethane-series polymer (for example, a polyurethane formed from tetramethylene glycol and hexamethylene diisocyanate, or the like), an amide-series polymer (for example, polyamide 6, polyamide 66, or the like), a silicone-series polymer (for example, polydimethylsiloxane or the like), a carbonate-series polymer (for example, a polycarbonate synthesized from bisphenol A and phosgene, or the like).

As the polymer compound, among these, a polymer or a copolymer of vinyl monomers, an ester-series polymer, an ether-series polymer, and modification products or copolymers thereof are particularly preferred. From the viewpoints of regulation of solubility in the solvent, cost, ease in synthesis and the like, the polymer compound is particularly preferably a polymer or a copolymer of vinyl monomers.

In the production of the polymer or copolymer of vinyl monomers, for example, a method according to a radical polymerization method can be applied. Polymerization conditions during manufacturing the polymer or the copolymer of the vinyl monomer by radical polymerization method, such as a temperature, pressure, type of a radical initiator and amount thereof, type of solvent, and the like are easily determined by a person skilled in the art, and the polymerization conditions can be determined experimentally.

As a polymer dispersing agent which can be used as the embedding dispersing agent, a dispersing agent having any bond type can be used. Preferred examples of the agent that can be used include a (co)polymer such as a random (co)polymer, a block (co)polymer, and a graft (co)polymer. In particular, a block (co)polymer and a graft (co)polymer are preferable.

As the embedding dispersing agent, the following polymer can be also preferably used.

The polymer compound is not particularly limited, but examples thereof include a polymer or a copolymer of a vinyl monomer (for example, a homopolymer of alkyl methacrylate, a homopolymer of styrenes, a copolymer of alkyl methacrylate/styrenes, polyvinyl butyral, or the like), an ester-series polymer (for example, polycaprolactone or the like), an ether-series polymer (for example, polytetramethylene oxide or the like), an urethane-series polymer (for example, a polyurethane formed from tetramethylene glycol and hexamethylene diisocyanate, or the like), an amide-series polymer (for example, polyamide 6, polyamide 66, or the like), a silicone-series polymer (for example, polydimethylsiloxane or the like), a carbonate-series polymer (for example, a polycarbonate synthesized from bisphenol A and phosgene, or the like), and the like.

As the polymer compound, among these, a polymer or a copolymer of a vinyl monomer, an ester-series polymer, an ether-series polymer, and modification products or copolymers thereof are particularly preferred. From the viewpoints of regulation of solubility in the solvent, cost, ease in synthesis and the like, the polymer compound is particularly preferably a polymer or a copolymer of a vinyl monomer.

The vinyl monomer is not particularly limited. However, preferable example includes (meth)acrylic acid esters, crotonic acid esters, vinyl esters, maleic acid diesters, fumaric acid diesters, itaconic acid diesters, (meth)acrylamides, styrenes, vinyl ethers, vinyl ketones, olefins, maleimides, (meth)acrylonitrile, and the like.

Examples of the (meth)acrylic esters include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, amyl (meth)acrylate, n-hexyl (meth)acrylate, cyclohexyl (meth)acrylate, t-butylcyclohexyl (meth)acrylate, 2-ethylhexyl (meth)acrylate, t-octyl (meth)acrylate, dodecyl (meth)acrylate, octadecyl (meth)acrylate, acetoxyethyl (meth)acrylate, phenyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 2-methoxyethyl (meth)acrylate, 2-ethoxyethyl (meth)acrylate, 2-(2-methoxyethoxy)ethyl (meth)acrylate, 3-phenoxy-2-hydroxypropyl (meth)acrylate, 2-chloroethyl (meth)acrylate, glycidyl (meth)acrylate, 3,4-epoxycyclohexylmethyl (meth)acrylate, vinyl (meth)acrylate, 2-phenylvinyl (meth)acrylate, 1-propenyl (meth)acrylate, allyl (meth)acrylate, 2-allyloxyethyl (meth)acrylate, propargyl (meth)acrylate, benzyl (meth)acrylate, diethylene glycol monomethylether (meth)acrylate, diethylene glycol monoethylether (meth)acrylate, triethylene glycol monomethylether (meth)acrylate, triethylene glycol monoethylether (meth)acrylate, polyethylene glycol monomethylether (meth)acrylate, polyethylene glycol monoethylether (meth)acrylate, β-phenoxyethoxyethyl (meth)acrylate, nonylphenoxypolyethylene glycol (meth)acrylate, dicyclopentenyl (meth)acrylate, dicyclopentenyloxyethyl (meth)acrylate, trifluoroethyl (meth)acrylate, octafluoropentyl (meth)acrylate, perfluorooctylethyl (meth)acrylate, dicyclopentanyl (meth)acrylate, tribromophenyl (meth)acrylate, tribromophenyloxyethyl (meth)acrylate, γ-butylolactone (meth)acrylate, and the like.

Examples of the crotonic esters include butyl crotonate, hexyl crotonate and the like.

Examples of the vinyl esters include vinyl acetate, vinylchloro acetate, vinyl propionate, vinyl butyrate, vinyl methoxyacetate, vinyl benzoate and the like.

Examples of the maleic diesters include dimethyl maleate, diethyl maleate, dibutyl maleate and the like.

Examples of the fumaric diesters include dimethyl fumarate, diethyl fumarate, dibutyl fumarate and the like.

Examples of the itaconic diesters include dimethyl itaconate, diethyl itaconate, dibutyl itaconate and the like.

Examples of the (meth)acrylamides include (meth)acrylamide, N-methyl(meth)acrylamide, N-ethyl(meth)acrylamide, N-propyl(meth)acrylamide, N-isopropyl(meth)acrylamide, N-n-butyl acryl(meth)amide, N-t-butyl(meth)acrylamide, N-cyclohexyl(meth)acrylamide, N-(2-methoxyethyl)(meth)acrylamide, N,N-dimethyl(meth)acrylamide, N,N-diethyl(meth)acrylamide, N-phenyl(meth)acrylamide, N-nitrophenyl acrylic amide, N-ethyl-N-phenyl acrylic amide, N-benzyl(meth)acrylamide, (meth)acryloylmorpholine, diacetone acrylamide, N-methylol acrylamide, N-hydroxyethyl acrylamide, vinyl (meth)acrylamide, N,N-allyl (meth)acrylamide, N-allyl (meth)acrylamide and the like.

Examples of the styrenes include styrene, methylstyrene, dimethylstyrene, trimethylstyrene, ethylstyrene, isopropylstyrene, butylstyrene, hydroxystyrene, methoxystyrene, butoxystyrene, acetoxystyrene, chlorostyrene, dichlorostyrene, bromostyrene, chloromethylstyrene, hydroxystyrenes protected with a group that can be deprotected with an acidic substance (such as t-Boc), methyl vinylbenzoate, $\alpha$-methylstyrene, and the like.

Examples of the vinyl ethers include methyl vinyl ether, ethyl vinyl ether, 2-chloroethyl vinyl ether, hydroxyethyl vinyl ether, propylvinyl ether, butyl vinyl ether, hexyl vinyl ether, octyl vinyl ether, methoxyethyl vinyl ether, phenyl vinyl ether, and the like.

Examples of the vinyl ketones include methyl vinyl ketone, ethyl vinyl ketone, propyl vinyl ketone, phenyl vinyl ketone, and the like.

Examples of the olefins include ethylene, propylene, isobutylene, butadiene, isoprene, and the like.

Examples of the maleimides include maleimide, butylmaleimide, cyclohexyl maleimide, phenyl maleimide, and the like.

In addition to the compounds mentioned above, (meth)acrylonitrile, N-vinylpyrrolidone, N-vinylformamide, N-vinylacetamide, vinyl caprolactone, and the like can also be used.

Among these, particularly, the polymer compound is more preferably a polymer or a copolymer of a vinyl monomer having a hydrocarbon group having 4 or more carbon atoms, and particularly preferably a polymer or a copolymer of a monomer having a hydrocarbon group having 6 or more and 24 or less carbon atoms. Examples thereof include n-butyl (meth)acrylate, isobutyl (meth)acrylate, t-butyl (meth)acrylate, amyl (meth)acrylate, n-hexyl (meth)acrylate, cyclohexyl (meth)acrylate, t-butylcyclohexyl (meth)acrylate, 2-ethylhexyl (meth)acrylate, octyl (meth)acrylate, t-octyl (meth)acrylate, iso-bornyl (meth)acrylate, dodecyl (meth)acrylate, octadecyl (meth)acrylate, stearyl (meth)acrylate, oleyl (meth)acrylate, and adamantyl (meth)acrylate.

In addition to the above, preferred examples of the vinyl monomer include a vinyl monomer having an acidic group, a vinyl monomer having a basic group, and the like.

Examples of the vinyl monomer having an acidic group include a vinyl monomer having a carboxyl group and a vinyl monomer having a sulfonic acid group. Examples of the vinyl monomer having a carboxyl group include (meth)acrylic acid, vinylbenzoic acid, maleic acid, maleic acid monoalkyl ester, fumaric acid, itaconic acid, crotonic acid, cinnamic acid, and acrylic acid dimer. Further, an addition reaction product of a monomer having a hydroxy group such as 2-hydroxvethyl (meth)acrylate, and a cyclic anhydride such as maleic anhydride, phthalic anhydride, and cyclohexanedicarboxylic anhydride, and $\omega$-carboxy-polycaprolactone (meth)acrylate may be utilized. Further, as a precursor of a carboxyl group, an anhydride-containing monomer such as maleic anhydride, itaconic anhydride, and citraconic anhydride may be used. In addition, examples of the vinyl monomer having a sulfonic acid group include 2-acrylamido-2-methylpropane sulfonic acid, and examples of the vinyl monomer having a phosphoric acid group include mono(2-acryloyloxyethyl ester)phosphate, and mono(1-methyl-2-acryloyloxyethyl ester)phosphate.

Examples of vinyl monomers having a basic nitrogen atom include: (meth)acrylate esters, such as N,N-dimethylaminoethyl (meth)acrylate, N,N-dimethylaminopropyl (meth)acrylate, 1-(N,N-dimethylamino)-1,1-dimethylmethyl (meth)acrylate, N,N-dimethylaminohexyl (meth)acrylate, N,N-diethylaminoethyl (meth)acrylate, N,N-diisopropyl-aminoethyl (meth)acrylate, N,N-di-n-butylaminoethyl (meth)acrylate, N,N-di-isobutylaminoethyl (meth)acrylate, morpholinoethyl (meth)acrylate, piperidinoethyl (meth)acrylate, 1-pyrrolidinoethyl (meth)acrylate, N,N-methyl-2-pyrrolidylaminoethyl (meth)acrylate, N,N-methyl-phenylaminoethyl (meth)acrylate, and the like; (meth)acrylamides, such as N-(N',N'-dimethylammoethyl) acrylamide, N-(N',N'-dimethylaminoethyl)methacrylamide, N-(N',N'-diethyl aminoethyl) acrylamide, N-(N',N'-diethyl aminoethyl) methacrylamide, N-(N',N'-dimethylaminopropyl) acrylamide, N-(N',N'-dimethylaminopropyl)methacrylamide, N-(N',N,'-diethylaminopropyl) acrylamide, N-(N',N'-diethylaminopropyl) methacrylamide, 2-(N,N-dimethylamino)ethyl (meth)acrylamide, 2-(N,N-diethylamino)ethyl (meth)acrylamide, 3-(N,N-diethylamino)propyl (meth)acrylamide, 3-(N,N-dimethylamino)propyl (meth)acrylamide, 1-(N,N-dimethylamino)-1,1-dimethylmethyl(meth) acrylamide and 6-(N,N-diethylamino)hexyl (meth)acrylamide, morpholino(meth)acrylamide, piperidino (meth)acrylamide, N-methyl-2-pyrrolidyl(meth)acrylamide; styrenes, such as N,N-dimethylamino styrene and N,N-dimethylamino methylstyrene; and the like.

A monomer having a hydrocarbon group with 4 or more carbon atoms containing an urea group, an urethane group, and an oxygen ligand, or a monomer containing an alkoxy silyl group, an epoxy group, an isocyanate group, or a hydroxyl group, can also be used. Specific examples thereof include monomers having the following structure.

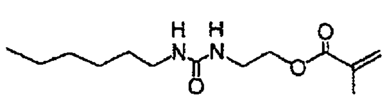 u-1 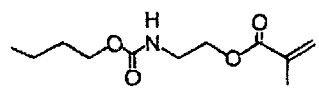 u-2

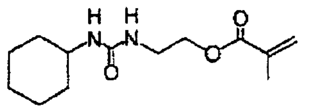 u-3

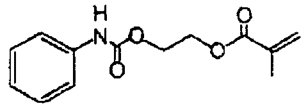 u-4

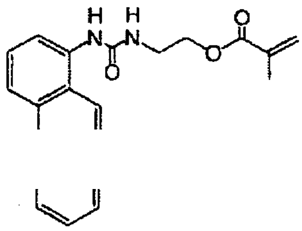 u-5

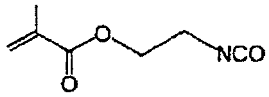 u-6

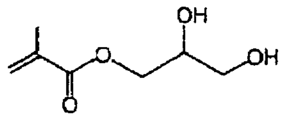 u-8

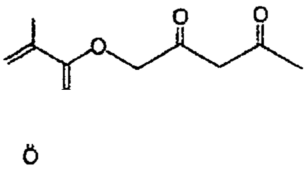 u-7

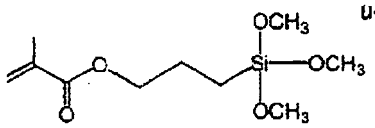 u-10

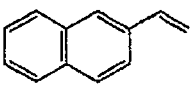 u-9

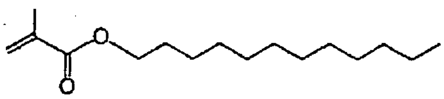 u-11

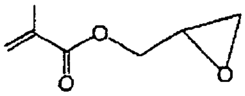 u-12

Monomers containing an ionic functional group can be also used. Examples of ionic vinyl monomers (anionic vinyl monomers and cationic vinyl monomers) include anionic vinyl monomers, such as alkali metal salts of the above-described vinyl monomers having acidic groups and salts of organic amines (for example, tertiary amines, such as triethylamine and dimethylamino ethanol), and cationic vinyl monomers, such as nitrogen-containing vinyl monomers quaternerized with: an alkyl halide (alkyl group: 1 to 18 carbon atoms, halogen atom: chlorine atom, bromine atom or iodine atom); a benzyl halide, such as benzyl chloride or benzyl bromide; an alkylsulfonate (alkyl group: 1 to 18 carbon atoms), such as methanesulfonate; an alkyl arylsulfonate (alkyl group: 1 to 18 carbon atoms), such as benzenesulfonate or toluenesulfonate; a dialkyl sulfate (alkyl group: 1 to 4 carbon atoms); or the like, and dialkyl diallyl ammonium salts and the like.

The polymer compound is one of a monomer having an organic dye structure or a heterocyclic structure. Examples of monomers having an organic dye structure or a heterocyclic structure include: phthalocyanine-, insolubule azo-, azo lake-, anthraquinone-, quinacridone-, dioxazine-, diketopyrolopyrrole-, anthrapyridine-, anthanthrone-, indanthrone-, flavanthrone-, perinone-, perylene- and thioindigo-dye structures; and heterocyclic structure such as thiophene, furan, xanthene, pyrrole, pyrroline, pyrrolidine, dioxolane, pyrazole, pyrazoline, pyrazolidine, imidazole, oxazol, thiazole, oxadiazole, triazole, thiadiazole, pyran, pyridine, piperidine, dioxane, morpholine, pyridazine, pyrimidine, piperazine, triazine, trithiane, isoindoline, isoindolinone, benzimidazolone, benzothiazole, succinic imide, phthalimide, naphthalimide, hydantoin, indole, quinoline, carbazole, acridine, acridone, and anthraquinone.

Among these monomers having an organic dye structure or a heterocyclic structure, more specifically, the polymer compound is preferably a polymer or a copolymer of a monomer represented by formula (11). Herein, when the polymer compound is represented by the structure formula of a repeating unit in the present embodiment, the terminal group may be any atom or any group, and for example, may be simply a hydrogen atom, a residue of a polymerization terminating agent, or the like.

Formula (11)

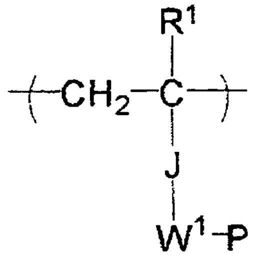

In formula (11), $R^1$ represents a hydrogen atom or a methyl group; J represents -CO-, -COO-, -CONR$^6$-, -OCO-, a phenylene group, or $-C_6H_4CO-$; $R^6$ represents a hydrogen atom, an alkyl group, an aryl group or an aralkyl group; $W^1$ represents a single bond, a straight-chain, branched, or cyclic alkylene group or aralkylene group; and P represents a heterocyclic group.

In formula (1), J is preferably -CO-, a phenylene group or a benzoyl group. $R^6$ represents a hydrogen atom, an alkyl group (e.g., a methyl group, an ethyl group, a n-propyl group, an i-propyl group, a n-butyl group, a n-hexyl group, a n-octyl group and a 2-hydroxyethyl group), or an aryl group (e.g., a phenyl group); preferably a hydrogen atom, a methyl group or an ethyl group.

The alkylene group represented by $W^1$ is preferably an alkylene group having 1 to 10 carbon atoms, and more preferably an alkylene group having 1 to 4 carbon atoms. Examples thereof include a methylene group, an ethylene group, a propylene group, a butylene group, a pentylene group, a hexylene group, an octylene group, a decylene group, and the like, and among them, a methylene group, an ethylene group and a propylene group is preferred. The aralkylene group represented by $W^1$ is preferably an aralkylene group having 7 to 13 carbon atoms, and examples thereof include a benzylidene group, a cinnamylidene group, and the like. The arylene group represented by $W^1$ is preferably an arylene group having 6 to 12 carbon atoms, and examples thereof include a phenylene group, a cumenylene group, a mesitylene group, a tolylene group, a xylylene group, and the like. Among them, a phenylene group is particularly preferred.

Furthermore, the linear, branched or cyclic alkylene groups and aralkylene groups represented by $W^1$ may also have -NR$^{32}$-, -NR$^{32}$R$^{33}$-, -COO-, -OCO-, -O-, - $SO_2NH$-, -$NHSO_2$-, -NHCOO-, -OCONH- or a group derived from a heterocyclic ring, included as a linking group. $R^{32}$ and $R^{33}$ each independently represents hydrogen or an alkyl group, and preferable examples thereof include a hydrogen, a methyl group, an ethyl group, a propyl group, and the like.

Among the linking groups represented by $W^1$, a single bond or an alkylene group is preferred, and a methylene group, an ethylene group and a 2-hydroxypropylene group are more preferred.

In formula (1), P represents a heterocyclic group. Among the heterocyclic groups, a heterocyclic residue constituting an organic pigment is preferred. Examples thereof include heterocyclic residues forming pigments of phthalocyanine-, insoluble azo-, azo lake-, anthraquinone-, quinacridone-, dioxazine-, diketopyrrolopyrrole-, anthrapyrimidine-, anthanthrone-, indanthrone-, flavanthrone-, perinone-, perylene-, thioindigo- and quinophthalone-series residue. Preferable examples of the heterocyclic residue include thiophene, furan, xanthene, pyrrole, pyrroline, pyrrolidine, dioxolane, pyrazole, pyrazoline, pyrazolidine, imidazole, oxazole, thiazole, oxadiazole, triazole, thiadiazole, pyran, pyridine, piperidine, dioxane, morpholine, pyridazine, pyrimidine, piperazine, triazine, trithiane, isoindoline, isoindolinone, benzimidazolone, benzothiazole, succinimide, phthalimide, naphthalimide, hydantoin, indole, quinoline, barbitur, thiobarbitur, carbazole, acridine, acridone, quinacridon, anthraquinone, phthalimide, quinaldine and quinophthalone. Among these, thiophene, furan, xanthene, pyrrole, imidazole, isoindoline, isoindolinone, benzimidazolone, indole, quinoline, carbazole, acridine, acridone, quinacridon, anthraquinone, phthalimide, quinaldine and quinophthalone are preferable; and benzimidazolone, indole, quinoline, barbitur, thiobarbitur, carbazole, acridine, acridone, anthraquinone and phthalimide are particularly preferable. These heterocyclic residues can be appropriately selected in view of the structure or the electronic properties of the pigment used.

The repeating unit represented by formula (11) is preferably a repeating unit represented by formula (12) or (13).

Formula (12)

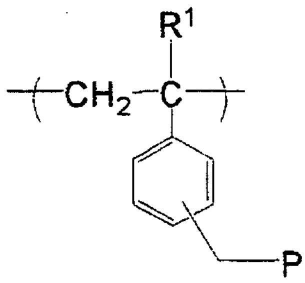

Formula (13)

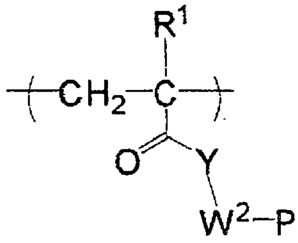

$R^1$ represents a hydrogen atom or a methyl group; and Y represents -NH-, -O-, or -S-. $W^2$ represents a single bond or a divalent linking group; preferably a single bond, or a straight-chain, branched or cyclic alkylene group or aralkylene group. P represents a heterocyclic group. In formulae (12) and (13), a preferred range of $W^2$ is the same as that of $W^1$ in formula (11). In formulae (12) and (13), P is identical with P in formula (1).

Specific preferred examples of the structures represented by formulas (11), (12) and (13) are described below. However, the present invention is not limited thereto.

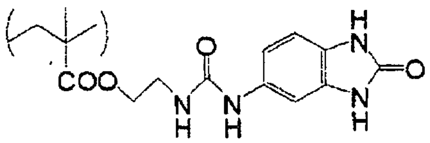

Q-1

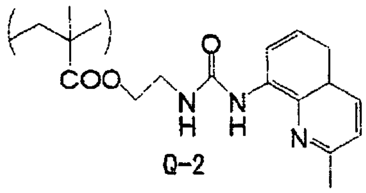

Q-2

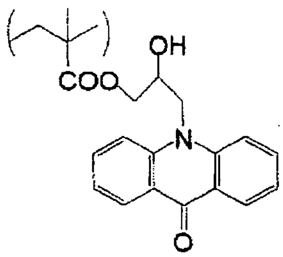

Q-3

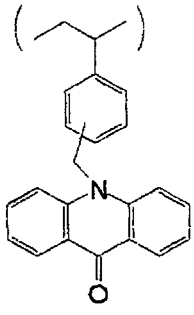

Q-4

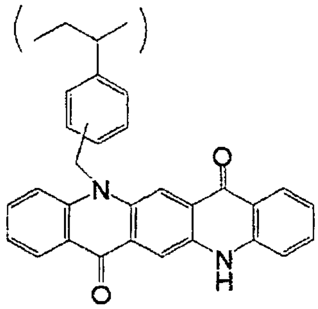

Q-5

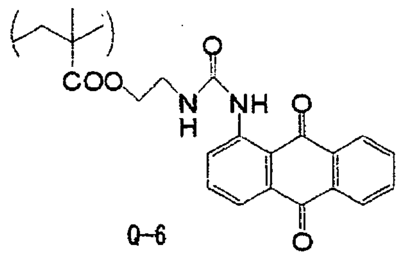

Q-6

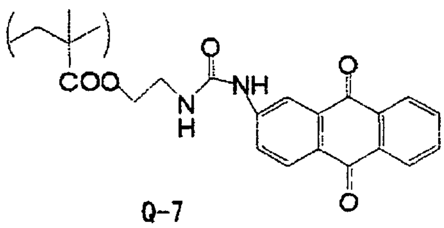

Q-7

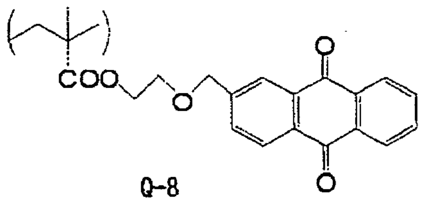

Q-8

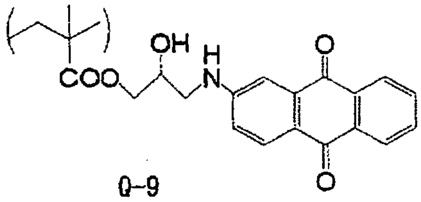

Q-9

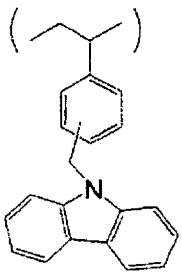

Q-10

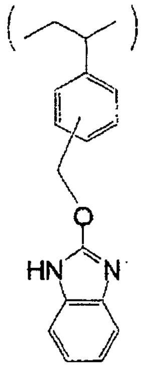

Q-11

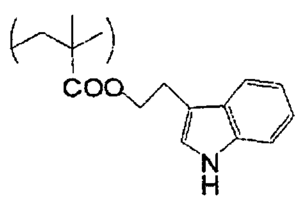

Q-12

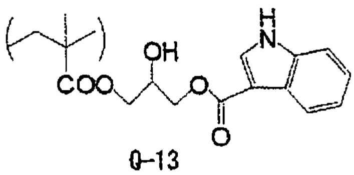

Q-13

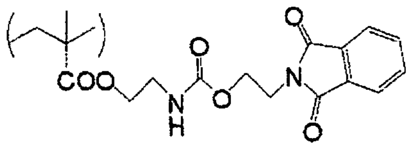

Q-14

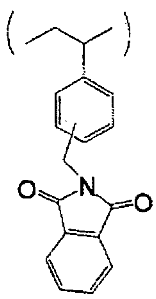

Q-15

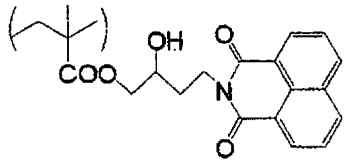

Q-16

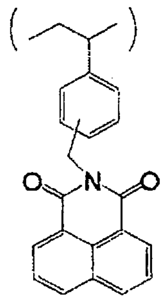

Q-17

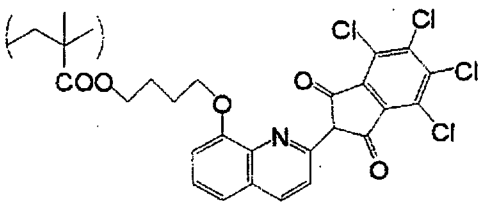

Q-18

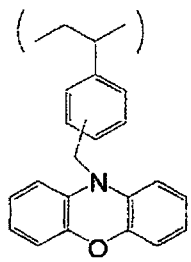

Q-19

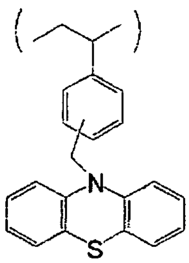

Q-20

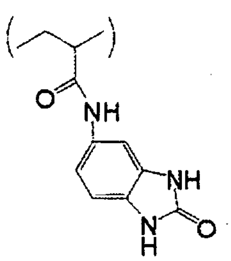

Q-21

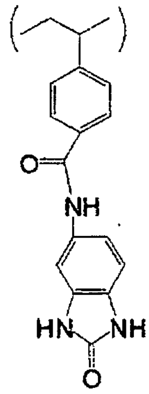

Q-22

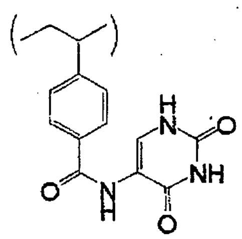

Q-23

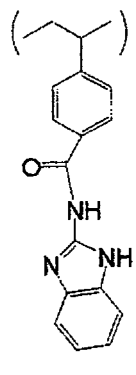

Q-24

In addition to those exemplified above, it is also preferable that P in the repeating unit represented by formula (11), (12) or (13) is represented by the following formula (4) or a tautomeric structure thereof.

Formula (4)

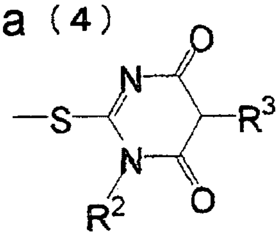

$R^2$ represents a hydrogen atom, a substituted or unsubstituted alkyl group, or a substituted or unsubstituted aryl group; and $R^3$ represents a hydrogen atom, an alkyl group, an aryl group, a halogen atom, or an azo group.

Herein, tautomerism is explained. Tautomerism is reversible interconversion between isomers, and is a phenomenon in which hydrogen atoms undergo mutual transposition mainly by proton migration. Further, the term "tautomers" refers to structural isomers capable of interconversion, which can undergo mutual conversion at a fast rate, and can reach an equilibrium state where all isomers can co-exist. As a generally shown example, tautomerism occurs as a result of a transposition reaction of hydrogen atoms, that is, protons, which is accompanied by conversion between a single bond and a double bond. The rate or equilibrium ratio of isomerization varies also with a temperature or a pH, and whether the system is in the liquid phase or solid phase, and in the case of a solution, with the type of solvent. In many cases, the isomerization is still called tautomerism even if the time takes from several hours to several days to reach equilibrium.

In the present invention, a chemical structure (moiety) representing the tautomerism in the polymer compound is referred to as a tautomer structure (moiety), and the chemical structures (tautomer structure) obtained by a tautomerization reaction in the repeating unit represented by formula (4) include the following formulas (a) to (h).

**When $R^2$ is other than a hydrogen:**

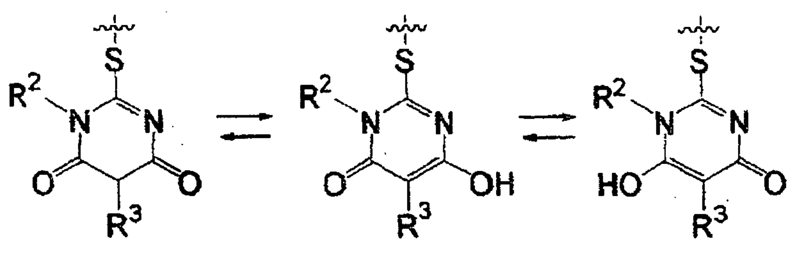

(a) (b) (c)

**When $R^7$ is a hydrogen atom:**

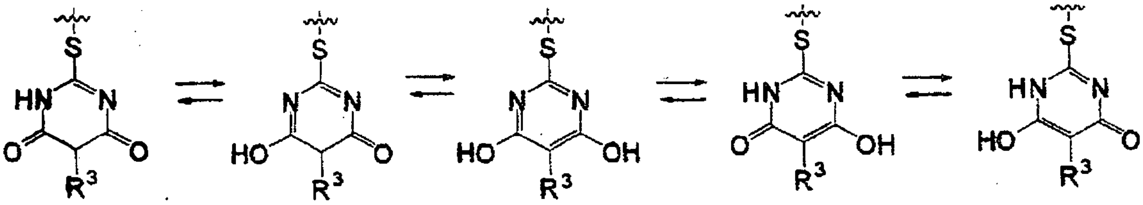

(d) (e) (f) (g) (h)

Among those, $R^2$ is preferably a hydrogen atom, a methyl group, an ethyl group, a 2-ethylhexyl group, or a phenyl group.

It is preferable that a substituent represented by $R^3$ has, among those, an azo structure represented by the following formula (7).

Formula (7) $-N=N-R^{23}$

$R^{23}$ represents a substituted or unsubstituted, aromatic ring or heteroatom-containing (for example, an oxygen atom, a sulfur atom, a nitrogen atom or the like) heterocyclic ring. Among them, a 5-membered or 6-membered monocyclic ring or bicyclic condensed ring is preferred as the aromatic and heterocyclic structure. Even among them, a benzene ring, a pyridine ring, a pyrimidine ring, an imidazole ring, an isoxazole ring, an oxazole ring, a thiazole ring, a pyrazole ring, a triazole ring, a tetrazole ring, a benzimidazole ring, a benzothiazole ring, a benzoxazole ring, a benzisoxazole ring, and a benzothiazole-thiadiazole ring are preferred.

There are shown below specific preferred examples of repeating units having a group represented by formula (4) as a heterocyclic group P, but the present invention is not limited thereto. Furthermore, the structures mentioned as these specific examples are only examples among those conceived tautomeric structures, and other tautomeric structures can also be adopted.

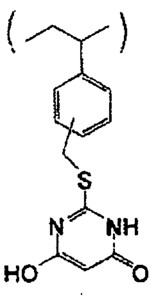

M-1

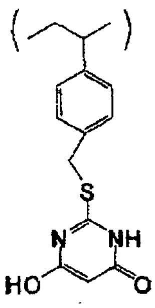

M-2

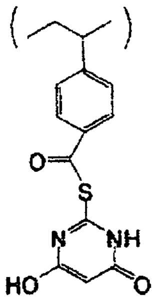

M-3

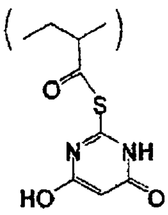

M-4

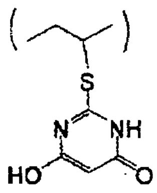

M-5

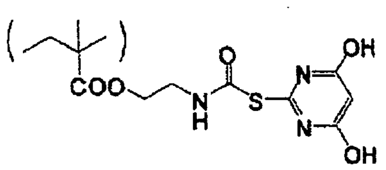

M-6

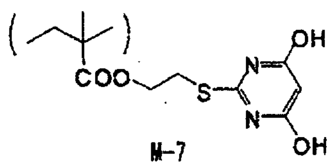

M-7

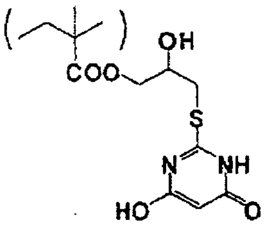

M-8

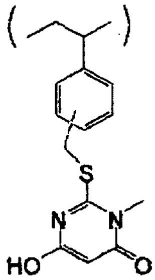

M-9

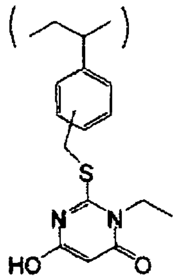

M-10

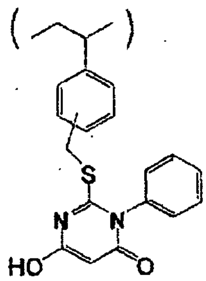

M-11

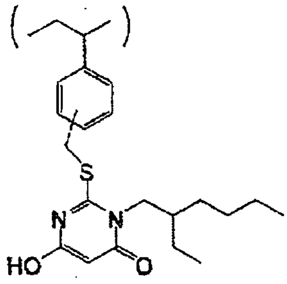
M-12

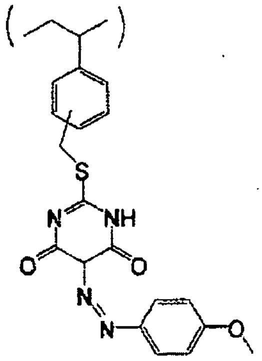
M-13

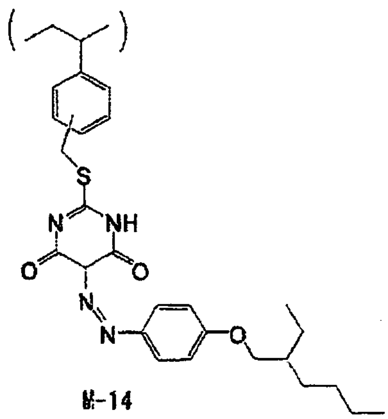
M-14

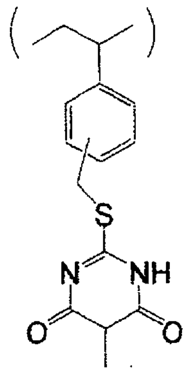
M-15

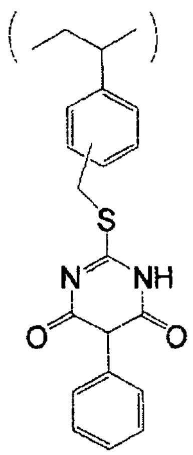
M-16

The polymer compound is preferably a graft copolymer that contains a repeating unit obtained by copolymerizing polymerizable oligomers having an ethylenically unsaturated double bond at its terminal. Such a polymerizable oligomer having an ethylenically unsaturated double bond at its terminal is a compound having a given molecular weight and is therefore called a macromonomer. The specific polymerizable oligomer preferably contains a polymer chain moiety and a polymerizable functional group moiety having an ethylenically unsaturated double bond at a terminal of the polymer chain. From the viewpoint of obtaining the desired graft copolymer, the group having an ethylenically unsaturated double bond is preferably present at only one of the terminals of the polymer chain. The group having an ethylenically unsaturated double bond is preferably a (meth)acryloyl group or a vinyl group, and particularly preferably a (meth)acryloyl group.

The polystyrene-equivalent number-average molecular mass (Mn) of the macromonomer is preferably in the range of 1,000 to 20,000, particularly preferably in the range of 2,000 to 10,000.

The polymer chain moiety is preferably a homopolymer or a copolymer formed from at least one monomer selected from the group consisting of alkyl (meth)acrylates, styrene and derivatives thereof, acrylonitrile, vinyl acetate, and butadiene, or is a polyethylene oxide, a polypropylene oxide, and a polycaprolactone.

The polymerizable oligomer is preferably an oligomer represented by the following formula (5).

Formula (5)

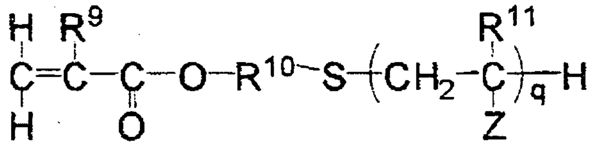

$R^9$ and $R^{11}$ each independently denote a hydrogen atom or a methyl group. $R^{10}$ denotes an alkylene group

having 1 to 12 carbon atoms, and preferably an alkylene group having 2 to 4 carbon atoms. The alkylene group may have a substituent (e.g. a hydroxy group), and may be bonded via an ester bond, an ether bond, an amide bond, etc. Z denotes a phenyl group, a phenyl group having an alkyl group having 1 to 4 carbon atoms, or -COOR$^{12}$ (R$^{12}$ denotes an alkyl group having 1 to 6 carbon atoms, a phenyl group, or an arylalkyl group having 7 to 10 carbon atoms), and q is 20 to 200. Z is preferably a phenyl group or -COOR$^{12}$ (R$^{12}$ denotes an alkyl group having 1 to 12 carbon atoms).

Preferred examples of the polymerizable oligomer (macromonomer) include poly(methyl (meth)acrylate), poly(n-butyl (meth)acrylate), poly(i-butyl (meth)acrylate), and a polymer having a (meth)acryloyl group bonded to one terminal of a polystyrene molecule. Such polymerizable oligomers that are commercially available include a single terminal methacryloylated polystyrene oligomer (Mn=6,000, trade name: AS-6, Toagosei Co., Ltd.), a single terminal methacryloylated polymethyl methacrylate oligomer (Mn=6,000, trade name: AA-6, Toagosei Co., Ltd.), a single terminal methacryloylated poly-n-butyl methacrylate oligomer (Mn=6,000, trade name: AB-6, Toagosei Co., Ltd.).

The polymerizable oligomer is not only a polymerizable oligomer represented by formula (5) above, but is preferably a polymerizable oligomer represented by formula (6) below.

Formula (6)

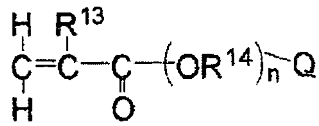

In formula (6), R$^{13}$ denotes a hydrogen atom or a methyl group, and R$^{14}$ denotes an alkylene group having 1 to 8 carbon atoms. Q denotes -OR$^{15}$ or -OCOR$^{16}$. R15 and R$^{16}$ denote a hydrogen atom, an alkyl group, or an aryl group. n denotes 2 to 200.

In formula (6), R$^{13}$ denotes a hydrogen atom or a methyl group. R$^{14}$ denotes an alkylene group having 1 to 8 carbon atoms; among them, an alkylene group having 1 to 6 carbon atoms is preferable, and an alkylene group having 2 to 3 carbon atoms is more preferable. Q denotes -OR$^{15}$ or -OCOR$^{16}$. R$^{15}$ is a hydrogen atom, an alkyl group having 1 to 18 carbon atoms, a phenyl group, or a phenyl group substituted with an alkyl group having 1 to 18 carbon atoms. R$^{16}$ is an alkyl group having 1 to 18 carbon atoms. Furthermore, n denotes 2 to 200, preferably 5 to 100, and more preferably 10 to 100.

Examples of the polymerizable oligomer represented by formula (6) above include polyethylene glycol mono(meth)acrylate, polypropylene glycol mono(meth)acrylate, polyethylene glycol polypropylene glycol mono(meth)acrylate, and polytetramethylene glycol monomethacrylate, and they may be commercial products or may be synthesized as appropriate.

The polymerizable monomer represented by formula (6) above is commercially available as described above, and examples of the commercial products include methoxy polyethylene glycol methacrylate (trade names: NK ESTER M-40G, M-90G, and M-230G, all manufactured by Shin-Nakamura Chemical Co., Ltd.; trade names: BLEMMER PME-100, PME-200, PME-400, PME-1000, PME-2000, and PME-4000, all manufactured by NOF Corporation), polyethylene glycol monomethacrylate (trade names: BLEMMER PE-90, PE-200, and PE-350, manufactured by NOF Corporation), polypropylene glycol monomethacrylate (trade names: BLEMMER PP-500, PP-800, and PP-1000, manufactured by NOF Corporation), polyethylene glycol polypropylene glycol monomethacrylate (trade name: BLEMMER70PEP-350B, manufactured by NOF Corporation), polyethylene glycol polytetramethylene glycol monomethacrylate (trade name: BLEMMER 55PET-800, manufactured by NOF Corporation), and polypropylene glycol polytetramethylene glycol monomethacrylate (trade name: BLEMMER NHK-5050, manufactured by NOF Corporation).

In addition to the polymerizable oligomers of the formulas (5) and (6), a polycaprolactone monomer is also preferable, and commercially available products include a polycaprolactone monomethacrylate (trade names: PLACCEL FM2D, FM3, FM5, FA1DDM, FA2D, manufactured by Daicel Chemical Industries, Ltd.), and the like.

In the production of the polymer or copolymer of a vinyl monomer, for example, a method according to a radical polymerization method can be applied. Polymerization conditions during manufacturing the polymer or the copolymer of the vinyl monomer with the radical polymerization method, such as a temperature, pressure, type of a radical initiator and amount thereof, type of solvent, and the like are easily determined by a person skilled in the art, and the polymerization conditions can be determined experimentally.

The polymer or copolymer of a vinyl monomer may be a polymer compound having a functional group at its terminal. The functional group is preferably a functional group having an excellent adsorption capability to a precipitated pigment.

A polymer compound having a functional group at its terminal can be synthesized by, for example, a method of performing radical polymerization using a chain transfer agent containing a functional group, a method of performing polymerization (for example, radical polymerization, cationic polymerization, anionic polymerization or the like) using a

polymerization initiator containing a functional group, or the like.

Examples of the chain transfer agent capable of introducing a functional group at a polymer compound terminal include mercapto compounds (such as, for example, thioglycolic acid, thiomalic acid, thiosalicylic acid, 2-mercaptopropionic acid, 3-mercaptopropionic acid, 3-mercaptobutyric acid, N-(2-mercaptopropyonyl) glycine, 2-mercaptonicotinic acid, 3-[N-(2-mercaptoethyl)carbamoyl]propionic acid, 3-[N-(2-mercaptoethyl) amino]propionic acid, N-(3-mercaptopropionyl)alanine, 2-mercaptoethanesulfonic acid, 3-mercaptopropanesulfonic acid, 4-mercaptobutanesulfonic acid, 2-mercaptoethanol, 3-mercapto-1,2-propanediol, 1-mercapto-2-propanol, 3-mercapto-2-butanol, mercaptophenol, 2-mercaptoethylamine, 2-mercaptoimidazole, 2-mercapto-3-pyridinol, benzenethiol, toluenethiol, mercaptoacetophenone, naphthalenthiol, and naphthalenemethanethiol), disulfide compounds which are the oxidized compounds of the foregoing mercapto compounds, and halogenated compounds (such as, for example, 2-iodoethanesulfonic acid, and 3-iodopropanesulfonic acid).

Examples of the polymerization initiator capable of introducing a functional group at a polymer compound terminal include 2,2'-azobis (2-cyanopropanol), 2,2'-azobis (2-cyanopentanol), 4,4'-azobis (4-cyanovaleric acid), 4,4'-azobis(4-cyanovaleric acid chloride), 2,2'-azobis[2-(5-methyl-2imidazoline-2-yl)propane], 2,2'-azobis [2-(2-imidazoline-2-yl)propane], 2,2'-azobis[2-(3,4,5,6-tetrahydropyrimidine-2-yl) propane], 2,2'-azobis {2-[1-(2-hydroxyethyl)-2-imidazoline-2-yl]propane}, 2,2'-azobis [2-methyl-N-(2-hydroxyethyl)-propionamide], and the like, and derivatives thereof.

Further, in the present embodiment, the polymer compound represented by formula (21) may be also used as a dispersing agent.

Formula (21) $(HOOC\text{-})_m\text{-}R^1\text{-}(\text{-}COO\text{-}[\text{-}R^3\text{-}COO\text{-}]_n\text{-}R^2)_1$

(In the formula (21), $R^1$ is a residue of tetracarboxylic acid compound; $R^2$ is a residue of monoalcohol; $R^3$ is a residue of lactone; m is 2 or 3; n is an integer from 1 to 50; and t is (4-m).)

Further, the polymer compound represented by the formula (21) may have a repeating unit represented by the following formula (22).

Formula (22) $\text{-}CH_2\text{-}C(R^{14})(Y\text{-}R^{15}\text{-}Z)\text{-}$

(In the formula (22), $R^{14}$ is a hydrogen atom or a substituted or unsubstituted alkyl group; $R^{15}$ is a single bond or a divalent linking group; Y is -CO-, -C(=O)O-, -CONH-, - OC(=O)-, or a phenylene group; and Z is a group having a nitrogen-containing heterocyclic structure).

Use amount of the embedding dispersing agent is not specifically limited. However, for precipitating the pigment particulates, the amount to be added to a system is preferably in the range of 10 to 300 parts by mass, more preferably in the range of 10 to 120 parts by mass, and particularly preferably in the range of 20 to 100 parts by mass, compared to 100 parts by mass of the pigment. As described above, it is preferable that 10% by mass or more of the embedding dispersing agent added for the re-precipitation method are buried within the particulates of the present embodiment. The embedding dispersing agent may be used either singly or in combination of two or more thereof. The content of the embedding dispersing agent in the dispersion of the present embodiment is not specifically limited. However, it is practical that the upper limit thereof is an amount added to the system and the lower limit thereof is an amount that is actually buried in the particulates. Specifically, 1 to 294% by mass is preferable and 2 to 99% by mass is more preferable.

Examples of the polymer compound that can be used in the present embodiment as the embedding dispersing agent is shown below, but the present invention is not intended to be limited thereto.

(1) Polymethyl methacrylate
(2) Polypropylene glycol
(3) Poly(ε-caprolactone)
(4) A copolymer of methyl methacrylate, and styrene
(5) A copolymer of benzyl methacrylate, and acrylic acid
(6) A copolymer of methyl methacrylate, and dimethylaminopropyl acrylamide
(7) A copolymer of methyl methacrylate, and a monomer, which provides the above exemplified component Q-17
(8) A copolymer of methyl methacrylate, a monomer, which provides the above exemplified component Q-17, and polymethyl methacrylate having a methacryloyl group at its terminal
(9) A copolymer of a monomer, which provides the above exemplified component M-1, styrene, and methacrylic acid
(10) A copolymer of a monomer, which provides the above exemplified component M-1, polymethyl methacrylate having a methacryloyl group at its terminal, and methacrylic acid
(11) A copolymer of a monomer, which provides the above exemplified component M-1, polymethyl methacrylate having a methacryloyl group at its terminal, and dimethylaminopropyl acrylamide
(12) A copolymer of a monomer, which provides the above exemplified component Q-22, polystyrene having a

methacryloyl group at its terminal, and methacrylic acid

(13) A copolymer of a monomer, which provides the above exemplified component Q-10, polybutyl methacrylate having a methacryloyl group at its terminal, and methacrylic acid

(14) A copolymer of a monomer, which provides the above exemplified component M-1, polyethylene glycol polypropylene glycol having a (meth)acryloyl group at its terminal, and methacrylic acid

(15) A copolymer of a monomer, which provides the above exemplified component Q-4, polyethylene glycol having a (meth)acryloyl group at its terminal, and methacrylic acid

(16) A copolymer of a monomer, which provides the above exemplified component Q-1, polypropylene glycol having a (meth)acryloyl group at its terminal, and methacrylic acid

(17) A copolymer of a monomer, which provides the above exemplified component M- 1, polycaprolactone having a methacryloyl group at its terminal, and methacrylic acid

(18) A copolymer of a monomer, which provides the above exemplified component Q-21, polystyrene having a methacryloyl group at its terminal, methacrylic acid, and dimethylaminopropyl acrylamide

(19) A copolymer of a monomer, which provides the above exemplified component M-1, and polymethyl methacrylate having a methacryloyl group at its terminal

(20) A copolymer of a monomer, which provides the above exemplified component Q-22, styrene, and dimethylaminopropyl acrylamide

(21) A copolymer of a monomer, which provides the above exemplified component M-1, N,N-dimetyl-4-vinylbenzamide, and methacrylic acid

(22) A copolymer of a monomer, which provides the above exemplified component Q-23. 4-t-butyl styrene, and methacrylic acid

(23) A copolymer of a monomer, which provides the above exemplified component M-3, methacrylic acid, and polymethyl methacrylate having a methacryloyl group at its terminal

(24) A copolymer of a monomer, which provides the above exemplified component Q-24, methacrylic acid, and polycaprolactone having a methacryloyl group at its terminal

(25) A copolymer of a monomer, which provides the above exemplified component M-2, polymethyl methacrylate having a methacryloyl group at its terminal, and polyethylene glycol polypropylene glycol having a (meth)acryloyl group at its terminal

(26) A copolymer of a monomer, which provides the above exemplified component M-7, methacrylic acid, polymethyl methacrylate having a methacryloyl group at its terminal, and polyethylene glycol mono(meth)acrylate

(27) A copolymer of a monomer, which provides the above exemplified component Q-9, 4-vinylpyridine, and polymethyl methacrylate, having a methacryloyl group at its terminal

(28) A copolymer of a monomer, which provides the above exemplified component M-10, polybutyl methacrylate having a methacryloyl group at its terminal, and N-vinylimidazole

(29) A copolymer of a monomer, which provides the above exemplified component M-1, methacrylic acid, poly(n-butyl methacrylate) having a methacryloyl group at its terminal, polymethyl methacrylate having a methacryloyl group at its terminal

(30) A copolymer of a monomer, which provides the above exemplified component Q-4, acrylic acid, and polymethyl methacrylate having a methacryloyl group at its terminal

(31) A copolymer of a monomer, which provides the above exemplified component M-13, styrene, and methacrylic acid

(32) A copolymer of a monomer, which provides the above exemplified compound M-1, methacrylic acid, polymethyl methacrylate having a methacryloyl group at its terminal, and dodecyl methacrylate

(33) A copolymer of a monomer, which provides the above exemplified component Q-1, methacrylic acid, polystyrene having a methacryloyl group at its terminal, and stearyl methacrylate

(34) A copolymer of methacrylic acid, polymethyl methacrylate having a methacryloyl group at its terminal, and isobornyl methacrylate

(35) A copolymer of cyclohexyl methacrylate, and 4-vinylpyridine

(36) A copolymer of a monomer, which provides the above exemplified component Q-1, and butyl methacrylate

(37) A copolymer of a monomer, which provides the above exemplified component M-1. styrene, methacrylic acid, and methyl methacrylate

(38) A copolymer of a monomer, which provides the above exemplified component M-2, styrene, and butyl methacrylate

(39) A copolymer of a monomer, which provides the above exemplified component Q-21, t-butyl methacrylate, and methacrylic acid

(40) A copolymer of a monomer, which provides the above exemplified component Q-10, styrene, and butyl acrylamide

(41) A copolymer of methyl methacrylate, and methacrylic acid

Further, commercially available polymer compounds may also be used in addition to the above compounds. Examples of commercially available block polymers include "Disperbyk-2000 and 2001" (trade names, manufactured by BYK Chemie), "EFKA 4330, 4340" (trade names, manufactured by EFKA), and the like. Examples of commercially available graft polymers include "SOLSPERSE 24000, 28000, 32000, 38500, 39000, and 55000" (trade names, manufactured by Lubrizol Corporation) and "Disperbyk-161, 171 and 174" (trade names, manufactured by BYK Chemie). Examples of commercial terminal modified polymers include "SOLSPERSE 3000, 17000, and 27000" (trade names, manufactured by Lubrizol Corporation).

In the present embodiment, the embedding dispersing agent is used preferably in the range of 0.1 to 0.4 parts by mass and more preferably in the range of 0.1 to 0.2 parts by mass, to 1 part by mass of the pigment.

[Crystal growth inhibitor]

In the present embodiment, it is preferable that a crystal growth inhibitor coexists when pigment particulates are produced by the re-precipitation method. It is also preferable to add an organic compound containing a basic group and a heterocyclic group. In addition to those described in the first embodiment, examples of the compound that are preferred in the present embodiment include the followings.

Examples of such an organic compound is not particularly limited, but examples thereof include 2-aminopyridine, 3-aminopyridine, 1-(2-aminophenyl)pyrrole, 5-aminopyrazole, 3-amino-5-methylpyrazole, 5-amino-l-ethylpyrazole, 3-aminotriazole, 2-aminothiazole, 5-aminoindole, 2-aminobenzothiazole, 5-aminobenzimidazole, N,N-dimethyl-5-aminobenzimidazole, phthalimide, 5-aminobenzimidazolone, N,N-dimethyl-5-aminobenzimidazolone, 5-aminouracil, 6-aminouracil, uracil, thymine, adenine, guanine, melamine, aminopyrazine, 8-aminoquinoline, 3-aminoquinoline, 9-aminoacridine, ASTRA Blue 6GLL (basic phthalocyanine derivative), 2-aminoanthraquinone, 3-aminoanthraquinone, acridone, N-acridone, quinacridone, NILE Red, Methylene Violet Naphthalimide, and the like. Preferred examples include 2-aminobenzothiazole, 5-aminobenzimidazole, N,N-dimethyl-5-aminobenzimidazole, 5-aminobenzimidazolone, N,N-dimethyl-5-aminobenzimidazolone, 5-aminouracil, 6-aminouracil, uracil, thymine, adenine, guanine, melamine, 8-aminoquinoline, 3-aminoquinoline, 9-aminoacridine, ASTRA Blue 6GLL (basic phthalocyanine derivative), 2-aminoanthraquinone, 3-aminoanthraquinone, acridone, N-acridone, quinacridone, NILE Red, and Methylene Violet Naphthalimide. More preferred examples include 9-aminoacridine, ASTRA Blue 6GLL (basic phthalocyanine derivative), 2-aminoanthraquinone, 3-aminoanthraquinone, acridone, N-acridone, 5-aminobenzimidazole, N,N-dimethyl-5-aminobenzimidazole, 5-aminobenzimidazolone, N,N-dimethyl-5-aminobenzimidazolone, 5-aminouracil, 6-aminouracil, NILE Red, and Methylene Violet Naphthalimide.

Addition amount of the organic compound containing a basic group and a heterocyclic group is preferably in the range of 0.01 to 40% by mass, more preferably in the range of 0.05 to 30% by mass, and particularly preferably in the range of 0.05 to 25% by mass, to the pigment.

Other examples include pigment derivatives that are described in JP-A-56-118462, JP-A-63-264674, JP-A-1-217077. JP-A-3-9961, JP-A-3-26767, JP-A-3-153780, JP-A-3-45662, JP-A-4-285669, JP-A-6-145546, JP-A-6-212088, JP-A-6-240158, JP-A-7-331182, JP-A-10-30063, JP-A-10-195326, JP-A-2007-9096, and JP-A-2008-24873. As used herein, the term "pigment derivative" indicates a pigment derivative compound which is derived from an organic pigment as a parent substance and produced by chemical modification of a parent structure and a pigment derivative compound obtained by pigmentization of a chemically modified pigment precursor. Examples of the commercially available product include "EFKA 6745 (trade name, manufactured by EFKA, phthalocyanine derivative)" and "SOLSPERSE 5000 (trade name, manufactured by Lubrizol, phthalocyanine derivative). When a pigment derivative is used, the use amount is preferably in the range of 0.5 to 40% by mass, more preferably in the range of 3 to 30% by mass, and particularly preferably in the range of 5 to 25% by mass compared to the pigment.

The crystal growth inhibitor is preferably buried within the pigment particulates. Determining being buried, or measuring the buried amount can be carried out, for example, in the same manner as those described above for the buried dispersing agent. The incorporation ratio is preferably 0.5 to 40% by mass. The buried ratio is preferably 1 to 30% by mass. Specific examples of the pigment derivative include SS-1 and SS-2 that are shown in the following Examples.

[Combination dispersing agent]

For the pigment particulates of the present embodiment, a buried dispersing agent having the specific structure above is mainly used. Although the dispersing agent buried within the particulates is preferable, a dispersing agent not buried in the particulates can be also used. The dispersing agent to be used in combination can be used for controlling viscosity of a dispersion, providing reactivity with the buried dispersing agent, providing an activity of interacting with the buried dispersing agent, providing affinity for a dispersion medium, achieving deaggregation of particles precipitated with a poor solvent, controlling size of particulates, controlling affinity between a poor solvent and a good solvent, or

providing affinity for a dispersion medium. A common dispersing agent such as a surface active agent, a small molecule dispersing agent, and a polymer dispersing agent can be used in combination. Ratio of the dispersing agent to be used in combination is, although not specifically limited, preferably in the range of 0.01 to 1 part by mass and more preferably in the range of 0.05 to 0.5 parts by mass compared to 1 part by mass of the buried dispersing agent.

A polymer compound can be used as a combination dispersing agent. Further, examples of the polymer compound include block-copolymers, random copolymers, or graft copolymers, or modified materials of these copolymers and salts thereof, each of which is composed of at least two monomer components selected from styrene, styrene derivatives, vinylnaphthalene, vinylnaphthalene derivatives, aliphatic alcohol esters of α,β-ethylenycally unsaturated carboxylic acid, acrylic acid, acrylic acid derivatives, methacrylic acid, methacrylic acid derivatives, maleic acid, maleic acid derivatives, alkenyl sulfonic acids, vinyl amines, allyl amines, itaconic acid, itaconic acid derivatives, fumaric acid, fumaric acid derivatives, vinyl acetate, vinyl phosphoric acid, vinyl pyrrolidone, acrylamide, N-vinyl acetoamide, N-vinylformamide and N-vinylformamide derivatives, with the proviso that at least one of the monomers has a functional group that becomes a carboxylic acid group, a sulfonic acid group, a phosphoric acid group, a hydroxyl group or an alkyleneoxide. Alternatively, natural polymer compounds such as albumin, gelatin, rosin, shellac, starch, gum Arabic, and sodium alginate; and their modified compounds can be also used in combination.

[Production of composition for color filter and production of color filter]

Preferable materials, production order, and condition in the second embodiment are the same as those described in [Concentration - Solvent removing step] and [Production of composition for color filter and production of color filter] in the first embodiment.

EXAMPLES

The present invention will be described in more detail based on examples given below, but the invention is not meant to be limited by these. In the examples "parts" means "mass parts", and "%" means "mass%", unless otherwise indicated.

[Examples and Comparative examples corresponding to the first embodiment]

(Example I-1 and Comparative Example I-1)

To 220 mL of dimethyl sulfoxide, 11 g of C.I. Pigment Red 254 (trade name, Irgazin Red 2030, manufactured by Ciba Specialty Chemicals Corp.) and 1.1 g of each pigment compounds S-1 and S-2 as a particle growth inhibitor are added under room temperature. 21.5 mL of 25% aqueous solution of tetramethyl ammonium hydroxide was further added to the thus-obtained solution and stirred. As a result, an organic pigment solution in which the pigment is dissolved in a good solvent was obtained.

Separately from the above, 2,000 mL of water containing 70 mL of 1 mol/L hydrochloric acid was prepared as a poor solvent.

To the poor solvent which has been stirred at 500 rpm with G-0222-10 Ramond stirrer (trade name, manufactured by Fujisawa Pharmaceutical Co., Ltd.) and controlled to have the temperature of 5°C, the organic pigment solution was injected by using NP-KX-500 mass capacity non-flow type pump (trade name, manufactured by NIHON SEIMITSU KAGAKU CO., LTD.) so that the organic pigment solution was brought into contact with a poor solvent. As a result, organic pigment particulates were precipitated. For the injection of the organic pigment solution, the flow path diameter and supply diameter of liquid transport pipe was 0.5 mm, and the supply inlet was immersed in a poor solvent and the injection was carried out for 2 minutes with flow rate of 100 mL/min. By doing so, the dispersion 1-1 S containing the organic pigment particulates dispersed in a solvent was obtained.

The pigment dispersion lquid produced as above was filtered using a Nutsche having a diameter of 9 cm and filter paper (trade name: No. 2, manufactured by Advantec Co., Japan) under reduced pressure by an aspirator, to obtain a paste containing pigment materials having a particulate shape. By repeating the steps of redispersing the thus-obtained paste in ion exchange water and filtering again, the paste was washed to remove the good solvent and water-soluble ions. Washing of the paste was repeated until that the conductivity is 1 ms/m or less when the paste is dispersed to have pigment concentration of 5%.

Consequently, water paste having solid content concentration of 30% which contains a pigment and a particle growth inhibitor was produced and designated as water paste 1-1W. By carrying out X ray diffraction of pigment powder which is obtained by separately drying part of 1-1W, the ratio of crystal transformation form of the pigment in 1-1W was calculated. From the X ray diffraction pattern, a diffraction peak at 28.1 ± 0.3°, which is the characteristic Bragg angle (2θ) of dichlorodiketopyrrole of α type crystal transformation form, was not observed. Instead, a strong diffraction peak

at 27.0 ± 0.3°, which is the characteristic Bragg angle (2θ) of dichlorodiketopyrrole of β type crystal transformation form, was observed. Thus, it was found that the pigment in 1-1 W is dichlorodiketopyrrole substantially in β type crystal transformation form.

<Crystal transformation step>

To 30 parts by mass of the water paste 1-1W, 189 parts by mass of propylene glycol monomethyl ether acetate was added and stirred at the temperature of 40°C for three hours by using GK-0222-10 Ramond stirrer (trade name, manufactured by Fujisawa Pharmaceutical Co., Ltd.) to conduct crystal transformation. Then, by repeating twice the steps including concentration by Nutsche filtration, washing with ion exchange water, and re-filtration, and replacing the solvent with water, excessive progress of the crystal transformation was terminated. After another concentration by Nutsche filtration, water paste having solid content concentration of 30%, in which the dichlorodiketopyrrolopyrrole pigment obtained after crystal transformation was contained, was obtained. It was designated as water paste 1-1CW. The water paste 1-1 CW was dried for 2 hours at 100°C in an oven. By pulverizing it to 180 μm or less using a mortar and pestle, powder form was obtained. As a result, sample 1-1P, which was a red powder type coloring material (hereinafter, referred to as a "pigment" or a "pigment material") containing the dichlorodiketopyrrole pigment and a particle growth inhibitor, was obtained. As a result of measuring X ray diffraction of the 1-1P by the method described above, a diffraction peak at 28.1 ± 0.3°, which was the characteristic Bragg angle (2θ) of dichlorodiketopyrrolopyrrole in α type crystal transformation form, was observed, indicating that the crystal transformation has progressed by the above operations. Further, from the X ray diffraction results obtained, α type crystallinity degree, the crystallite size in the direction of (-151) face and crystallite size in the direction of (111) face were calculated by the method described above. The calculation results are shown in the Table 1.

<Step of producing pigment dispersion liquid>

By dispersing the mixture of the pigment material having the following composition, a dispersing agent, and a solvent by using a bead mill, the pigment dispersion 1-1D of the present invention was produced. Dispersion was carried out with a sand grinder mill BSG-01 (manufactured by AIMEX) for 1 hour at 1,500 rpm by using zirconia beads having diameter of 0.5 mm and for 4 hours at 2,500 rpm by using zirconia beads having diameter of 0.05 mm.

| | |
|---|---|
| The above-described pigment material 1-1P | 12.0 mass parts |
| Pigment derivative 1 | 0.75 mass part |
| Pigment derivative 2 | 0.75 mass part |
| Dispersion resin 1 | 8.1 mass parts |
| Propylene glycol monomethyl ether acetate | 78.4 mass parts |

The structures of the pigment derivatives 1 and 2 are given below.

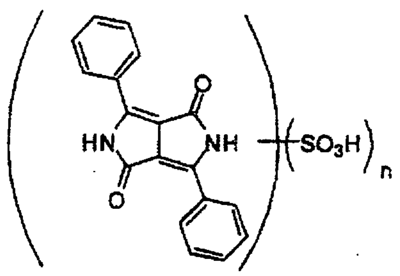

n = 1 or 2

Pigment derivative 2

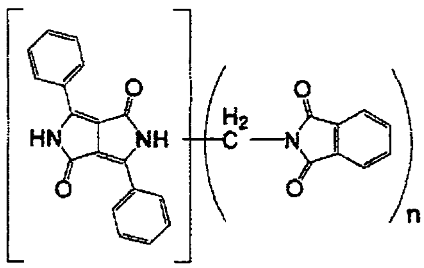

n = 1 or 2

Pigment derivative 1

Dispersion resin 1: AJISPER-PB821 (trade name) manufactured by Ajinomoto Fine-Techno Co., Inc.
Amine value: 10 mgKOH/g
Acid value: 17 mgKOH/g

The pigment dispersion 1-1D obtained from the above was observed under an electron microscope, and as a

result, it was confirmed that fine pigment particles having volume weighed average diameter 20.0 nm (when converted to sphere having the same volume) and fluctuation coefficient of 15% were included therein.

Hereinafter, the pigment particulates were obtained and evaluated in the same manner as the above, except that the condition for pigment particulates was changed to those described in the following Table 1.

The compound N-1 exemplified above was synthesized as follows.

To a three neck flask (1 L), 20 g of PR254, 400 mL of dimethyl sulfoxide, and 18.48 g of potassium tert-butoxide were added and dissolved at 60°C under stirring. To the solution, 1.3 g of potassium iodide and 14.25 g of chloroacetanilide were added and stirred at 60°C for 3 hours. The reaction solution was poured to 1,000 parts by mass of ice water containing 20 parts by mass of hydrochloric acid to precipitate the solid. The precipitates were washed with 2,000 parts by mass of water and then washed with 600 parts by mass of methanol to obtain the compound N-1. According to H-NMR and MS measurement, it was identified as the compound N-1. From the N-NMR, it was identified that PR254 : compound N-1(1) : compound N-1(2) = 37:62:2.

The dispersion liquid 1-1D was evaluated as follows.

(1) Contrast evaluation

The thus-obtained pigment dispersion liquid 1-1D was applied to a glass substrate to give a layer thickness of 2 μm to thereby produce respective samples. As a backlight unit, a three-wavelength cold-cathode-tube light source (FWL18EX-N, trade name, manufactured by Toshiba Lighting & Technology Corporation) provided with a diffuser plate was used. Each of the samples was placed between two sheets of polarizing plates (HLC2-2518, trade name, the polarizing plates were manufactured by Sanritz Corporation), and then amounts of transmitted light at the time when polarization axes of two polarizing plates were parallel and the time when the polarization axes were perpendicular were measured. The ratio of these transmitted light amounts was defined as a contrast (see Color Filter for 512 color display 10.4"-size TFT-LCD. co-authored by Ueki, Koseki, Fukunaga, and Yamanaka, The seventh Color Optics Conference (1990), etc.). The above-described two sheets of polarizing plates, sample, and color luminance meter were placed at the following positions: A polarizing plate was disposed at the distance of 13 mm from the backlight. A cylinder of 11 mm in diameter and 20 mm in length was disposed at the distance of 40 mm to 60 mm from the backlight. The light transmitted through the cylinder was irradiated to a color filter disposed at the distance of 65 mm from the backlight. The transmitted light was passed through another polarizing plate disposed at the distance of 100 mm from the backlight and measured with a color luminance meter disposed at the distance of 400 mm from the backlight. The measuring angle in the color luminance meter was set to 2°. The light amount of the backlight was set so that its brightness (luminance) would be 1,280 cd/$m^2$, when the two sheets of polarizing plates were arranged in a position of parallel nicol and no color filter was disposed.

The contrast value obtained from the above was calculated as the ratio compared to the dispersion 1-2D, and it was classified as follows.

8: Contrast ratio of 10 or more
7: Contrast ratio of 9 or more but less than 10
6: Contrast ratio of 8 or more but less than 9
5: Contrast ratio of 7 or more but less than 8
4: Contrast ratio of 6 or more but less than 7
3: Contrast ratio of 4 or more but less than 6
2: Contrast ratio of 2 or more but less than 4
1: Contrast ratio of less than 2

(2) Viscosity characteristics evaluation

The viscosity characteristics of the pigment dispersion liquid obtained above was measured by using a rotary type viscometer (trade name: RE-85L, manufactured by Toki Sangyo Co.) at 25°C and clasiffied as follows.

6: Viscosity of less than 8 mPa·s, most favorable level.
5: Viscosity of 8 mPa·s or more but less than 10 mPa·s, very favorable level.
4: Viscosity of 10 mPa·s or more but less than 15 mPa·s, favorable level.
3: Viscosity of 15 mPa·s or more but less than 20 mPa·s, acceptable level.
2: Viscosity of 20 mPa·s or more but less than 100 mPa·s, problematic level.
1: Viscosity of 100 mPa·s or more, extremely problematic level.

Pigment dispersion liquids were produced by the same method as that of the dispersion 1-1D, except that the

type, addition amount, and addition time of the particle growth inhibitor and condition of particle transformation were changed as those described in the Table 1 and dispersion time using bead mill is optimized to produce the pigment dispersion liquids 1-2D to 1-25D. The same evaluation as that of the pigment dispersionl-ID was carried out for the pigment dispersion liquids obtained. The particle growth inhibitors used were shown in the following Tables 1-1 and 1-2.

Further, Pigment dispersion liquids were produced by the same method as that of the pigment dispersion 1-3D, except that the type, addition amount, and addition time of the particle growth inhibitor and condition of particle transformation were changed as those described in the Table 1-1 and dispersion time using bead mill was changed to produce the pigment dispersion liquids 1-26D to 1-41D. The particle growth inhibitors used were shown in the following Tables 1-3.

Table 1-1

| | Particle growth inhibitor (Addition at the time of dissolving a pigment) | | Particle growth, inhibitor (Addition at the time of pulverizing a pigment) | | Pigment crystal state (Before crystal transformation) | | Drying before crystal transformation | Relationship to this invention |
|---|---|---|---|---|---|---|---|---|
| Pigment dispersion name | Kind of particle growth inhibitor | Addition amount | Kind of particle growth inhibitor | Addition amount | Crystal transformation form | α type crystallinity degree | | |
| 1-1D | S-1+S-2 | 1.1g+1.1p | None | - | β type | 0.32 | None | This invention |
| 1-2D | S-1+S-2 | 1.1g+1.1g | None | - | β type | 0.32 | None | Comparative Example |
| 1-3D | S-1+S-2 | 1.1g+1.1g | None | - | β type | 0.32 | None | Comparative Example |
| 1-4D | S-1+S-2 | 1.1g+1.1g | None | - | β type | 0.32 | None | Comparative Example |
| 1-5D | S-1+S-2 | 1.1g+1.1g | None | - | β type | 0.32 | None | This invention |
| 1-6D | S-1+S-2 | 1.1g+1.1g | None | - | β type | 0.32 | None | This invention |
| 1-7D | S-1+S-2 | 1.1+1.1g | None | - | β type | 0.32 | None | This invention |
| 1-8D | S-1+S-2 | 1.1g+1.1g | None | - | β type | 0.32 | None | This invention |
| 1-9D | None | - | S-1+S-2 | 1.1g+1.1g | α type/β type coexistence | 0.46 | None | (Comparative Example |
| 1-10D | None | - | S-1+S-2 | 1.1g+1.1g | α type/β type coexistence | 0.46 | None | This invention |
| 1-11D | None | - | S-1+S-2 | 1.1g+1.1g | α type/β type coexistence | 0.46 | None | Comparative Example |
| 1-12D | S-1 | 1.1g | S-2 | 1.1g | β type | 0.33 | None | This invention |
| 1-13D | S-2 | 1.1g | S-1 | 1.1g | β type | 0.35 | None | This invention |
| 1-14D | S-1+S-2 | 0.55g+0.55g | S-1+S-2 | 0.55g+0.55g | β type | 0.31 | None | This invention |
| 1-15D | S-1 | 2.2g | None | - | β type | 0.32 | None | Comparative Example |
| 1-16D | S-2 | 2.2g | None | - | β type | 0.32 | None | Comparative Example |
| 1-17D | S-1+S-3 | 1.1g+1.1g | None | - | β type | 0.3 | None | This invention |

(continued)

| | Particle growth inhibitor (Addition at the time of dissolving a pigment) | | Particle growth, inhibitor (Addition at the time of pulverizing a pigment) | | Pigment crystal state (Before crystal transformation) | | Drying before crystal transformation | Relationship to this invention |
|---|---|---|---|---|---|---|---|---|
| Pigment dispersion name | Kind of particle growth inhibitor | Addition amount | Kind of particle growth inhibitor | Addition amount | Crystal transformation form | α type crystallinity degree | | |
| 1-18D | S-1+S-4 | 1.1g+1.1g | None | - | β type | 0.32 | None | This invention |
| 1-19D | S-5+S-4 | 1.1g+1.1g | None | - | β type | 0.33 | None | This invention |
| 1-20D | S-6+S-4 | 1.1g+1.1g | None | - | β type | 0.33 | None | This invention |
| 1-21D | S-7+S-4 | 1.1g+1.1g | None | - | β type | 0.33 | None | This invention |
| 1-22D | S-1+S-2 | 1.1g+1.1g | None | - | β type | 0.32 | None | This invention |
| 1-23D | S-1+S-2 | 1.1g+1.1g | None | - | β type | 0.32 | None | This invention |
| 1-24D | S-1+S-2 | 1.1g+1.1g | None | - | β type | 0.32 | None | This invention |
| 1-25D | S-1+S-2 | 1.1g+1.1g | None | - | β type | 0.32 | None | This invention |

Table 1-2

| | Crystal transformation step | | Pigment crystal state (After drying and pulverizing) | | | Evaluation results | | Relationship to this invention |
|---|---|---|---|---|---|---|---|---|
| Pigment dispersion name | Solvent of crystal transformation step | Condition of crystal transformation step | $\alpha$ type crystallinity degree | Crystallite size in the direction of (-151) face (nm) | Crystallite size in the direction of (111) face (nm) | Contrast | Viscosity | |
| 1-1D | PGMEA:Water=9:1 | 40°C 3 hr | 0.72 | 9.0 | 17.8 | 5 | 4 | This invention |
| 1-2D | None | None | 0.32 | not calculable | not calculable | 1 | 1 | Comparative Example |
| 1-3D | PGMEA:Water = 9:1 | 20°C 4 hr | 0.63 | 7.5 | 14.2 | 4 | 2 | Comparative Example |
| 1-4D | PGMEA:Water = 9:1 | 40°C 6 hr | 0.85 | 13.5 | 24.5 | 2 | 4 | Comparative Example |
| 1-5D | PGMEA:Water = 9:1 | 40°C 1 hr | 0.66 | 7.9 | 15.5 | 5 | 3 | This invention |
| 1-6D | PGMEA:Water = 9:1 | 40°C 2 hr | 0.69 | 8.2 | 16.8 | 6 | 3 | This invention |
| 1-7D | PGMEA:Water = 9:1 | 40°C 4 hr | 0.78 | 11.0 | 19.4 | 4 | 5 | This invention |
| 1-8D | PGMEA:Water = 9:1 | 40°C 5 hr | 0.81 | 12.0 | 22.2 | 3 | 5 | This invention |
| 1-9D | None | None | 0.46 | not calculable | not calculable | 1 | 1 | Comparative Example |
| 1-100 | PGMEA:Water = 9:1 | 20°C 1 hr | 0.68 | 12.0 | 22.0 | 3 | 3 | This invention |
| 1-11D | PGMEA:Water = 9:1 | 20°C 2 hr | 0.72 | 13.5 | 24.5 | 2 | 3 | Comparative Example |
| 1-12D | PGMEA:Water = 9:1 | 40°C 2 hr | 0.73 | 8.5 | 19.7 | 4 | 3 | This invention |
| 1-13D | PGMEA:Water = 9:1 | 40°C 2 hr | 0.73 | 12.0 | 14.3 | 3 | 3 | This invention |
| 1-14D | PGMEA:Water = 9:1 | 40°C 2 hr | 0.72 | 9.8 | 18.5 | 4 | 3 | This invention |
| 1-15D | PGMEA:Water = 9:1 | 40°C 4 hr | 0.73 | 7.5 | 24.5 | 2 | 2 | Comparative Example |
| 1-16D | PGMEA:Water = 9:1 | 40°C 2 hr | 0.73 | 14.0 | 14.3 | 2 | 4 | Comparative Example |
| 1-17D | PGMEA:Water = 9:1 | 40°C 3 hr | 0.72 | 9.0 | 18.5 | 5 | 4 | This invention |
| 1-18D | PGMEA:Water = 9:1 | 40°C 3 hr | 0.71 | 8.5 | 17.4 | 5 | 4 | This invention |

(continued)

| | Crystal transformation step | | Pigment crystal state (After drying and pulverizing) | | | Evaluation results | | Relationship to this invention |
|---|---|---|---|---|---|---|---|---|
| Pigment dispersion name | Solvent of crystal transformation step | Condition of crystal transformation step | α type crystallinity degree | Crystallite size in the direction of (-151) face (nm) | Crystallite size in the direction of (111) face (nm) | Contrast | Viscosity | |
| 1-19D | PGMEA:Water = 9:1 | 20°C 8 hr | 0.71 | 9.4 | 17.3 | 5 | 4 | This invention |
| 1-20D | PGMEA:Water = 9:1 | 20°C 8 hr | 0.71 | 9.9 | 17.3 | 4 | 4 | This invention |
| 1-21D | PGMEA:Water = 9:1 | 20°C 6 hr | 0.71 | 9.7 | 17.3 | 5 | 4 | This invention |
| 1-22D | Methanol:Water = 9:1 | 40°C 3 hr | 0.72 | 8.7 | 19.0 | 5 | 4 | This invention |
| 1-23D | Ethyl acetate:Water = 9:1 | 40°C 3 hr | 0.71 | 8.5 | 18.5 | 5 | 4 | This invention |
| 1-24D | Isobutanol:Water = 9:1 | 40°C 3 hr | 0.71 | 9.0 | 18.3 | 5 | 4 | This invention |
| 1-25D | MEK:Water = 9:1 | 40°C 3 hr | 0.72 | 8.6 | 19.4 | 5 | 4 | This invention |
| PGMEA: Propylene glycol monomethyl ether acetate | | | | | | | | |

Table 1-3

| Pigment dispersion liquid name | Particle growth inhibitor (Addition at the time of dissolving a pigment) | | Pigment crystal transformation form before crystal transformation | Crystal transformation step Condition of transformation step | Relationship to this invention |
|---|---|---|---|---|---|
| | Kind of particle growth inhibitor | Addition amount | | | |
| 1-26D | S-4+N-1 | 0.55g+1.65g | β type | 20°C 1 hr | This invention |
| 1-27D | the same as the above | the same as the above | β type | 20°C 2 hr | This invention |
| 1-28D | the same as the above | the same as the above | β type | 20°C 4 hr | This invention |
| 1-29D | the same as the above | the same as the above | β type | 20°C 8 hr | Comparative Example |
| 1-30D | S-4+N-2 | 0.55g+1.65g | β type | 20°C 2 hr | This invention |
| 1-31D | S-4+N-3 | 0.55g+1.65g | β type | 20°C 2 hr | This invention |
| 1-32D | S-4+N-4 | 0.55g+1.65g | β type | 20°C 2 hr | This invention |
| 1-33D | S-4+N-5 | 0.55g+1.65g | β type | 20°C 2 hr | This invention |
| 1-34D | S-4+N-6 | 0.55g+1.65g | β type | 20°C 2 hr | This invention |
| 1-35D | S-1+S-4+N-1 | 0.825g + 0.825g + 0.55g | β type | 40°C 2 hr | This invention |
| 1-36D | the same as the above | the same as the above | β type | 40°C 4 hr | This invention |
| 1-37D | S-1+S-4+N-1 | 0.55g+0.55g+1.1g | β type | 20°C 2 hr | This invention |
| 1-38D | the same as the above | the same as the above | β type | 20°C 3 hr | This invention |
| 1-39D | N-1 | 2.2g | β type | 20°C 1 hr | This invention |
| 1-40D | the same as the above | the same as the above | β type | 20°C 2 hr | This invention |
| 1-41D | the same as the above | the same as the above | β type | 20°C 4 hr | This invention |

| Pigment dispersion liquid name | Pigment crystal state (After drying and pulverizing) | | | Evaluation results | | Relationship to this invention |
|---|---|---|---|---|---|---|
| | α type crystallinity degree | Crystallite size in the direction of (-151) face (nm) | Crystallite size in the direction of (111) face (nm) | Contrast | Viscosity | |
| 1-26D | 0.72 | 9.0 | 9.0 | 7 | 4 | This invention |
| 1-27D | 0.81 | 10.6 | 10.3 | 8 | 6 | This invention |
| 1-28D | 0.83 | 12.3 | 13.8 | 6 | 6 | This invention |
| 1-29D | 0.87 | 14.3 | 17.2 | 2 | 5 | Comparative Example |
| 1-30D | 0.80 | 11.0 | 11.4 | 7 | 6 | This invention |
| 1-31D | 0.79 | 10.9 | 11.8 | 7 | 6 | This invention |
| 1-32D | 0.83 | 11.5 | 13.4 | 8 | 5 | This invention |
| 1-33D | 0.81 | 12.5 | 12.8 | 7 | 6 | This invention |
| 1-34D | 0.81 | 12.5 | 12.8 | 7 | 6 | This invention |
| 1-35D | 0.71 | 9.4 | 14.3 | 6 | 4 | This invention |
| 1-36D | 0.83 | 11.8 | 18.2 | 4 | 5 | This invention |
| 1-37D | 0.71 | 9.9 | 10.8 | 7 | 5 | This invention |
| 1-38D | 0.83 | 12.6 | 14.3 | 6 | 6 | This invention |
| 1-39D | 0.72 | 10.8 | 9.0 | 6 | 6 | This invention |
| 1-40D | 0.80 | 12.3 | 10.3 | 7 | 5 | This invention |
| 1-41D | 0.85 | 11.8 | 14.1 | 6 | 6 | This invention |

From the results of the Tables 1-1 and 1-2, it was found that the pigment dispersion liquid in which the α type crystallinity degree, crystallite size in the direction of (-151) face, and crystallite size in the direction of (111) face of the dichlorodiketopyrrole pigment are adjusted to be within the scope of the present invention have good contrast characteristics and good viscosity characteristics (see, the comparison between the dispersion liquid sample of the Examples and the dispersion liquid sample of the Comparative examples). Herein, it was also found that, although the α type crystallinity degree is within the scope of the present invention, a dispersion liquid sample which does not satisfy the crystallite size requirement of the present invention has deteriorated contrast characteristics or viscosity characteristics, and therefore undesirable (the sample 1-11D and the sample 1-15D).

Further, to have the α type crystallinity degree, crystallite size in the direction of (-151) face, and crystallite size in the direction of (111) face all within the preferred range of the present invention, i.e., to have smaller crystallite size

in the direction of (-151) face and smaller crystallite size in the direction of (111) face for a crystal having the same α crystallinity degree, it was found to be effective to add a particle growth inhibitor at the time of dissolving a pigment and carry out the crystal transformation step in the presence of the particle growth inhibitor (see, the comparison between the dispersion sample 1-1D and dispersion 1-11D).

In particular, it was found that, by using the pigment derivative having a diketopyrrolopyrrole skeleton and the pigment derivative having a quinacridone skeleton in combination, both the crystallite size in the direction of (-151) face, and crystallite size in the direction of (111) face can be effectively micronized (see, the comparison between the dispersion liquid sample 1-1D and the sample 1-15D or the sample 1-16D).

It was found from the results of the Table 1-3 that, when the α type crystallinity degree was set at the same level, the crystallite size in the direction of (111) face could be effectively suppressed by using the N-1 to N-6, that were the preferred derivative of the present invention, compared to a case in which none of the N-1 to N-6 derivative was used (see, for example, the comparison between the sample 1-18D and the sample 1-34D or the sample 1-37D). Further, an improvement in contrast and/or viscosity was shown, and therefore it confirmed that the dispersion properties could be effectively improved by suppressing the crystallite size in the direction of (111) face.

Relationship (excerpted) between the alpharization degree and crystallite size in the Examples and Comparative examples is illustrated in FIG. 4. In FIG. 4, same plot symbols indicate the sample with the same type and same use amount of crystal growth inhibitor for each crystal transformation, and multiple plots for the same symbol (in plot form) indicate a sample with changed α type crystallinity degree by changing the temperature and time for transformation while the type and use amount of the crystal growth inhibitor remained the same. In FIG. 4, a plot with the same symbol shows showed a tendency of up and right direction, i.e., the crystallite size increases according to an increase in the α type crystallinity degree. In other words, the up and right tendency of the plot in FIG. 4 suggests that the pigment particulates in a down and right direction in the figure are difficult to produce. It is thought that, by using the crystal growth inhibitors S-1 and S-2 for a sample in which no crystal growth inhibitor was used, the crystallite size was reduced while the α type crystallinity degree was maintained at the same level, and it indicates an improvement in the trade-off relationship between the dispersion liquid viscosity reduction and the dispersion contrast increase. Further, when S-4 and N-1 were used in combination as a crystal growth inhibitor, the crystallite size in the direction of (111) face could be suppressed in particular, and therefore more preferable. On the other hand, when S-1 was used alone as a crystal growth inhibitor, the crystallite size in the direction of (-151) face decreased while the crystallite size in the direction of (111) face increased. Further, when S-2 was used alone as a crystal growth inhibitor, the crystallite size in the direction of (-151) face increased while the crystallite size in the direction of (111) face decreased. In this regard, it is thought that, when only one crystal growth inhibitor is used to excessively suppress the crystal growth in the direction of specific crystal face, the crystal growth in the direction of crystal face that is not suppressed is promoted.

(Comparative Example I-1A)

Further, a pigment dispersion liquid was prepared as follows based on the conventional technique, and it was confirmed that a pigment dispersion liquid within the scope of the present invention were not obtained from them.

(Comparative Example I-1A-1)

A step for obtaining a solution of alkali metal salt of the dichlorodiketopyrrolopyrrole pigment was carried out in the same manner as the Examples of Japanese Patent No. 4144655. However, the pigment was precipitated so that a solution of the alkali metal salt could not be obtained. According to this result, a solution of alkali metal salt of the dichlorodiketopyrrolopyrrole pigment was prepared according to the following method.

(Comparative Example I-1A-2)

As shown below, composition of a poor solvent, condition for particle formation and condition for crystal transformation were set close to those of the Examples I-1 and 1-2 of Japanese Patent No. 4144655 and isobutyl alcohol and caustic soda were used as a transformation solvent to prepare each of a pigment material 3-1P and a dispersion liquid 3-1D, a pigment material 3-2P and a dispersion liquid 3-2D.

◦ Production of Sample 3-1

To 308 mL of dimethyl sulfoxide, 15.4 g of C.I. Pigment Red 254 (trade name: Irgazin Red 2030, manufactured by Ciba Specialty Chemicals Co.) and 8.32 g of methanol solution of sodium methoxide (28%) were added and stirred under room temperature. As a result, a solution of alkali metal salt of dichlorodiketopyrrolopyrrole pigment containing the pigment dissolved in a good solvent was obtained, and then heated to 90°C.

Separately, as a poor solvent, 600 g of methanol, 600 g of water, and 2.6 g of acetic acid were mixed and cooled to -10°C. The solution of alkali metal salt of dichlorodiketopyrrolopyrrole pigment at 90°C which has been obtained

from the above was added thereto individually with small portions over 60 minutes while constantly cooling the solution to the temperature of 0°C or below. As a result, a dispersion containing the organic pigment particulates dispersed in a solvent was obtained.

The pigment dispersion liquid obtained from the above was separated by using a Nutsche and filter paper and then washed with 300 g of methanol cooled to 10°C and 1,000 mL of water. The red paste obtained was dispersed again in a mixture of 400 g of water and 400 g of methanol, and separated by filtration using a Nutsche to obtain an aqueous paste of the diketopyrrolopyrrole pigment. The paste was dried at 80°C for 24 hours and further pulverized to obtain crude crystal powder composed of α and β type mixture crystals.

The crude crystal powder obtained was added to a solution in which 1,500 g of isobutyl alcohol and 5.6 g of aqueous solution of 25% caustic soda were contained and cooled to 10°C, and stirred for 6 hours to perform the crystal transformation. Then, pH was adjusted to 7 or less with acetic acid, filtered by Nutsche filtration, and washed by adding 1,000 g of methanol and 1,000 g of water cooled to 10°C followed by drying to produce the pigment material 3-1P. Further, the dispersion liquid 3-1D was produced in the same manner as the production method for the pigment dispersion 1-1D of the Example I-1, except that the pigment material was changed to 3-1P and the dispersion time was further optimized to produce a dispersion.

o Production of Sample 3-2

To 308 mL of dimethyl sulfoxide, 15.4 g of C.I. Pigment Red 254 (trade name: Irgazin Red 2030, manufactured by Ciba Specialty Chemicals Co.) and 8.32 g of methanol solution of sodium methoxide (28%) were added and stirred under room temperature. As a result, a solution of alkali metal salt of dichlorodiketopyrrolopyrrole pigment containing the pigment dissolved in a good solvent was obtained, heated to 90°C, and then cooled to 75°C.

Separately, as a poor solvent, 600 g of methanol, 600 g of water, and 6.76 g of acetic acid were mixed and cooled to -10°C. The solution of alkali metal salt of diketopyrrolopyrrole pigment at 75°C which has been obtained from the above was added thereto individually with small portions over 120 min while constantly cooling the solution to the temperature of 5°C or below. As a result, a dispersion liquid containing the organic pigment particulates dispersed in a solvent was obtained.

The pigment dispersion liquid obtained from the above was separated by using a Nutsche and filter paper and washed with 3,000 g of methanol cooled to 0°C and 1,000 mL of water cooled to 5°C. To the red paste obtained, methanol was added to give a suspension having methanol concentration of 90%. By stirring for 3 hours at 5°C, crystal transformation was carried out. The resultant was filtered by using Nutsche washed and separated with 1,000 mL of water at 5°C. After drying for 24 hours at 80°C and further pulverization, the pigment material 3-2P was prepared. Further, the dispersion liquid 3-2D was produced in the same manner as the production method for the pigment dispersion 1-1D of the Example I-1, except that the pigment material was changed to 3-2P and the dispersion time was further optimized to produce a dispersion.

The α type crystallinity degree, crystallite size in the direction of (-151) face, and crystallite size in the direction of (111) face of the pigment materials 3-1P and 3-2P were calculated in the same manner as the Examples I-1 and I-2 based on X ray diffraction. The evaluation was carried out for the pigment dispersion liquids 3-1D and 3-2D in the same manner as the Example I-1. The results are shown in the following table.

Table A

| | Crystal transformation step | | Pigment crystal state (After drying and pulverizing) | | | Evaluation results | | Relationship to this invention |
|---|---|---|---|---|---|---|---|---|
| Pigment dispersion liquid name | Solvent of crystal transformation | Condition of crystal transformation | α type crystallinity degree | Crystallite size in the direction of (-151) face (nm) . | Crystallite size in the direction of (111) face (nm) | Contrast | Viscosity | |
| 3-1D | Isobutyl alcohol and caustic soda | 10°C 6 hr | 0.84 | 15.5 | 22.2 | 2 | 4 | Comparative Example |
| 3-2D | Methanol (approximately 90%) | 5°C 3 hr | 0.89 | 18.4 | 28.9 | 2 | 4 | Comparative Example |

From the table A, it was found that the crystallite size of the pigment materials 3-1P and 3-2P was outside of the scope of the present invention, and the dispersion characteristic was not good, either.

(Example I-2 and Comparative Example I-2)

A pigment dispersion liquid was prepared according to the following method.

(Production of pigment dispersion liquid 2-1D)

A pigment dispersion liquid 2-1D was obtained in the same manner as the pigment dispersion 1-1D of the Example I-1, except that 9 parts by mass of the powder which has been obtained by drying and pulverizing the water paste 1-1W before crystal transformation was added with 189 parts by mass of propylene glycol monomethyl ether acetate and 21 parts by mass of water and stirred for 12 hours at the temperature of 40°C for crystal transformation. After completing the crystal transformation step, the sample was rapidly washed to prevent excessive crystallization.

(Production of pigment dispersion liquid 2-2D)

A pigment dispersion liquid was prepared in the same manner as the pigment dispersion 2-1D to give the pigment dispersion 2-2D, with the proviso that, for the crystal transformation, a sand grinder mill BSG-01 (trade name, manufactured by AIMEX) was used instead of a Ramond stirrer and by using 40 parts by mass of zirconia beads having diameter of 0.5 mm (viscosity increasing ratio of approximately 50%) was used as a grinding agent, compared to 10 parts by mass of the transformation solution. According to the stirring for 16 hours at 1,500 rpm while controlling the temperature at 40°C, crystal transformation was carried out. After completing the crystal transformation step, the sample was rapidly washed to prevent excessive crystallization.

The pigment dispersion liquid obtained was evaluated in the same manner as the Example I-1. The results are shown in the Table 2. With drying before crystal transformation (sample 2-1D) and further using a grinding agent (sample 2-2D), the transformation time required for obtaining the equivalent $\alpha$ crystallinity degree tends to become longer and the contrast characteristics were further deteriorated. In this case, since there was an increase in crystallite size in the direction of (-151) face and crystallite size in the direction of (111) face, it was thought that the deteriorated contrast characteristics were related with a reduced crystallite size. In this regard, it was presumed that the drying before crystal transformation causes aggregation of pigment particles to cause heterogeneous crystal transformation, and as a result, particles excessively grown by an operation of increasing $\alpha$ crystallinity degree were formed to yield deteriorated contrast characteristics. It was also presumed that inhibited $\alpha$ crystallization or $\beta$ crystallization as a result of disrupted $\alpha$ crystals that are caused by use of a grinding agent lowered the efficiency of $\alpha$ crystallization.

Comparing these results with the results of the pigment dispersion liquid 1-1D, it was found to be preferable that the no drying step is carried out before crystal transformation and no grinding agent is used, and as a result, crystal transformation of dichlorodiketopyrrole pigment in $\beta$ type crystal into $\alpha$ type can be achieved with high efficiency even in the presence of a pigment derivative.

(Production of pigment dispersion 2-3D)

A pigment dispersion liquid was prepared in the same manner as the pigment dispersion liquid 1-1D to obtain a pigment dispersion 2-3D. However, it was rapidly cooled to 5°C after crystal transformation and, by repeating twice the steps of adding propylene glycol monomethyl ether acetate instead of ion exchange water and filtering again for concentration based on Nutsche filtration, the solvent was replaced with propylene glycol monomethyl ether acetate and a pigment dispersion liquid was prepared without having a drying step. At that time, to adjust the pigment concentration in the final pigment dispersion liquid to be the same as that of the pigment dispersion liquid 1-1D, the amount of propylene glycol monomethyl ether acetate added during the step of producing the pigment dispersion was controlled. The pigment dispersion liquid was evaluated in the same manner as the Example I-1. Herein, the a crystallinity degree and crystallite size were measured for the pigment powder which was obtained by adding water to part of the pigment dispersion liquid obtained after replacement of the solvent with propylene glycol monomethyl ether acetate to fully terminate the crystal transformation followed by drying. The results are given in the Table 2. The pigment dispersion liquid 2-3D showed improved contrast and viscosity characteristics compared to the pigment dispersion liquid 1-1D, indicating that it was effective not to have any drying before producing a dispersion liquid. Further, by cooling the dispersion liquid after transformation and carrying out the dispersion immediately thereafter, problems caused by excessive crystallization can be avoided even without carrying out washing after crystal transformation.

(Production of pigment dispersion liquid 2-4D)

A pigment dispersion liquid was produced in the same manner as the pigment dispersion 2-1D, except that the rate of supplying an organic pigment solution was set at 3.3 mL/min for precipitation of the organic pigment particulates by adding an organic pigment solution to a poor solvent and the organic pigment particulates were precipitated over approximately 60 minutes. The resultant was designated as the pigment dispersion liquid 2-4D.

(Production of pigment dispersion 2-5D)

A pigment dispersion liquid was produced in the same manner as the pigment dispersion liquid 2-4D, except that 2,000 mL of methanol containing 70 mL of 1 mol/L hydrochloric acid was used as a poor solvent. The resultant was designated as the pigment dispersion liquid 2-5D.

The pigment dispersion liquids 2-4D and 2-5D obtained were evaluated in the same manner as the Example I-1. In the pigment dispersion liquids 2-4D and 2-5D, crystal form before crystal transformation included a mixture of α type and β type and showed deteriorated contrast characteristics, compared with the pigment dispersion liquid 2-1D. In this case, both the crystallite size in the direction of (111) face and crystallite size in the direction of (-151) face increased, thus it was thought that the deteriorated contrast characteristics were related with the increase in crystallite size. It was presumed that decreased precipitation rate or an operation like using a solvent to a poor solvent by which a dichlorodiketopyrrole pigment with α type crystal form was partly formed after pigment precipitation causes increased particle size during pigment precipitation, and as a result, the crystallite size was increased after crystal transformation and contrast characteristics were deteriorated. Based on these results, it was shown that β type is more preferable as a crystal form of a dichlorodiketopyrrole pigment for precipitation of pigment particles.

(Production of pigment dispersion liquid 2-6D)

A pigment dispersion was produced in the same manner as the pigment dispersion liquid 2-3D, except that washing before crystal transformation was carried out by solvent extraction (i.e., so called flushing method) instead of Nutsche filtration and different crystal transformation time was used. The resultant was designated as a pigment dispersion liquid 2-6D. Washing by solvent extraction was performed as follows. Organic pigment particulates were dispersed in a solvent to obtain a dispersion liquid 1-1 S, which was then added with 40% by weight of propylene glycol monomethyl ether acetate and stirred for 5 minutes. By keeping the dispersion liquid in a separatory lot, it was separated into the upper layer containing the pigment and propylene glycol monomethyl ether acetate as a main solvent and the lower layer containing almost no pigment and water and DMSO as a main solvent. The lower layer was discarded to remove unnecessary salts and DMSO contained in the dispersion liquid 1-1S. Then, 160% by weight of ion exchange water was added to the upper layer, stirred for 5 minutes, and placed again in a separatory lot. As a result, it was separated into the upper layer containing the pigment and mostly composed of propylene glycol monomethyl ether acetate as a solvent composition and the lower layer containing almost no pigment and mostly composed of water as a solvent composition. By discarding the lower layer, unnecessary salts were removed.

Consequently, a pigment dispersion liquid 2-6W after removing salts. The 2-6W was a pigment dispersion liquid composed of approximately 85% of propylene glycol monomethyl ether acetate and approximately 15% of water as a solvent composition. The 2-6W obtained was aged for 1 hour at 40°C for crystal transformation and rapidly cooled to 5°C. After replacing the solvent with propylene glycol monomethyl ether acetate by Nutsche filtration in the same manner as the dispersion liquid 2-3D followed by immediate dispersion, a dispersion liquid 2-6D was obtained. The pigment dispersion liquid obtained was evaluated in the same manner as the Example I-1. Herein, the α crystallinity degree and crystallite size were measured for the pigment powder which was obtained by adding water to part of the pigment dispersion liquid obtained after replacement of the solvent with propylene glycol monomethyl ether acetate to fully terminate the crystal transformation followed by drying. The results are shown in the Table 2. As a result, it was confirmed that the present invention was also effective even when de-salting and pigment extraction was carried out by the flushing method.

(Production of pigment dispersion liquid 2-7D)

A pigment dispersion liquid was produced in the same manner as the pigment dispersion liquid 1-1D and the resultant was designated as a pigment dispersion 2-7D. Meanwhile, for drying the water paste 1-1CW after crystal transformation, freeze drying was carried out instead of drying for 2 hours by using an oven at 100°C. The pigment dispersion liquid obtained was evaluated in the same manner as the Example I-1. The results are shown in the Table 2. The pigment dispersion 2-7D showed improved contrast and viscosity characteristics compared to the pigment dispersion liquid 1-1D, indicating that freeze drying is an effective drying method. Pigment dispersion liquids were prepared

in a similar manner by using the sample 1-26D to 1-41D, respectively, and good production suitability and product performance were identified for the dispersions within the scope of the present invention.

Table 2

| Pigment dispersion liquid name | Pigment crystal state (Before crystal transformation) | | Drying before crystal transformation | Crystal transformation step | | Drying after crystal transformation |
|---|---|---|---|---|---|---|
| | Crystal transformation form | α type crystallinity degree | | Solvent of crystal transformation step | Condition of crystal transformation step | |
| 1-1D | β type | 0.32 | not conducted | PGMEA:Water = 9:1 | 40°C 3 hr | conducted |
| 2-1D | β type | 0.32 | conducted | PGMEA:Water = 9:1 | 40°C 12 hr | conducted |
| 2-2D | β type | 0.32 | conducted | PGMEA:Water = 9:1 | 40°C 16 hr Grinding agent was used. | conducted |
| 2-3D | β type | 0.32 | not conducted | PGMEA:Water = 9:1 | 40°C 3 hr | not conducted |
| 2-4D | α type/β type coexistence | 0.40 | not conducted | PGMEA:Water = 9:1 | 40°C 2 hr | conducted |
| 2-5D | α type/β type coexistence | 0.46 | not conducted | PGMEA:Water = 9:1 | 40°C 1 hr | conducted |
| 2-6D | β type | 0.32 | not conducted | PGMEA:Water = 8.5:1.5 | 40°C 1 hr | None |
| 2-7D | β type | 0.32 | not conducted | PGMEA:Water = 9:1 | 40°C 3 hr | conducted freeze dry |

| Pigment dispersion liquid name | Pigment crystal state (After drying and pulverizing) | | | Evaluation results | | Relationship to this invention |
|---|---|---|---|---|---|---|
| | α type crystallinity degree | Crystallite size in the direction of (-151) face (nm) | Crystallite size in the direction of (111) face (nm) | Contrast | Viscosity | |
| 1-1D | 0.72 | 9.0 | 18.2 | 5 | 4 | This invention |
| 2-1D | 0.72 | 10.1 | 19.2 | 4 | 4 | This invention |
| 2-2D | 0.72 | 10.4 | 18.8 | 4 | 4 | This invention |
| 2-3D | 0.75 | 9.2 | 18.6 | 6 | 5 | This invention |
| 2-4D | 0.72 | 10.8 | 20.0 | 3 | 4 | This invention |
| 2-5D | 0.72 | 9.4 | 23.5 | 2 | 3 | Comparative Example |
| 2-6D | 0.74 | 8.8 | 17.5 | 6 | 5 | This invention |
| 2-7D | 0.72 | 8.7 | 18.2 | 6 | 4 | This invention |

(Example I-3 and Comparative Example 1-3)

<Production of color filter>

By using the pigment dispersion liquid 2-3D obtained in the Example 1-2 above, a color filter was produced according to the following order. As a result, good contrast was obtained as the color filter, indicating that the pigment dispersion liquid of the present invention can be advantageously used for producing a color filter.

[Formation of Black (K) Image]

A non-alkali glass substrate was washed using a UV washing machine, and thereafter washed with a brush using a detergent, and then further subjected to ultrasonic cleaning with ultra pure water. The substrate was subjected to a thermal processing at 120°C for 3 minutes, thereby to stabilize the surface state of the substrate.

The substrate was cooled and temperature controlled to 23°C. On the substrate, a colored photosensitive resin composition K1 having the composition described in the following Table 3 was coated with a slit nozzle-equipped coater for a glass substrate (manufactured by F.A.S. Japan Corp., trade name: MH-1600). Subsequently, a part of the solvent was dried using VCD (vacuum drying apparatus, manufactured by Tokyo Ohka Kogyo) for 30 seconds, thereby to eliminate fluidity of the coating layer. After pre-baking at 120°C for 3 minutes, 2.4 μm thick photosensitive resin layer K was obtained.

Table 3

| | |
|---|---|
| K pigment dispersion 1 (Carbon black) | 25 parts by mass |
| Propylene glycol monomethyl ether acetate | 8.0 parts by mass |
| Methyl ethyl ketone | 53 parts by mass |
| Binder 2 | 9.1 parts by mass |
| Hydroquinone monomethyl ether | 0.002 part by mass |
| DPHA solution | 4.2 parts by mass |
| Polymerization initiator A | 0.16 part by mass |
| Surfactant 1 | 0.044 part by mass |

In a proximity type exposure apparatus equipped with an ultra-high pressure mercury lamp (manufactured by Hitachi Engineering), the substrate and a mask (silica exposure mask having an image pattern) were stood vertically, and in this state, the distance between the exposure mask surface and the photosensitive resin layer was set to 200 μm; and then, a pattern exposure was conducted in an exposure amount of 300 mJ/cm$^2$.

Then, pure water was sprayed through a shower nozzle to uniformly moisten the surface of the photosensitive resin layer K1, and shower developing was performed at 23°C for 80 seconds with a KOH-based developer (obtained by diluting CDK-1 (trade name) containing KOH and a nonionic surfactant, manufactured by Fuji Film Electronic Materials Co., Ltd., by 1/100) at a flat nozzle pressure of 0.04 MPa to obtain a patterning image. Subsequently, ultra pure water was sprayed at a pressure of 9.8 MPa using an ultra-high-pressure cleaning nozzle, to eliminate a residue. Thus, a black (K) image K was obtained. Subsequently, the image was subjected to a thermal processing at 220°C for 30 minutes.

The above-described colored photosensitive resin composition K1 was prepared as follows:

First, the K pigment dispersion 1 and propylene glycol mono methyl ether acetate were weighed, and then they were mixed at a temperature of 24°C (±2°C) and stirred at 150 rpm for 10 minutes. Thereafter, methyl ethyl ketone, the binder 2, hydroquinone mono methyl ether, the DPHA solution, the polymerization initiator A (2,4-bis(trichloromethyl)-6-[4'-(N,N-bisethoxycarbonylmethyl)amino-3'-bromophenyl]-s-triazine), and the surfactant 1 were weighed, and they were added in this order at a temperature of 25°C (±2°C), and then the resultant mixture was stirred at 150 rpm at 40°C (±2°C) for 30 minutes.

<K pigment dispersion 1>

| | |
|---|---|
| · Carbon black (trade name: Nipex 35, manufactured by Degussa, Japan) | 13.1 mass parts |
| · Dispersing agent (the following compound J1) | 0.65 mass part |

(continued)

| | |
|---|---|
| · Polymer (random copolymer of benzyl methacrylate and methacrylic acid (benzyl methacrylate/methacrylic acid = 72/28 by mol), molecular weight: 37,000) | 6.72 mass parts |
| · Propylene glycol monomethyl ether acetate | 79.53 mass parts |

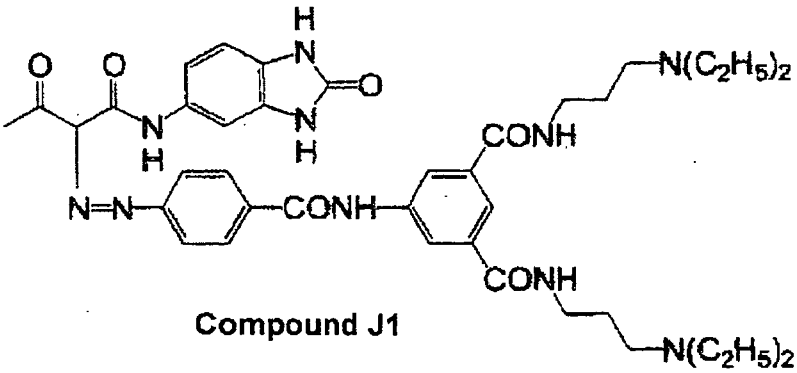

Compound J1

<Binder 2>

| | |
|---|---|
| · Polymer (random copolymer of benzyl methacrylate and methacrylic acid (benzyl methacrylate/methacrylic acid = 78/22 by mol), molecular weight: 38,000) | 27 mass parts |
| · Propylene glycol monomethyl ether acetate | 73 mass parts |

<Surfactant 1>

| | |
|---|---|
| · Megafac F-780-F (manufactured by DIC Corporation) Copolymer of 40 parts of $C_6F_{13}CH_2CH_2OCOCH=CH_2$, 55 parts of $H(OCH(CH_3)CH_2)_7OCOCH=CH_2$ and 5 parts of $H(OCH_2CH_2)_7OCOCH=CH_2$, (molecular weight: 30,000) | 30 mass parts |
| · Methyl ethyl ketone | 70 mass parts |

[Formation of Red (R) Pixel]

On the substrate having formed thereon the above-described image K, a thermally treated pixel R was formed using the colored photosensitive resin composition R1 having the composition described in the following Table 4 in the same steps as formation of the black (K) image. The film thickness of the thus-obtained photosensitive resin layer R1 and the coating amount of the pigment were shown below. The colored photosensitive resin composition was prepared in the same manner as the above-described colored photosensitive resin composition K1.

| | |
|---|---|
| Film thickness of photosensitive resin (μm) | 1.60 |
| Coating amount of pigment (g/m$^2$) | 1.00 |
| Coating amount of C. I. P. R. 254 (g/m$^2$) | 0.80 |
| Coating amount of C. I. P. R. 177 (g/m$^2$) | 0.20 |

Table 4

| | |
|---|---|
| R-pigment dispersion liquid 2-1 D | 40 parts by mass |
| R pigment dispersion 2 (CIPR177) | 4.5 parts by mass |
| Propylene glycol monomethyl ether acetate | 7.6 parts by mass |
| Methyl ethyl ketone | 37 parts by mass |

(continued)

| | |
|---|---|
| Binder 1 | 0.7 part by mass |
| DPHA liquid | 3.8 parts by mass |
| 2-Trichloromethyl-(p-styrylstyryl)-1,3,4-oxadiazole | 0.12 part by mass |
| Polymerization initiator A | 0.05 part by mass |
| Phenothiazine | 0.01 part by mass |
| Surfactant 1 | 0.06 part by mass |

<R pigment dispersion 2>

| | |
|---|---|
| · C.I.P.R.177 (trade name: Cromophtal Red A2B, manufactured by Ciba Specialty Chemicals company) | 18 parts by mass |
| · Polymer (random copolymer of benzyl methacrylate/ methacrylic acid (72/28 by mole ratio); molecular weight: 30,000): | 12 parts by mass |
| · Propylene glycol monomethyl ether acetate | 70 parts by mass |
| <Binder 1> | |
| · Polymer (random copolymer of benzyl methacrylate/ methacrylic acid (78/22 by mole ratio); molecular weight: 40,000): | 27 parts by mass |
| · Propylene glycol monomethyl ether acetate | 73 parts by mass |

[Formation of Green (G) Pixel]

On the substrate having formed thereon the above-described image K and pixel R, a thermally treated pixel G was formed using the colored photosensitive resin composition G1 having the composition shown below Table 5 in the same steps as formation of the black (K) image. The film thickness of the thus-obtained photosensitive resin layer G1 and the coating amount of the pigment were shown below. The colored photosensitive resin composition was prepared in the same manner as the above-described colored photosensitive resin composition K1.

| | |
|---|---|
| Film thickness of photosensitive resin ($\mu$m) | 1.60 |
| Coating amount of pigment (g/$m^2$) | 1.92 |
| Coating amount of C. I. P. G. 36 (g/$m^2$) | 1.34 |
| Coating amount of C. I. P. Y. 150 (g/$m^2$) | 0.58 |

Table 5

| | |
|---|---|
| G-pigment dispersion 1 (CIPG36) | 28 parts by mass |
| Y-pigment dispersion 1 (CIPY 150) | 15 parts by mass |
| Propylene glycol monomethyl ether acetate | 29 parts by mass |
| Methyl ethyl ketone | 26 parts by mass |
| Cyclohexanone | 1.3 parts by mass |
| Binder 2 | 2.5 parts by mass |
| DPHA liquid | 3.5 parts by mass |
| 2-Trichloromethyl-(p-styrylstyryl)-1,3,4-oxadiazole | 0.12 part by mass |
| Polymerization initiator A | 0.05 part by mass |
| Phenothiazine | 0.01 part by mass |
| Surfactant 1 | 0.07 part by mass |

<G-pigment Dispersion 1>

GT-2 (trade name, manufactured by FUJIFILM Electronic Materials Co.,Ltd.)

<Y-pigment Dispersion 1>

CF Yellow EX3393 (trade name, manufactured by Mikuni Color Ltd)

[Formation of blue (B) pixel]

On the substrate having formed thereon the above-described image K, pixel R, and pixel G, a thermally treated pixel B was formed using the colored photosensitive resin composition B1 having the composition shown below Table 6 in the same steps as formation of the black (K) image. The film thickness of the thus-obtained photosensitive resin layer B1 and the coating amount of the pigment were shown below. The colored photosensitive resin composition was prepared in the same manner as the above-described colored photosensitive resin composition K1.

| | |
|---|---|
| Film thickness of photosensitive resin (μm) | 1.60 |
| Coating amount of pigment (g/m$^2$) | 0.75 |
| Coating amount of C. I. P. B. 15:6 (g/m$^2$) | 0.705 |
| Coating amount of C. I. P. V. 23 (g/m$^2$) | 0.045 |

Table 6

| | |
|---|---|
| B-pigment dispersion 1 (CIPB15:6) | 8.6 parts by mass |
| V-pigment dispersion 2 (CIPB15:6 + CIPV23) | 15 parts by mass |
| Propylene glycol monomethyl ether acetate | 28 parts by mass |
| Methyl ethyl ketone | 26 parts by mass |
| Binder 3 | 17 parts by mass |
| DPHA liquid | 4.0 parts by mass |
| 2-Trichlaromethyl-(p-styrylstyryl)-1,3,4-oxadiazole | 0.17 part by mass |
| Phenothiazine | 0.02 part by mass |
| Surfactant | 0.06 part by mass |

<B-pigment Dispersion 1>

CF Blue EX3357 (trade name, manufactured by Mikuni Color Ltd.)

< B-pigment Dispersion 2>

CF Blue EX3383 (trade name, manufactured by Mikuni Color Ltd.)

<Binder 3>

| | |
|---|---|
| · Polymer (random copolymer of benzyl methacrylate/methacrylic acid/methyl methacrylate (36/22/42 by mole ratio); molecular weight: 38,000): | 27 parts by mass |
| · Propylene glycol monomethyl ether acetate | 73 parts by mass |

[Production of ITO electrode]

A glass substrate having each pixels formed thereon was placed in a sputtering apparatus and subjected to whole-surface vacuum deposition of ITO (indium tin oxide) with 1,300 Å thickness at 100°C followed by annealing at 240°C for 90 minutes to crystallize ITO and form an ITO transparent electrode. As a result, a color filter A1 was produced.

[Examples corresponding to the second embodiment]

(Example II-1)

<Production of organic pigment nanoparticle dispersion liquid>

To 1,000 parts of dimethyl sulfoxide (manufactured by Wako Pure Chemical Industries, Ltd.) as a good solvent, 50 parts of C.I. Pigment Red 254 (trade name: Irgaphor Red BT-CF, manufactured by Ciba Specialty Chemicals Corp.) was added and dispersed. 52.3 parts of 25% methanol solution of tetramethyl ammonium hydroxide was added dropwise thereto, thereby to prepare the pigment solution 1. The viscosity of the pigment solution, as determined by using Viscomate VM-10A-L (trade name, manufactured by CBC Materials), was 14.3 mPa·s, when the liquid temperature of the pigment solution was 24.5°C. Separately, 1,000 parts of ion exchange water water containing 19parts of 1 mol/L hydrochloric acid (manufactured by Wako Pure Chemical Industries, Ltd.) was prepared as a poor solvent.

Then, to 1,000 parts of the poor solvent which has been stirred at 500 rpm with GK-0222-10 Ramond stirrer (trade name, manufactured by Fujisawa Pharmaceutical Co., Ltd.) and controlled to have the temperature of 10°C, 100 parts of the pigment solution 1 was injected by using NP-KX-500 mass capacity non-flow type pump (trade name, manufactured by NIHON SEIMITSU KAGAKU CO., LTD.) via a liquid transport pipe having the flow path diameter of 1.1 mm and flow rate of 400 mL/min. As a result, organic pigment particles were formed and the organic pigment nanoparticle dispersion liquid 1 was produced.

The organic pigment nanoparticle dispersion liquid 1 produced in the above order was concentrated for 90 min at 5,000 rpm using H-112 centrifugal filtration apparatus (manufactured by KOKUSAN Co., Ltd.) and P89C type filter cloth (manufactured by Shikishima Canvas Co., Ltd.), added with 1,100 parts of ion exchange water, and subjected to centrifugal filtration. The resultant was again mixed with 1,100 parts of ion exchange water and subjected to centrifugal filtration, to collect a concentrated paste 1 of the obtained organic pigment nanoparticles.

The concentrated paste 1 of organic pigment nanoparticles was dried for 2 hours at 100°C in an oven, to obtain organic pigment powder 1a.

The organic pigment powder 1a and 110 parts of propylene glycol monomethyl ether acetate were mixed, and subjected to wet grinding with a sand grinder mill BSG-01 (manufactured by AIMEX) for 1 hour at 1,500 rpm by using zirconia beads having diameter of 0.5 mm, to prepare dispersion liquid 1a of organic pigment nanoparticles.

This was concentrated for 90 min at 5,000 rpm using H-112 centrifuge (manufactured by KOKUSAN Co., Ltd.) and P89C type filter cloth (manufactured by Shikishima Canvas Co., Ltd.), added with 1,100 parts of ion exchange water, and centrifuged in the same manner. The resultant was again mixed with 1,100 parts of ion exchange water and centrifuged, to collect a concentrated paste 1a of the obtained organic pigment nanoparticles.

The concentrated paste 1a of organic pigment nanoparticles was dried for 2 hours at 100°C in an oven, to obtain organic pigment powder 1.

(Example II-2)

(Synthesis of polymer P-1)

A monomer solution as described below was introduced into a three-necked flask purged with nitrogen, and was stirred with a stirrer (trade name: Three-One Motor, manufactured by Shinto Scientific Co., Ltd.). While nitrogen was being flowed into the flask, the content of the flask was heated to raise the temperature to 78°C and was stirred for 30 minutes. Subsequently, an initiator solution as described below was added to the liquid mentioned above, and the mixture was heated and stirred at 78°C for 2 hours. After the heating and stirring, an operation of further adding an initiator solution as described below and heating under stirring at 78°C for 2 hours, was repeated two times in total. After the last stirring for 2 hours, the mixture was continuously heated and stirred at 90°C for 2 hours. The resulting reaction liquid was poured into 1,500 parts of isopropanol while being stirred, and generated precipitates were collected by filtration and heated to dry. Thus, a graft polymer P-1 (mass average molcular weight 10,000) was obtained.

(Monomer solution)

| | |
|---|---|
| · Monomer M-1 | 5.0 parts |
| · Styrene | 14.0 parts |
| · Methacrylic acid | 2.0 parts |
| · 1-Methyl-2-pyrrolidone | 46.67 parts |

(Initiator solution)

| | |
|---|---|
| · Dimethyl 2.2'-azobis(isobutyrate) (trade name: V-601, manufactured by Wako Pure Chemical Industries, Ltd.) | 1.2 parts |
| · 1-Methyl-2-pyrrolidone | 2 parts |

MAA: Methacrylic acid (manufactured by Wako Pure Chemical Industries, Ltd.)

NMP: 1-Methyl-2-pyrrolidone (manufactured by Wako Pure Chemical Industries, Ltd.)

As a good solvent (first solvent), 70.5 parts of 25% aqueous solution of tetramethyl ammonium hydroxide (manufactured by Wako Pure Chemical Industries, Ltd.) were added to 1,000 parts of N-methyl pyrrolidone, heated to 80°C, and added with 50 parts of C.I. Pigment Red 254 (trade name: Irgaphor Red BT-CF, manufactured by Ciba Specialty Chemicals Corp.) and 10.0 parts of the graft copolymer P-l to prepare the pigment solution 2. The viscosity of the pigment solution 2, as determined by using Viscomate VM-10A-L (trade name, manufactured by CBC Materials), was 13.3 mPa·s, when the liquid temperature of the pigment solution 2 was 25°C. Separately, 1,000 parts of water containing 16 parts of 1-mol/L hydrochloric acid (manufactured by Wako Pure Chemical Industries, Ltd.) was prepared as a poor solvent.
Herein, in the poor solvent having the temperature controlled to 15°C and stirred at 500 rpm by a GK-0222-10 Ramond stirrer (trade name, manufactured by Fujisawa Pharmaceutical Co., Ltd.), the pigment solution 2 was injected using an NP-KX-500 large-capacity pulseless flow pump (trade name, manufactured by Nihon Seimitsu Kagaku Co., Ltd.). The flow channel diameter of the liquid transport pipe and the supply inlet diameter for the pigment solution 2 were set at 2.2 mm, and the supply inlet was placed in the poor solvent to inject 100 pats of the pigment solution 2 at a flow rate of 200 mL/min. Thereby, organic pigment particles were formed, and thus a pigment dispersion liquid 2 was prepared.
The organic pigment nanoparticle dispersion liquid 2 produced in the above order was concentrated for 90 min at 5,000 rpm using H-112 centrifugal filtration apparatus (manufactured by KOKUSAN Co., Ltd.) and P89C type filter cloth (manufactured by Shikishima Canvas Co., Ltd.), added with 1,100 parts of ion exchange water, and subjected to centrifugal filtration. The resultant was again mixed with 1,100 parts of ion exchange water and subjected to centrifugal filtration, to collect a concentrated paste 2 of the obtained organic pigment nanoparticles.
To the concentrated paste 2 of organic pigment nanoparticles, 150 parts of propylene glycol monomethyl ether were added and stirred for 8 hours at 20°C. Thereafter, it was concentrated for 90 min at 5,000 rpm using H-112 centrifugal filtration apparatus (manufactured by KOKUSAN Co., Ltd.) and P89C type filter cloth (manufactured by Shikishima Canvas Co., Ltd.), added with 1,100 parts of ion exchange water, and subjected to centrifugal filtration. The resultant was again mixed with 1,100 parts of ion exchange water and subjected to centrifugal filtration, to collect a concentrated paste 2a of the obtained organic pigment nanoparticles. The concentrated paste 2a of organic pigment nanoparticles was dried for 2 hours at 100°C in an oven, to obtain organic pigment powder 2.

(Example II-3)

To 1,000 parts of dimethyl sulfoxide (manufactured by Wako Pure Chemical Industries, Ltd.) as a good solvent, 50 parts of C.I. Pigment Red 254 (trade name: Irgaphor Red BT-CF, manufactured by Ciba Specialty Chemicals Corp.) was added and dispersed. 52.3 parts of 25% methanol solution of tetramethyl ammonium hydroxide was added dropwise thereto, thereby to prepare a pigment solution 3. The viscosity of the pigment solution 3, as determined by using Viscomate VM-10A-L (trade name, manufactured by CBC Materials), was 14.3 mPa·s, when the liquid temperature of the pigment solution 3 was 24.5°C. Separately, 1,000 parts of methanol containing 19 parts of 1-mol/L hydrochloric acid (manufactured by Wako Pure Chemical Industries, Ltd.) was prepared as a poor solvent.
Herein, in the poor solvent having the temperature controlled to 5°C and stirred at 500 rpm by a GK-0222-10 Ramond stirrer (trade name, manufactured by Fujisawa Pharmaceutical Co., Ltd.), the pigment solution 3 was injected using an NP-KX-500 large-capacity pulseless flow pump (trade name, manufactured by Nihon Seimitsu Kagaku Co., Ltd.). The flow channel diameter of the liquid transport pipe and the supply inlet diameter for the pigment solution 3 were set at 2.2 mm, and the supply inlet was placed in the poor solvent to inject 100 pats of the pigment solution 3 at a flow rate of 200 mL/min. Thereby, organic pigment particles were formed, and thus a pigment dispersion liquid 3 was prepared.
The organic pigment nanoparticle dispersion liquid 3 was adjusted to temperature of 50°C and stirred for 2 hours to produce an organic pigment nanoparticle dispersion liquid 3a.
The organic pigment nanoparticle dispersion 3a produced in the above order was concentrated for 90 min at 5,000 rpm using H-112 centrifugal filtration apparatus (manufactured by KOKUSAN Co., Ltd.) and P89C type filter cloth (manufactured by Shikishima Canvas Co., Ltd.), added with 1,100 parts of ion exchange water, and subjected to centrifugal filtration. The resultant was again mixed with 1,100 parts of ion exchange water and subjected to centrifugal filtration, to collect a concentrated paste 3 of the obtained organic pigment nanoparticles.

The concentrated paste 3 of organic pigment nanoparticles was dried for 2 hours at 100°C in an oven, to obtain organic pigment powder 3.

(Example II-4)

To 1,000 parts of dimethyl sulfoxide (manufactured by Wako Pure Chemical Industries, Ltd.) as a good solvent, 50 parts of C.I. Pigment Red 254 (trade name: Irgaphor Red BT-CF, manufactured by Ciba Specialty Chemicals Corp.) and 10 parts of a compound SS-1. were added and dispersed. 61.1 parts of 25% methanol solution of tetramethyl ammonium hydroxide was added dropwise thereto, thereby to prepare a pigment solution 4. The viscosity of the pigment solution 4, as determined by using Viscomate VM-10A-L (trade name, manufactured by CBC Materials), was 12.8 mPa·s, when the liquid temperature of the pigment solution 4 was 24.5°C. Separately, 1,000 parts of ion exchange water containing 21 parts of 1-mol/L hydrochloric acid (manufactured by Wako Pure Chemical Industries, Ltd.) was prepared as a poor solvent.

SS-1

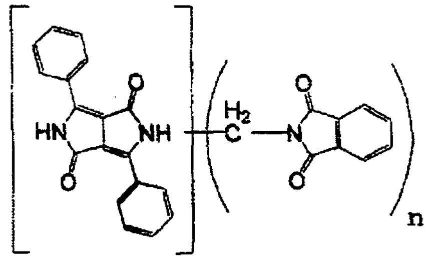

n = 1 or 2

Herein, in the poor solvent having the temperature controlled to 5°C and stirred at 700 rpm by a GK-0222-10 Ramond stirrer (trade name, manufactured by Fujisawa Pharmaceutical Co., Ltd.), the pigment solution 4 was injected using an NP-KX-500 large-capacity pulseless flow pump (trade name, manufactured by Nihon Seimitsu Kagaku Co., Ltd.). The flow channel diameter of the liquid transport pipe and the supply inlet diameter for the pigment solution 4 were set at 2.2 mm, and the supply inlet was placed in the poor solvent to inject 100 pats of the pigment solution 4 at a flow rate of 200 mL/min. Thereby, organic pigment particles were formed, and thus a pigment dispersion liquid 4 was prepared.

The organic pigment nanoparticle dispersion 4 produced in the above order was concentrated for 90 min at 5,000 rpm using H-112 centrifugal filtration apparatus (manufactured by KOKUSAN Co., Ltd.) and P89C type filter cloth (manufactured by Shikishima Canvas Co., Ltd.), added with 1,100 parts of ion exchange water, and subjected to centrifugal filtration. The resultant was again mixed with 1,100 parts of ion exchange water and subjected to centrifugal filtration, to collect a concentrated paste 4 of the obtained organic pigment nanoparticles.

To the concentrated paste 4 of organic pigment nanoparticles, 150 parts of propylene glycol monomethyl ether were added and stirred for 4 hours at 20°C. Thereafter, it was concentrated for 90 min at 5,000 rpm using H-112 centrifugal filtration apparatus (manufactured by KOKUSAN Co., Ltd.) and P89C type filter cloth (manufactured by Shikishima Canvas Co., Ltd.), added with 1,100 parts of ion exchange water, and subjected to centrifugal filtration. The resultant was again mixed with 1,100 parts of ion exchange water and subjected to centrifugal filtration, to collect a concentrated paste 4a of the obtained organic pigment nanoparticles. The concentrated paste 4a of organic pigment nanoparticles was dried for 2 hours at 100°C in an oven, to obtain organic pigment powder 4.

(Example II-5)

To 1,000 parts of dimethyl sulfoxide (manufactured by Wako Pure Chemical Industries, Ltd.) as a good solvent, 50 parts of C.I. Pigment Red 254 (trade name: Irgazin Red 2030, manufactured by Ciba Specialty Chemicals Corp.), 10 parts of the compound SS-1, and 15 parts of a compound SS-2 were added and dispersed. 64.1 parts of 25% methanol solution of tetramethyl ammonium hydroxide was added dropwise thereto, thereby to prepare a pigment solution 5. The viscosity of the pigment solution 5, as determined by using Viscomate VM-10A-L (trade name, manufactured by CBC Materials), was 10.8 mPa·s, when the liquid temperature of the pigment solution 5 was 24.5°C. Separately, 1,000 parts of ion exchange water containing 23 parts of 1-mol/L hydrochloric acid (manufactured by Wako Pure Chemical Industries, Ltd.) was prepared as a poor solvent.

SS−2

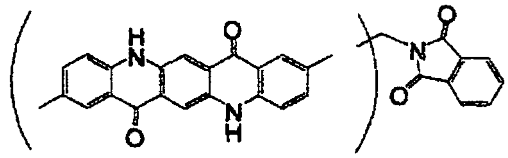

Herein, in the poor solvent having the temperature controlled to 5°C and stirred at 400 rpm by a GK-0222-10 Ramond stirrer (trade name, manufactured by Fujisawa Pharmaceutical Co., Ltd.), the pigment solution 5 was injected using an NP-KX-500 large-capacity pulseless flow pump (trade name, manufactured by Nihon Seimitsu Kagaku Co., Ltd.). The flow channel diameter of the liquid transport pipe and the supply inlet diameter for the pigment solution 5 were set at 2.2 mm, and the supply inlet was placed in the poor solvent to inject 100 parts of the pigment solution 5 at a flow rate of 200 mL/min. Thereby, organic pigment particles were formed, and thus a pigment dispersion liquid 5 was prepared.
The organic pigment nanoparticle dispersion liquid 5 produced in the above order was concentrated for 80 min at 6,000 rpm using H-112 centrifugal filtration apparatus (manufactured by KOKUSAN Co., Ltd.) and P89C type filter cloth (manufactured by Shikishima Canvas Co., Ltd.), added with 1,100 parts of ion exchange water, and subjected to centrifugal filtration. The resultant was again mixed with 1,100 parts of ion exchange water and subjected to centrifugal filtration, to collect a concentrated paste 5 of the obtained organic pigment nanoparticles.
To the concentrated paste 5 of organic pigment nanoparticles, 180 parts of propylene glycol monomethyl ether were added and stirred for 14 hours at 20°C. Thereafter, it was concentrated for 80 min at 6,000 rpm using H-112 centrifugal filtration apparatus (manufactured by KOKUSAN Co., Ltd.) and P89C type filter cloth (manufactured by Shikishima Canvas Co., Ltd.), added with 1,100 parts of ion exchange water, and subjected to centrifugal filtration. The resultant was again mixed with 1,100 parts of ion exchange water and subjected to centrifugal filtration, to collect a concentrated paste 5a of the obtained organic pigment nanoparticles. The concentrated paste 5a of organic pigment nanoparticles was dried for 2 hours at 100°C in an oven, to obtain organic pigment powder 5.

(Comparative Example II-1)

C.I. Pigment Red 254 (Irgaphor Red BT-CF, manufactured by Ciba Specialty Chemicals Corp.) itself was taken as an organic pigment powder C1.

(Comparative Example II-2)

The organic pigment powder 1a was produced in the same manner as the Example II-1, and it was designated as an organic pigment powder C2.

(Comparative Example II-3)

250 Parts of C.I. Pigment Red 254 (Irgaphor Red BT-CF, manufactured by Ciba Specialty Chemicals Corp.), 2,500 parts of sodium chloride, and 200 parts of diehtylene glycol were added to 1 gallon stainless kneader and kneaded for 3 hours. Then, the mixture was added to 2.5 liter hot water and heated and stirred at approximately 80°C. After stirring for approximately 1 hour to give a slurry, it was filtered and washed for five times to remove sodium chloride and the solvent. As a result, a water wet cake pigment was obtained and then dried in a dryer for 18 hours at 90°C to evaporate moisture and to obtain organic pigment powder C3.
The organic pigment powders 1 to 5 (Examples) and C1 to C3 (Comparative examples) obtained from the above were subjected to X ray diffraction measurement by the following method. As a result, the a type crystallinity degree, crystallite size in the direction of (-151) face, and average particle diameter were calculated. The calculation results are shown in the Table 1.

(Evaluation of α type crystallinity degree)

(1) Powder X ray diffraction measurement was carried out for the dichlorodiketopyrrole pigment by using CuKα ray. The measurement was carried out at Bragg angle (2θ) from 23° to 30° with reference to Japanese Industrial Standards (JIS) K03131 (general rules for X ray diffraction analysis). The X ray diffraction pattern is illustrated in FIG. 1.
(2) A diffraction pattern was obtained by removing the background from the X ray diffraction pattern obtained from

(1) above. Herein, the method of removing the background included drawing a straight line between a corner near Bragg angle (2θ) = 23.3° at low angle side and a corner near Bragg angle (2θ) = 29.7° at high angle side of the measured pattern and obtaining a pattern by subtracting the X ray diffraction strength value represented by the straight line from the X ray diffraction strength value obtained from the (1) above. Explained in view of the figure showing the measuring result of the pigment powder 1, a pattern was obtained by removing the diffraction strength represented by straight line L connecting point A and point B from the X ray diffraction strength of FIG. 1, and the resultant was taken as an X ray diffraction pattern after removing the background. Examples of an X ray diffraction pattern after removing the background are illustrated in FIG. 6.

(3) From the X ray diffraction pattern after removing the background which was obtained from the above (2), α type crystallinity degree was calculated by using the following equation.

$$\alpha \text{ type crystallinity degree} = I\alpha/(I\alpha+I\beta)$$

Herein, Iα is defined as diffraction strength of a diffraction peak at Bragg angle (2θ) = 28.1 ± 0.3°, i.e., a characteristic diffraction peak of α type crystal transformation form, after removing the background, and 1β is defined as diffraction strength of a diffraction peak at Bragg angle (2θ) = 27.0 ± 0.3°, i.e., a characteristic diffraction peak of β type crystal transformation form, after removing the background. In the example illustrated by FIG. 6, the length of line L1 and the length of line L2 correspond to Iβ and Iα, respectively.

In the definition given above, there is a case in which no clear diffraction peak is shown at Bragg angle (2θ) = 27 ± 0.3°, i.e., a characteristic diffraction peak of β type crystal, when α type crystallinity degree of the dichlorodiketopyrrole pigment is high. For such case, Iβ is defined as diffraction strength at Bragg angle (2θ) = 27.0° after removing the background. Further, for a case in which no clear diffraction peak is shown at 28.1°, i.e., a characteristic of α type crystal, when α type crystallinity degree of the dichlorodiketopyrrole pigment is low. For such case, Iα is defined as diffraction strength at Bragg angle (2θ) = 28.1 ° after removing the background.

In the above definition, even when the dichlorodiketopyrrole pigment has high α type crystallinity degree and has no clear peak near Bragg angle (2θ) = 27° as a characteristic of β type crystal, Iβ never has a value of zero. Therefore, a care should be taken that the α type crystallinity degree never has a value of one. The reason is due to the fact that, even when the diffraction peak derived from β type crystal is not present at 27°, broadened shoulder of a diffraction peak derived from α type which is present at both sides of the β type crystal peak reaches 27°, yielding a finite value of diffraction peak at 27°. Further, similar to the above, even when the dichlorodiketopyrrole pigment has high β type crystallinity degree and has no clear peak near Bragg angle (2θ) = 28.1° as a characteristic of α type crystal, Iα never has a value of zero, and therefore the α type crystallinity degree never has a value of zero. The reason is due to the fact that broadened shoulder of a diffraction peak derived from β type crystal present near Bragg angle (2θ) = 27° reaches 28.1°, yielding a finite value of diffraction peak at 28.1°.

(Evaluation of crystallite size)

(1) In the same manner as the method for determining α type crystallinity degree, powder X ray diffraction measurement of the dichlorodiketopyrrole pigment was carried out by using CuKα ray at Bragg angle (2θ) range of 23° to 30°. Further, an X ray diffraction pattern after removing background was calculated in the same manner as the method for determining α type crystallinity degree.

(2) From the X ray diffraction pattern after removing the background as obtained from (1) above, half width value and Bragg angle (2θ) of a diffraction peak were obtained for each diffraction peak near Bragg angle (2θ) = 24.6 ± 0.3° and diffraction peak near Bragg angle (2θ) = 28.1 ± 0.3° that were derived from the α type crystal transformation form. The half width value can be calculated by peak isolation of four diffraction peaks that are present within the above measurement range (three peaks near Bragg angle of 24.6°, 25.6°, and 28.1 ° derived from α type crystal transformation form and one peak near Bragg angle of 27° derived from β type crystal transformation form) by using a commercially available data analysis software. In these examples, data analysis software Igor Pro provided by Wave Metorics was used and half width value obtained by fitting the peak shape with Voigt function was used.

(3) By using the diffraction peak half width value calculated from (2) above and Scherrer formula described below, a crystallite size was calculated.

$$D = K\lambda/(10 \times B \times \cos A)$$

$$B = Bobs - b$$

Herein,

D: Crystallite size (nm)
Bobs: Half width value (rad) calculated from (2)
b: Angular resolution calibration coefficient for X ray diffractometer, and half width value (rad) measured by using standard silicone crystal. In the present specification, the standard silicone crystal was measured with following apparatus constitution and measurement condition, and b = 0.2.
A: Diffraction peak Bragg angle 2θ (rad)
K: Scherrer constant (K = 0.94)
λ: X ray wavelength (A) (λ = 1.54 since CuKα ray was used.)

The measurement condition was as follows.

X ray diffractometer: RINT2500 manufactured by Rigaku Corporation
Goniometer: RINT2000 vertical type goniometer, manufactured by Rigaku Corporation
Sampling width: 0.01°
Step time: 1 sec.
Divergence slit: 2°
Scattering slit: 2°
Light-receiving slit: 0.6 mm
Tube: Cu
Tube voltage: 55 KV
Tube current: 280 mA

(Measurement of average particle diameter)

To the pigment powder obtained, polyvinyl pyrrolidone (manufactured by Wako Pure Chemical Industries, Ltd.) was added and diluted with ethyl lactate (manufactured by Wako Pure Chemical Industries, Ltd.), and the resultant was dispersed by using an ultrasonic homogenizer (product name: Model 450, manufactured by BRANSON). The resultant was thinly spin-coated on a sample board and the particle shape was observed under a scanning type electron microscope. From the observed image, four hundred particles with distinguished primary particle shape were selected and their particle size was measured. Further, number average particle diameter was calculated.

Table 1

| | α type crystallinity ratio | (-151) crystallite size | Particle diameter (nm) |
|---|---|---|---|
| Example II-1 | 69% | 8.0 nm | 15.2 nm |
| Example II-2 | 66% | 8.2 nm | 18.1 nm |
| Example II-3 | 73% | 8.6 nm | 16.6 nm |
| Example II-4 | 81% | 9.0 nm | 17.8 nm |
| Example II-5 | 77% | 8.9 nm | 18.2 nm |
| Comparative Example II-1 | 86% | 14.2 nm | 32.4 nm |
| Comparative Example II-2 | 33% | (Crystallite size diameter could not be measured.) | (Particle diameter could not be measured.) |
| Comparative Example II-3 | 77% | 11.2 nm | 24.2 nm |

(Example II-6)

By using the organic pigment powder 1 obtained from the Example II-1, the organic pigment dispersion composition 1 with the following composition was prepared.

| | |
|---|---|
| Organic pigment powder A2 | 10.0 parts |
| Dispersion resin 1 | 7.88 parts |
| Pigment derivative 1 | 0.98 part |
| SS-1 | 0.97 part |
| Propylene glycol monomethyl ether acetate | 79.75 parts |

The structure of the pigment derivative 1 is shown below.

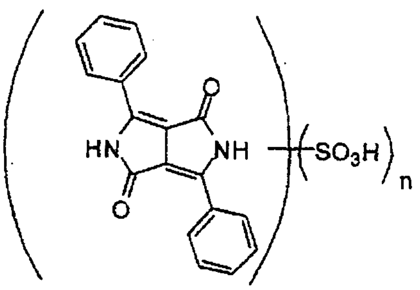

Pigment derivative 1

n = 1 or 2

n = 1 or 2

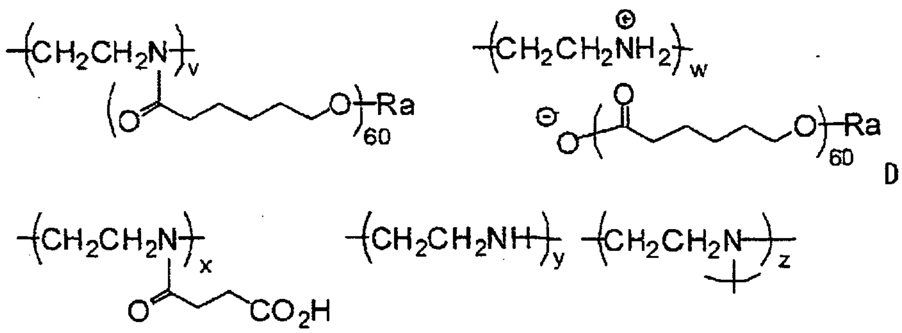

Dispersion resin 1

Main chain Mn: 600, graft amount 9.3 mol% (vs. every amine) Acid value 10 mg KOH/g, Mw: 10,000
Ra: $-CO-nC_7H_{15}$ or a hydrogen atom
v: 40, w: 5, x: 10,y+z:45

The organic pigment dispersion composition having the composition described above was dispersed by a motor mill M-50 (manufactured by Aiger, Japan) for 1 hour at 2,000 rpm by using zirconia beads having diameter of 0.5 mm and for 4 hours at 2,000 rpm by using zirconia beads having diameter of 0.05 mm. As a result, an organic pigment dispersion composition 11 was obtained.

Each of organic pigment dispersion compositions 12 to 15 and C11 to C13 were prepared in the same manner as the above, except that the organic pigment powders 1 to 5 and C1 to C3, which were obtained in the Examples II-2 to 5 and the Comparative examples II-1 to 3, were used instead of the organic pigment powder 1.

Each of the organic pigment dispersion compositions obtained was subjected to contrast measurement, contrast over time measurement, and heat resistance test, according to the following methods. The obtained results are shown in the Table 2. As it apparent from the Table 2, it was confirmed that the organic pigment powders produced in the Examples could provide a very favorable organic pigment dispersion compositions, unlike the organic pigment powders produced in the Comparative examples.

(Measurement of Contrast)

Each of the thus-obtained organic pigment dispersion composition samples was applied to a glass substrate to give a layer thickness of 2 μm to thereby produce respective samples. As a backlight unit, a three-wavelength cold-cathode-tube light source (FWL18EX-N, trade name, manufactured by Toshiba Lighting & Technology Corporation) provided with a diffuser plate was used. Each of the samples was placed between two sheets of polarizing plates (HLC2-2518, trade name, the polarizing plates, manufactured by Sanritz Corporation), and then amounts of transmitted

light at the time when polarization axes of two polarizing plates were parallel and the time when the polarization axes were perpendicular were measured. The ratio of these transmitted light amounts was defined as a contrast (see Color Filter for 512 color display 10.4"-size TFT-LCD, co-authored by Ueki, Koseki, Fukunaga, and Yamanaka, The seventh Color Optics Conference (1990), etc.). The above-described two sheets of polarizing plates, sample, and color luminance meter were placed at the following positions: A polarizing plate was disposed at the distance of 13 mm from the backlight. A cylinder of 11 mm in diameter and 20 mm in length was disposed at the distance of 40 mm to 60 mm from the backlight. The light transmitted through the cylinder was irradiated to a color filter disposed at the distance of 65 mm from the backlight. The transmitted light was passed through another polarizing plate disposed at the distance of 100 mm from the backlight and measured with a color luminance meter disposed at the distance of 400 mm from the backlight. The measuring angle in the color luminance meter was set to 2°. The light amount of the backlight was set so that its brightness (luminance) would be 1280 cd/$m^2$, when the two sheets of polarizing plates were arranged in a position of parallel nicol and no color filter was disposed.

(Evaluation of contrast over time)

Thirty days after the dispersion, each of the above pigment dispersion compositions was coated on a glass substrate in the same manner as above. Then, the contrast was measured in the same manner as above to obtain contrast over time.

The results obtained are shown in the following table.

(Heat resistance test)

Each of the organic pigment dispersion compositions obtained from the above was coated to thickness of 2 μm on a glass plate to prepare a sample, which was then post-baked for 90 minutes at 230°C. The coated sample produced as above was subjected to contrast evaluation according to the method described above.

The ratio of the contrast value obtained above compared to the value before post-baking was calculated, and then graded as follows.

3: Contrast ratio of 0.8 or more and 1 or less
2: Contrast ratio of 0.6 or more and less than 0.8
1: Contrast ratio of less than 0.6

Table 2

| Organic pigment dispersion composition | Contrast | Contrast over time | Heat resistance |
|---|---|---|---|
| 11 | 31864 | 30256 | 3 |
| 12 | 28532 | 25432 | 2 |
| 13 | 26744 | 26002 | 3 |
| 14 | 27019 | 27120 | 3 |
| 15 | 29231 | 28866 | 3 |
| C11 | 9214 | 9196 | 3 |
| C12 | 32011 | 19326 | 1 |
| C13 | 13548 | 13617 | 3 |

It is found from the above results that, compared to the Comparative examples, the p-dichlorodiketopyrrolopyrrole pigment (Examples) of the present invention can provide a color filter having extremely high contrast, which can be maintained for a long period of time, and high heat resistance.

This non-provisional application claims priority on Patent Application No. 2009-197325 filed in Japan on August 27, 2009, Patent Application No. 2010-054742 filed in Japan on March 11, 2010, and Patent Application No. 2009-197324 filed in Japan on August 27,2009, each of which is entirely herein incorporated by reference.

## Claims

**1.** A coloring material dispersion, comprising:

a particle growth inhibitor; and
coloring material particulates of a dichlorodiketopyrrolopyrrole pigment, said coloring material particulates having an α type crystallinity degree from 0.65 to 0.90, a crystallite size from 6.0 to 13.0 nm in a direction of a (-151) crystal face, and a crystallite size of 5.0 to 23.0 nm in a direction of a (111) crystal face.

**2.** The coloring material dispersion according to Claim 1, produced through the following steps [i] and [ii]:

[i] bringing a dispersion solution containing a dichlorodiketopyrrolopyrrole pigment dissolved in a good solvent into contact with a poor solvent, which hardly dissolves the pigment but is compatible with the good solvent, to produce particulates of the dichlorodiketopyrrolopyrrole pigment; and
[ii] bringing the particulates of the dichlorodiketopyrrolopyrrole pigment obtained by the step [i] into contact with an organic solvent for controlling crystal form under the presence of the particle growth inhibitor to increase α type crystallinity degree of the dichlorodiketopyrrolopyrrole pigment.

**3.** The coloring material dispersion according to Claim 1, wherein the particle growth inhibitor is represented by formula (1):

$$P\text{-}[X=(Y)k]n \qquad \text{Formula (1)}$$

wherein P is a residue of an organic dye compound which may have a substituent; X represents a single bond or a divalent linking group; Y represents $-NR_2R_3$, a sulfo group, or a carboxyl group, and $R_2$ and $R_3$ each independently represents a hydrogen atom, an alkyl group, an alkenyl group, or a phenyl group which may have a substituent, or a heterocycle which is formed by $R_2$ and $R_3$; k represents an integer of 1 or 2; and n represents an integer of 1 to 4.

**4.** The coloring material dispersion according to any one of the Claims 1 to 3, wherein P in formula (1) is a diketopyrrolopyrrole pigment compound residue or a quinacridone pigment compound residue.

**5.** The coloring material dispersion according to Claim 4, wherein the crystal growth inhibitor is represented by formula (2):

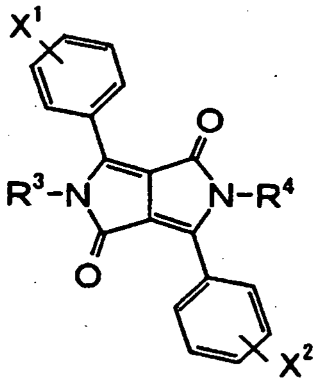

Formula (2)

wherein $X^1$ and $X^2$ each independently represents a hydrogen atom, a halogen atom, a substituted or unsubstituted alkyl group, or a substituted or unsubstituted aromatic group; $R^3$ and $R^4$ each independently represents a hydrogen atom, or a substituted or unsubstituted alkyl group, and at least one of $R^3$ and $R^4$ represents a substituted or unsubstituted alkyl group.

**6.** A method of producing the coloring material dispersion containing coloring material particulates of a dichlorodiketopyrrolopyrrole pigment according to any one of Claims 1 to 5, produced through the following steps [i] and [ii]:

[i] bringing a pigment solution containing a dichlorodiketopyrrolopyrrole pigment dissolved in a good solvent into contact with a poor solvent, which hardly dissolves the pigment but is compatible with the good solvent, to produce particulates of the dichlorodiketopyrrolopyrrole pigment; and
[ii] bringing the particulates of the dichlorodiketopyrrolopyrrole pigment obtained by the step [i] into contact with an organic solvent for controlling crystal form under the presence of the particle growth inhibitor to increase α type crystallinity degree of the dichlorodiketopyrrolopyrrole pigment.

7. The method of producing the coloring material dispersion according to Claim 6, wherein the pigment solution containing a dichlorodiketopyrrolopyrrole pigment is obtained by dissolving the dichlorodiketopyrrolopyrrole pigment in an organic solvent under the presence of a base.

8. The method of producing the coloring material dispersion according to Claim 6 or 7, wherein the step [i] is conducted under the presence of the particle growth inhibitor.

9. The method of producing the coloring material dispersion according to any one of Claims 6 to 8, wherein the particulates of the dichlorodiketopyrrole pigment produced by the step [i] are substantially in β type crystal transformation form.

10. The method of producing the coloring material dispersion according to any one of Claims 6 to 9, wherein the step [ii] is conducted under the absence of a grinding agent.

11. The method of producing the coloring material dispersion according to any one of Claims 6 to 10, wherein the step [ii] is conducted without drying the particles of the dichlorodiketopyrrolopyrrole pigment produced by the step [i].

12. A dichlorodiketopyrrolopyrrole pigment, having a crystallite size of 9 nm or less in a perpendicular direction of a (-151) crystal face caluclated by X ray diffraction pattern of a dichlorodiketopyrrolopyrrole pigment and an α type crystallinity degree of 60% or more.

13. The dichlorodiketopyrrolopyrrole pigment according to Claim 12, which is a nanometer size particulate, the particulate having a structure in which at least one of a dispersing agent and a pigment derivative is buried therein.

14. The dichlorodiketopyrrolopyrrole pigment according to Claim 12 or 13, wherein the pigment is a particulate obtained by: mixing a solution containing a p-dichlorodiketopyrrolopyrrole pigment dissolved in a good solvent with a poor solvent for the pigment having compatibility with the good solvent; and being produced in a mixture solution.

15. The dichlorodiketopyrrolopyrrole pigment according to Claim 14, in which the pigment is formed into a particulate including a dispersing agent buried therein, the particulate is formed by: mixing the good solvent and poor solvent after the dispersing agent is contained in the good solvent and/or poor solvent; or separately preparing a solution in which the dispersing agent is contained and mixing the resultant solution with the above two liquids, and at least 10% by mass of the dispersing agent contained in the solvents is buried into the particulates.

16. A coloring composition, having the dichlorodiketopyrrolopyrrole pigment according to any one of Claims 12 to 15.

17. A color filter produced by using the coloring composition according to Claim 16.

## Patentansprüche

1. Färbematerialdispersion, umfassend:

   einen Teilchenwachstumsinhibitor; und
   Färbematerialteilchen aus einem Dichlordiketopyrroloyrrol-Pigment, wobei die Färbematerialteilchen einen Kristallinitätsgrad vom α-Typ von 0,65 bis 0,90, eine Kristallitgröße von 6,0 bis 13,0 nm in einer Richtung einer (-151) Kristallfläche und eine Kristallitgröße von 5,0 bis 23,0 nm in einer Richtung einer (111) Kristallfläche haben.

2. Färbematerialdispersion nach Anspruch 1, erzeugt durch folgende Schritte [i] und [ii]:

   [i] Kontaktieren einer Dispersionslösung, umfassend ein Dichlordiketopyrrolopyrrol-Pigment, aufgelöst in einem guten Lösungsmittel, mit einem schlechten Lösungsmittel, das kaum das Pigment löst, aber mit dem guten Lösungsmittel kompatibel ist, unter Erzeugung von Teilchen aus dem Dichlordiketopyrrolopyrrol-Pigment; und
   [ii] Kontaktieren der Teilchen aus dem Dichlorodiketopyrrolopyrrol-Pigment, erhalten im Schritt [i], mit einem organischen Lösungsmittel zum Steuern der Kristallform in der Gegenwart eines Teilchenwachstumsinhibitors, zum Erhöhen eines Kristallinitätsgrades vom α-Typ des Dichlorodiketopyrrolopyrrol-Pigmentes.

3. Färbematerialdispersion nach Anspruch 1, worin der Teilchenwachstumsinhibitor dargestellt ist durch die Formel (1):

P- [X- (Y) k] n Formel (1)

worin P ein Rest einer organischen Farbstoffverbindung ist, der einen Substituenten haben kann; X eine Einfachbindung oder bivalente Bindegruppe ist; Y $-NR_2R_3$, Sulfogruppe oder Carboxylgruppe ist und $R_2$ und $R_3$ jeweils unabhängig ein Wasserstoffatom, eine Alkylgruppe, Alkenylgruppe oder Phenylgruppe, die einen Substituenten haben kann, oder ein Heterozyklus sind, gebildet durch $R_2$ und $R_3$; k eine ganze Zahl von 1 oder 2 ist und n eine ganze Zahl von 1 bis 4 ist.

**4.** Färbematerialdispersion nach einem der Ansprüche 1 bis 3, worin P in der Formel (1) ein Verbindungsrest eines Diketopyrrolopyrrol-Pigmentes oder ein Verbindungsrest eines Chinacridon-Pigmentes ist.

**5.** Färbematerialdispersion nach Anspruch 4, worin der Kristallwachstumsinhibitor dargestellt ist durch die Formel (2):

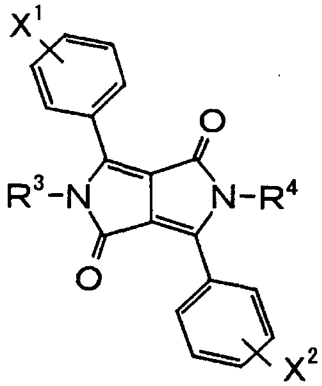

Formel (2)

worin $X^1$ und $X^2$ jeweils unabhängig ein Wasserstoffatom, Halogenatom, substituierte oder unsubstituierte Alkylgruppe oder substituierte oder unsubstituierte aromatische Gruppe sind; $R^3$ und $R^4$ jeweils unabhängig ein Wasserstoffatom oder eine substituierte oder unsubstituierte Alkylgruppe sind und zumindest eines von $R^3$ und $R^4$ eine substituierte oder unsubstituierte Alkylgruppe ist.

**6.** Verfahren zur Erzeugung der Färbematerialdispersion, umfassend Färbematerialteilchen aus einem Dichlorodiketopyrrolopyrrol-Pigment nach einem der Ansprüche 1 bis 5, erzeugt durch folgende Schritte [i] und [ii]:

[i] Kontaktieren einer Pigmentlösung, umfassend ein Dichlorodiketopyrrolopyrrol-Pigment, aufgelöst in einem guten Lösungsmittel, mit einem schlechten Lösungsmittel, das kaum das Pigment auflöst, aber mit dem guten Lösungsmittel kompatibel ist, unter Erzeugung von Teilchen aus dem Dichlorodiketopyrrolopyrrol-Pigment; und
[ii] Kontaktieren der Teilchen aus dem Dichlorodiketopyrrolopyrrol-Pigment, erhalten im Schritt [i], mit einem organischen Lösungsmittel zum Steuern der Kristallform in der Gegenwart des Teilchenwachstumsinhibitors zum Erhöhen eines Kristallinitätsgrads vom $\alpha$-Typ des Dichlorodiketopyrrolopyrrol-Pigmentes.

**7.** Verfahren zur Erzeugung der Färbematerialdispersion nach Anspruch 6, worin die Pigmentlösung, umfassend ein Dichlorodiketopyrrolopyrrol-Pigment, erhalten wird durch Auflösen des Dichlorodiketopyrrolopyrrol-Pigmentes in einem organischen Lösungsmittel in der Gegenwart einer Base.

**8.** Verfahren zur Erzeugung der Färbematerialdispersion nach Anspruch 6 oder 7, worin der Schritt [i] in der Gegenwart des Teilchenwachstumsinhibitors durchgeführt wird.

**9.** Verfahren zur Erzeugung der Färbematerialdispersion nach einem der Ansprüche 6 bis 8, worin die Teilchen des Dichlorodiketopyrrol-Pigmentes, erzeugt durch den Schritt [i], im Wesentlichen in Kristalltransformationsform vom $\beta$-Typ sind.

**10.** Verfahren zur Erzeugung der Färbematerialdispersion nach einem der Ansprüche 6 bis 9, worin der Schritt [ii] in der Abwesenheit eines Mahlmittels durchgeführt wird.

**11.** Verfahren zur Erzeugung der Färbematerialdispersion nach einem der Ansprüche 6 bis 10, worin der Schritt [ii]

ohne Trocknen der Teilchen des Dichlorodiketopyrrolopyrrol-Pigmentes, erzeugt durch den Schritt [i], durchgeführt wird.

**12.** Dichlorodiketopyrrolopyrrol-Pigment mit einer Kristallitgröße von 9 nm oder weniger in einer senkrechten Richtung einer (-151) Kristallfläche, berechnet durch Röntgenbeugungsmuster eines Dichlorodiketopyrrolopyrrol-Pigmentes, und mit einem Kristallinitätsgrad vom $\alpha$-Typ von 60% oder mehr.

**13.** Dichlorodiketopyrrolopyrrol-Pigment nach Anspruch 12, das ein Teilchen mit Nanometergröße ist, wobei das Teilchen eine Struktur hat, worin zumindest eines von einem Dispersionsmittel und einem Pigmentderivat darin verborgen ist.

**14.** Dichlorodiketopyrrolopyrrol-Pigment nach Anspruch 12 oder 13, worin das Pigment ein Teilchen ist, erhalten durch: Mischen einer Lösung, umfassend ein p-Dichlorodiketopyrrolopyrrol-Pigment, aufgelöst in einem guten Lösungsmittel, mit einem schlechten Lösungsmittel für das Pigment, mit einer Kompatibilität mit dem guten Lösungsmittel; und erzeugt in einer Mischungslösung.

**15.** Dichlorodiketopyrrolopyrrol-Pigment nach Anspruch 14, worin das Pigment in ein Teilchen geformt wird, umfassend ein darin verborgenes Dispersionsmittel, wobei das Teilchen gebildet wird durch: Mischen des guten Lösungsmittels und schlechten Lösungsmittels, nachdem das Dispergiermittel in dem guten Lösungsmittel und/oder schlechten Lösungsmittel enthalten ist; oder getrenntes Herstellen einer Lösung, worin das Dispersionsmittel enthalten ist, und Mischen der resultierenden Lösung mit den obigen beiden Flüssigkeiten, und zumindest 10 Massen-% des Dispergiermittels, das in den Lösungsmitteln enthalten ist, in den Teilchen verborgen sind.

**16.** Färbezusammensetzung mit dem Dichlorodiketopyrrolopyrrol-Pigment nach einem der Ansprüche 12 bis 15.

**17.** Farbfilter, erzeugt durch Verwendung der Färbezusammensetzung nach Anspruch 16.

**Revendications**

**1.** Dispersion de matière colorante, comprenant :

un inhibiteur de croissance de particules ; et
des particules de matière colorante d'un pigment dichlorodicétopyrrolopyrrole, lesdites particules de matière colorante ayant un degré de cristallinité de type $\alpha$ de 0,65 à 0,90, une taille de cristallite de 6,0 à 13,0 nm dans une direction d'une face cristalline (-151), et une taille de cristallite de 5,0 à 23,0 nm dans une direction d'une face cristalline (111).

**2.** Dispersion de matière colorante selon la revendication 1, produite par les étapes [i] et [ii] suivantes :

[i] mettre une solution de dispersion contenant un pigment dichlorodicétopyrrolopyrrole dissous dans un bon solvant en contact avec un solvant médiocre, qui dissout difficilement le pigment mais est compatible avec le bon solvant, pour produire des particules du pigment dichlorodicétopyrrolopyrrole ; et
[ii] mettre les particules du pigment dichlorodicétopyrrolopyrrole obtenues par l'étape [i] en contact avec un solvant organique pour contrôler la forme cristalline, en présence de l'inhibiteur de croissance de particules afin d'augmenter un degré de cristallinité de type $\alpha$ du pigment dichlorodicétopyrrolopyrrole.

**3.** Dispersion de matière colorante selon la revendication 1, dans laquelle l'inhibiteur de croissance de particules est représenté par la formule (1) :

P-[X-(Y)k]n Formule (1)

dans laquelle P est un résidu d'un composé colorant organique qui peut avoir un substituant ; X représente une simple liaison ou un groupe de liaison divalent ; Y représente $-NR_2R_3$, un groupe sulfo, ou un groupe carboxyle, et $R_2$ et $R_3$ représentent chacun indépendamment un atome d'hydrogène, un groupe alkyle, un groupe alcényle, ou un groupe phényle qui peut avoir un substituant, ou un hétérocycle qui est formé par $R_2$ et $R_3$ ; k représente un nombre entier de 1 ou 2 ; et n représente un nombre entier de 1 à 4.

4. Dispersion de matière colorante selon l'une quelconque des revendications 1 à 3, dans laquelle P dans la formule (1) est un résidu de composé de pigment dicétopyrrolopyrrole ou un résidu de composé de pigment quinacridone.

5. Dispersion de matière colorante selon la revendication 4, dans laquelle l'inhibiteur de croissance cristalline est représenté par la formule (2) :

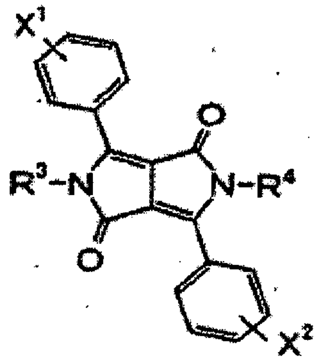

Formule (2)

dans laquelle $x^1$ et $x^2$ représentent chacun indépendamment un atome d'hydrogène, un atome d'halogène, un groupe alkyle substitué ou non substitué, ou un groupe aromatique substitué ou non substitué ; $R^3$ et $R^4$ représentent chacun indépendamment un atome d'hydrogène, ou un groupe alkyle substitué ou non substitué, et au moins l'un de $R^3$ et $R^4$ représente un groupe alkyle substitué ou non substitué.

6. Procédé de production de la dispersion de matière colorant contenant des particules de matière colorante d'un pigment dichlorodicétopyrrolopyrrole selon l'une quelconque des revendications 1 à 5, produite par les étapes [i] et [ii] suivantes :

[i] mettre une solution de pigment contenant un pigment dichlorodicétopyrrolopyrrole dissous dans un bon solvant en contact avec un solvant médiocre, qui dissout difficilement le pigment mais est compatible avec le bon solvant, pour produire des particules du pigment dichlorodicétopyrrolopyrrole ; et
[ii] mettre les particules du pigment dichlorodicétopyrrolopyrrole obtenues par l'étape [i] en contact avec un solvant organique pour contrôler la forme cristalline, en présence de l'inhibiteur de croissance de particules afin d'augmenter un degré de cristallinité de type $\alpha$ du pigment dichlorodicétopyrrolopyrrole.

7. Procédé de production de la dispersion de matière colorante selon la revendication 6, dans lequel la solution de pigment contenant un pigment dichlorodicétopyrrolopyrrole est obtenue par dissolution du pigment dichlorodicétopyrrolopyrrole dans un solvant organique en présence d'une base.

8. Procédé de production de la dispersion de matière colorante selon la revendication 6 ou 7, dans lequel l'étape [i] est menée en présence de l'inhibiteur de croissance de particules.

9. Procédé de production de la dispersion de matière colorante selon l'une quelconque des revendications 6 à 8, dans lequel les particules du pigment dichlorodicétopyrrole produites par l'étape [i] sont sensiblement sous une forme de transformation cristalline de type $\beta$.

10. Procédé de production de la dispersion de matière colorante selon l'une quelconque des revendications 6 à 9, dans lequel l'étape [ii] est menée en l'absence d'agent de broyage.

11. Procédé de production de la dispersion de matière colorante selon l'une quelconque des revendications 6 à 10, dans lequel l'étape [ii] est menée sans sécher les particules du pigment dichlorodicétopyrrolopyrrole produites par l'étape [i].

12. Pigment dichlorodicétopyrrolopyrrole, ayant une taille de cristallite de 9 nm ou moins dans une direction perpendiculaire d'une face cristalline (-151) calculée par un diagramme de diffraction des rayons X d'un pigment dichlorodicétopyrrolopyrrole et un degré de cristallinité de type $\alpha$ de 60 % ou plus.

**13.** Pigment dichlorodicétopyrrolopyrrole selon la revendication 12, qui est une taille particulaire nanométrique, la particule ayant une structure dans laquelle au moins l'un parmi un agent dispersant et un dérivé de pigment est enfoui dans celle-ci.

**14.** Pigment dichlorodicétopyrrolopyrrole selon la revendication 12 ou 13, dans lequel le pigment est une particule obtenue par : mélange d'une solution contenant un pigment p-dichlorodicétopyrrolopyrrole dissous dans un bon solvant avec un solvant médiocre pour le pigment présentant une compatibilité avec le bon solvant ; et étant produite dans une solution de mélange.

**15.** Pigment dichlorodicétopyrrolopyrrole selon la revendication 14, dans lequel le pigment est formé en une particule comprenant un agent dispersant enfoui dans celle-ci, la particule est formée par : le mélange du bon solvant et du solvant médiocre après que l'agent dispersant soit contenu dans le bon solvant et/ou le solvant médiocre ; ou la préparation de manière séparée d'une solution dans laquelle l'agent dispersant est contenu et le mélange de la solution résultante avec les deux liquides ci-dessus, et au moins 10 % en masse de l'agent dispersant contenu dans les solvants est enfoui dans les particules.

**16.** Composition colorante, ayant le pigment dichlorodicétopyrrolopyrrole selon l'une quelconque des revendications 12 à 15.

**17.** Filtre de couleur produit en utilisant la composition colorante selon la revendication 16.

*Fig. 1*

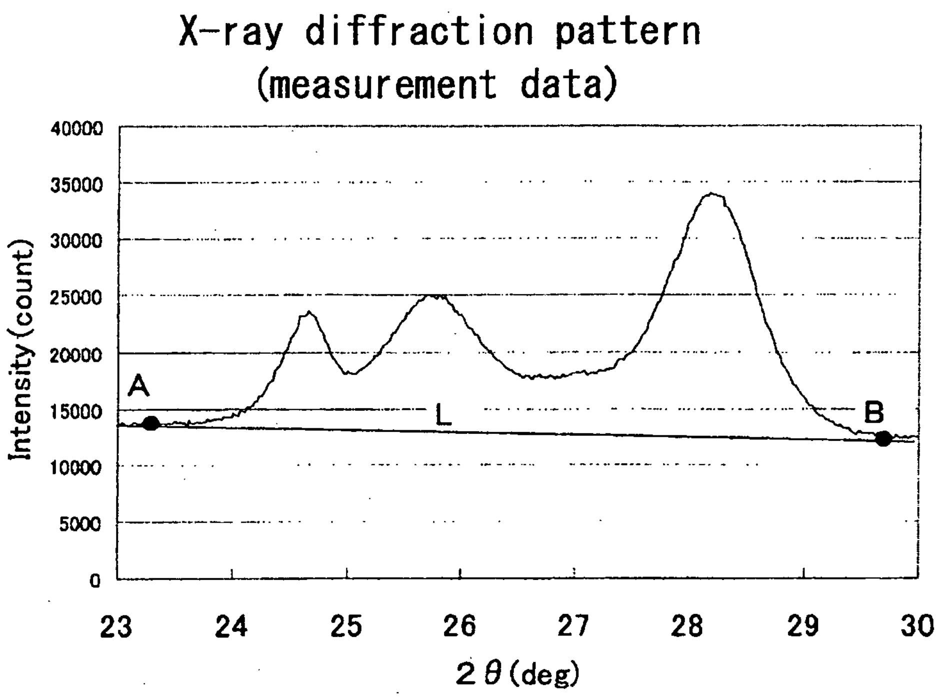
X-ray diffraction pattern
(measurement data)
Intensity (count)
40000
35000
30000
25000
20000
15000
10000
5000
0
A
L
B
23
24
25
26
27
28
29
30
2θ (deg)

*Fig. 2*

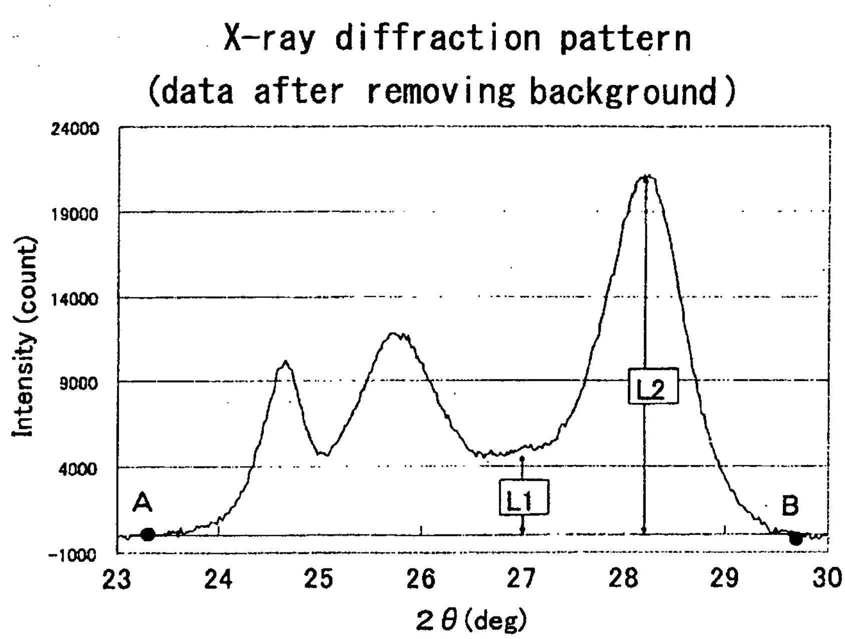
X-ray diffraction pattern
(data after removing background)
Intensity (count)
24000
19000
14000
9000
4000
-1000
A
L1
L2
B
23
24
25
26
27
28
29
30
2θ (deg)

*Fig. 3*

X-ray diffraction pattern
(measurement data of β type crystal transformation form)

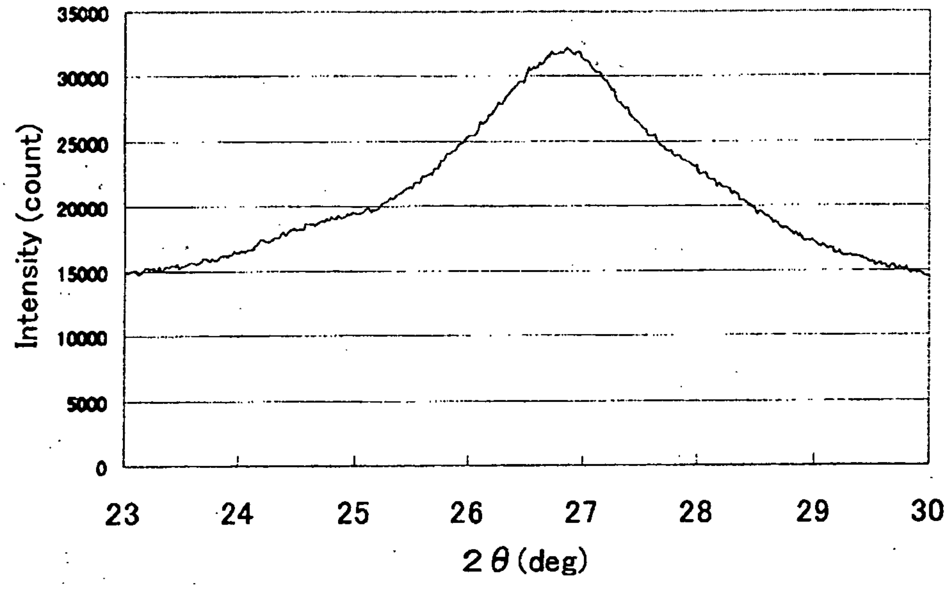


*Fig. 4*

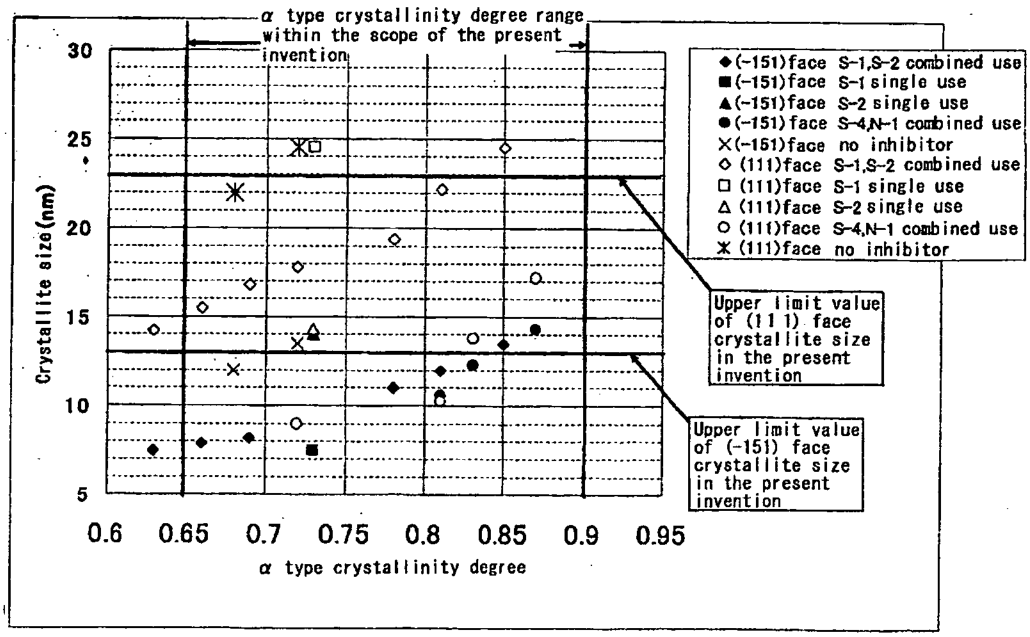

*Fig. 5*

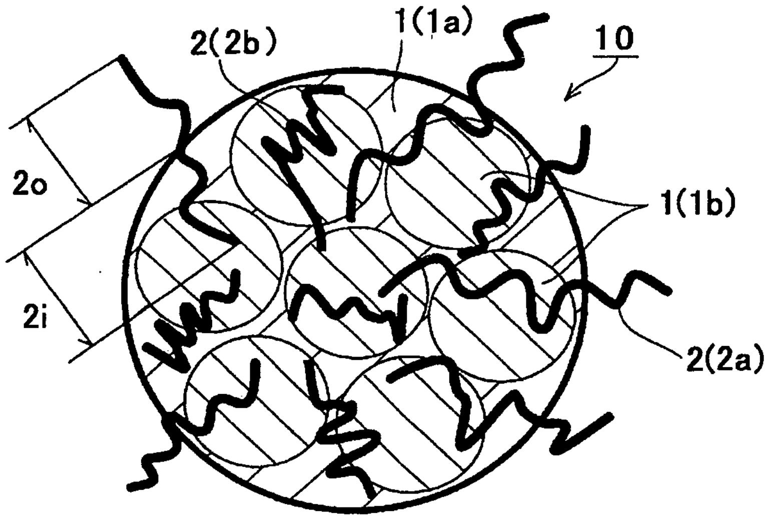
2(2b)
1(1a)
10
2o
2i
1(1b)
2(2a)

*Fig. 6*

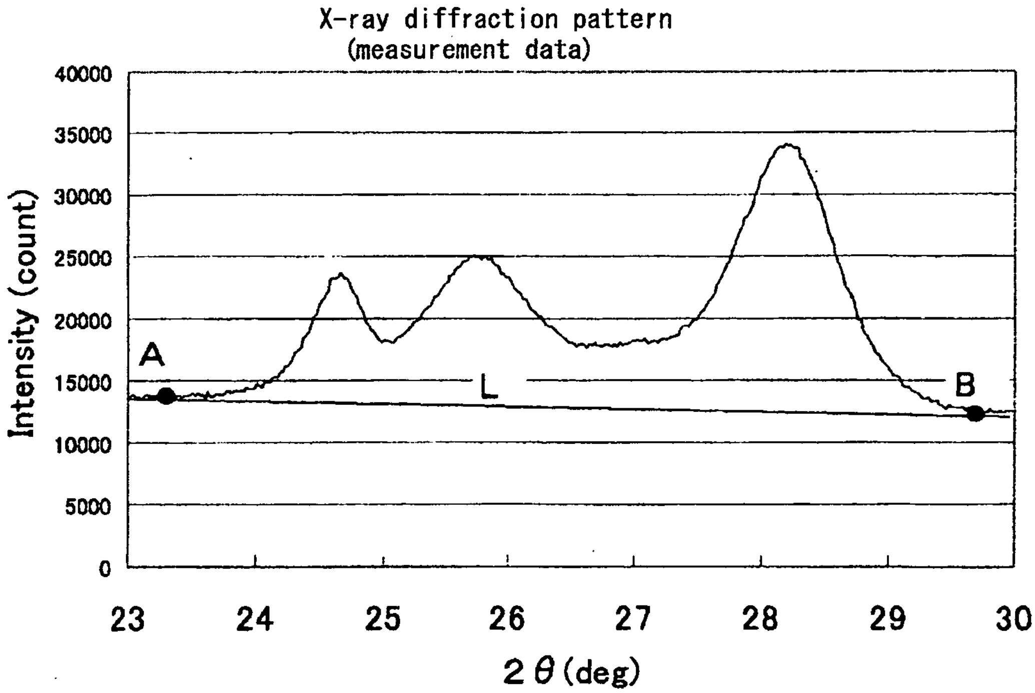
X-ray diffraction pattern
(measurement data)
Intensity (count)
40000
35000
30000
25000
20000
15000
10000
5000
0
A
L
B
23
24
25
26
27
28
29
30
2 θ (deg)

*Fig. 7*

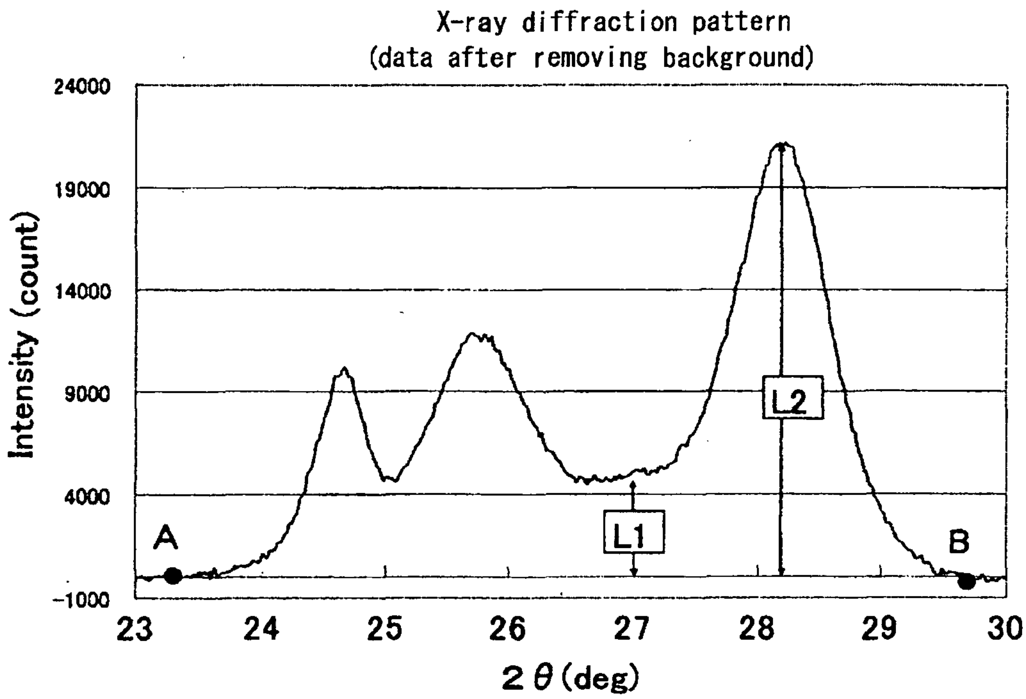
X-ray diffraction pattern
(data after removing background)
24000
19000
14000
9000
4000
-1000
Intensity (count)
A
B
L1
L2
23
24
25
26
27
28
29
30
2θ(deg)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001264528 A
- JP 2008024873 A
- JP 4144655 B
- JP 2002265840 A
- JP 2008139865 A
- JP 58210084 A
- JP 8048908 A
- JP 2007009096 A
- JP 7331182 A
- JP 56118462 A
- JP 63264674 A
- JP 1217077 A
- JP 3009961 A
- JP 3026767 A
- JP 3153780 A
- JP 3045662 A
- JP 4285669 A
- JP 6145546 A
- JP 6212088 A
- JP 6240158 A
- JP 10030063 A
- JP 10195326 A
- JP 10062986 A
- JP 48041708 B
- JP 50006034 B
- JP 51037193 A
- JP 48064183 A
- JP 49043191 B
- JP 52030490 B
- JP 11133600 A
- US 2367660 A
- US 2448828 A
- US 2722512 A
- US 3046127 A
- US 2951758 A
- US 3549367 A
- JP 51048516 B
- US 4239850 A
- US 4212976 A
- JP 59044615 A
- JP 54034327 B
- JP 58012577 B
- JP 54025957 B
- JP 59053836 A
- JP 59071048 A
- US 4139391 A
- JP 2003337424 A
- JP 2005017716 A
- JP 2005361447 A
- JP 2005017521 A
- JP 5072724 A
- JP 9323420 A
- EP 277703 A
- EP 278590 A
- JP 2005003861 A
- JP 2004240039 A
- JP 2006017980 A
- JP 2006010875 A
- JP 2004089851 A
- JP 2004 A
- JP 17043 A
- JP 2003170098 A
- JP 2003164787 A
- JP 2003010767 A
- JP 2002079163 A
- JP 2001310147 A
- JP 2009197325 A
- JP 2010054742 A
- JP 2009197324 A


### Non-patent literature cited in the description


- **UEKI ; KOSEKI ; FUKUNAGA ; YAMANAKA.** Color Filter for 512 color display 10.4''-size TFT-LCD. *The seventh Color Optics Conference,* 1990